# EUROPEAN PATENT APPLICATION

(11) **EP 1 585 020 A2**
(43) Date of publication of application: **12.10.2005**
(21) Application number: 05102572.4
(22) Date of filing: 01.04.2005
(51) Int. Cl.: G06F 3/033

(54) **Apparatus and method for changing a display output**

(30) Priority: 05.04.2004 US 820233; 01.10.2004 US 956836
(71) Applicant: BOSE CORPORATION, Massachusetts 01701-9168 (US)
(72) Inventor: Gelfond, Neil, Framingham, MA 01701-9168 (US); Hotary, James T., Framingham, MA 01701-9168 (US); Santoro, Peter C., Framingham, MA 01701-9168 (US); Killough, Joseph A., Framingham, MA 01701-9168 (US); Olcott, Andrew, Framingham, MA 01701-9168 (US); Zamir, Lee, Framingham, MA 01701-9168 (US)
(74) Representative: Brunner, Michael John

(57) **Abstract**

The invention is directed to an improvement in mechanisms and techniques for accepting user input. An apparatus for accepting a user input is described comprising a display, detector and controller. The display is configured to show an initial output. The detector is positioned in a location with respect to the display such that the detector detects placement of a trigger, such as a user's hand, proximate to the display. Various methods of detection such as infra-red detection, ultrasonic detection, capacitive detection, etc. may alternatively be used. The controller is configured to, upon placement of the trigger in a relative position with respect to the detector, cause the display to display an alternative output. After a pre-determined period of time, the display automatically reverts to the initial output or similar reduced-content output.

## Description

This invention relates to an apparatus and a method for changing the display function of an entertainment system.

### SUMMARY OF THE INVENTION

Embodiments of the invention are directed to a system and method for accepting user input provided as a force exerted on a selected segment of a pressure member (e.g. a surface area of plastic, metal, glass or other material to which the user can apply a force) and/or provided by the operation of two controls (e.g. knob s, buttons, shafts, etc.). In particular, in one embodiment, the pressure member is a sheet of plastic that is coupled and/or mounted on four switches (e.g. a device capable of detecting a user input such as a force or "push"; other switches include capacitive, resistive, piezoelectric, mechanical, etc.) located around the periphery (e.g at the corners of a rectangular shaped pressure member). In one embodiment, the pressure member is an optically transparent sheet of material (e.g. plastic, glass, etc) disposed in front of a display such that the display is visible through the pressure member (the display will be described in more detail later). The display shows options (e.g. input options, menu options) that are spatially associated with sections of the pressure member. When the user exerts a force within a selected section of the pressure member that is close to where the pressure member is mounted and/or coupled to one of the switches, the pressure member transmits a resulting force on the nearby sw itch, thus actuating the switch.

A section of the pressure member is defined here as an area of the pressure member associated with a switch, such that a force applied by a user within the area of the section is capable of actuating the associated switch. By selecting an appropriate section (e.g. the closest of multiple locations or portions of the pressure member to a particular switch) of the pressure member to apply the force to, the user effectively chooses which switch to activate. The switch actuation in turn changes the system state (e.g. parameters, settings, operations performed, functions, data stored in memory locations, etc.), either directly or through the action of a control circuit coupled to the various switches. In one embodiment, the system is a media player, and in particular is a media player designed for use within a vehicle. Media players may alternatively be media control units, receivers, radios, CD players, video players or other DVD players, or other media devices. Accordingly, the system and method provides a way to accept user input with a less costly alternative than the use of touch screens but offering more flexibility than is provided by fixed controls such as pushbuttons, switches, etc. Embodiments of the invention prov ide a large surface for users to locate by "tactile feedback" thereby increasing the likelihood of the user being able to initiate input without looking at the input device as contrasted with dedicated push -buttons, knobs and other similar controls. The pressure member is equipped with raised touch areas that allow the user to locate and discern different sections of the pressure member by feel.

Embodiments of the invention additionally provide mechanisms to give haptic feedback (e.g. the provision of ph ysical feedback which the user can sense by touch and/or feeling) to the user through manipulation of the pressure member and/or knobs. For example, in one embodiment, a knob is configured to cause a vibration, equivalent to a "click" that a user traditionally feels when the knob reaches a new selection such as a new source (e.g. a new media source), mode or media content item. The embodiments are configured to provide other types of such haptic feedback to the user, as well. These features are particula rly valuable in automotive applications which seek to reduce distraction of the driver away from driving-related activities.

In addition to the control operations that the user initiates by exerting a force close to where the pressure member is coupled to one of a plurality of switches (e.g. one of four switches located near the corners of the pressure member), embodiments of the invention are configured to detect a force exerted on the pressure member at a distance from a particular one of the plurality of switches (e.g. the user exerting a force closer to the center of the pressure member, at a location of the pressure member in -between two switch locations, etc.). In order to detect such a force, exerted a distance from a switch location, the control circuit identifies the existence of two or more essentially simultaneous switch actuations as having come from the center push or in -between pushes, etc. If the switch actuations occur simultaneously, the control circuit identifies the simultaneous actuations as a center or in-between push. If the switch actuations occur sequentially but within a pre -determined time interval, the control circuit also identifies the switch actuations as a center or in -between push.

According to one embodiment of the invention, the system is configured to treat reception of a user input in the form of the center push or the in -between push as a distinct input (i.e. a different input than the inputs resulting from the forces applied near the switch locations). In one embodiment, the system is configured to interpret the center push or in - between push as a command to operate in either "browse" or "standard" display mode, each of which provides different levels of detail. For example, in a media player operating in the browse display mode, a list of abbreviated media content item identifiers is displayed to the user. For example, in the browse display mode the media content item artist names "Alice Cooper, Alicia Keys, America, Beatles and Billy Joel, etc." may be displayed to the user. If the user deselects the browse display mode in favor of the standard display mode by initiating a center push, the media player display instead shows a more detailed listing of the selected media content item (e.g. the media content item that is currently playing) including, for example, such information as the name, artist and duration (e.g. The Beatles, Octopus' Garden, 2.45 of 3.59 min.). The browse display and standard display options operate for various modes (e.g. artist, title, album, time, etc.) that are applicable to each of the different sources that may be selectable in a media player.

In addition to the embodiments of the invention using a center or in -between push to select between browse display mode and standard display mode, pressure member forces and pushes can be designated to perform other functions, as well. For example, the pressure member might be configured to change sources when a force is applied to the pressure member (i.e. at a specific location). According to oth er embodiments, the pressure member may be configured to be a modifier upon application of forces and/or pushes (e.g. much like a "function" key or "shift" key of a computer keyboard) that causes a change in the available selection options of other controls. The pressure member forces and/or pushes can be assignable to other functions, as well.

Embodiments of the invention provide additional mechanisms and methods for accepting user input such as the manipulation of knobs. A knob can be configured to ope rate as a multiple degree of freedom control. In one example, one degree of freedom of the knob is associated with pressing of the knob; the second degree of freedom is associated with rotation of the knob. Other degrees of freedom for controls are also possible, such as for example, simultaneously pushing and rotating as an alternative form of user input.

According to one embodiment, a first knob configured to operate as a multiple degree of freedom control is used in a media player. The first knob i s configured to, as a result of the user pressing the first knob, select the next in a list of sources (e.g. uIndex™ (e.g. uIndex™ is a method and mechanism for identifying media content items that are available from multiple sources thereby providing users with a broader range of media content item options.), AM, FM, Satellite Radio, CD, Hard Drive (HD), umusic (e.g. A method and mechanism for storing and managing media content. The method and mechanism provides storage facilities for media content items and identifies the media content items by user preference and/or other parameters in order to provide more effective user access of the media content items.) and DVD, etc., . The sources may be maintained in any order.

In one example, if a currently-selected source is AM (i.e. AM radio), then by pressing the first knob, the user will cause a media player to switch to FM (i.e. FM radio). By repeatedly pressing the first knob, the user can select any source from a set of source alternatives. In connection with such a user source selection, embodiments of the invention provide visual and/or audible confirmation of the user's selection. In one embodiment of the invention, rotating the first knob performs the traditional operation of controlling media player volume or some other media function.

As the user changes source by pressing the first knob, a displayed color identifies the source selected, for example, red for AM, blue for FM, green for CD, etc. Each time the user presses the first knob to change source, the color changes. Embodiments of the invention provide mechanisms and methods for changing the color of the knob (e.g. by LED's, other light sources, etc.) itself and for changing the color of the display. Identification of the selected source by displaying a color that represents the selected source reduces the level of user attention required. In other embodiments of the invention in which clear or translucent knobs are disposed over a display, alphanumeric, text, or graphic information and/or colors may be displayed through the knob(s) that are associated with source and mode selections. Other information, such as levels and/or progress indications can be displayed near or through the knobs. In addition, an audible cue, such as a "click" played through the audio output of the media player provides notification to the user, even if the us er is not looking at the media player at the time of initiating the change. Alternatively, spoken, synthesized, etc. audio feedback may be provided, as well.

A second knob configured as a multiple degree of freedom control is also used to accept user input. By pressing the second knob, the user selects the next mode from a list of modes. Each source has a different subset of modes defined for the individual source. By pressing the second knob, the user can select from among the mode alternatives define d for any source selected by manipulating the first knob.

For example, assume that a user wants to operate the media player by using the hard drive source. First, the user selects the hard drive source by pressing on the first knob as many times as are necessary to select the hard drive source. Each time the user presses the first knob, a new source is selected. Once the hard drive source has been chosen, the user refrains from further pressing of the first knob. Next the user selects from among the four mode options available for the hard drive (i.e. artist, title, album, time) until the desired mode has been selected. For example, if the user wants to display a list of media content items stored on the hard drive in alphabetical order by title, the user presses the second knob until the title display mode has been selected. Upon the user's successful selection of the title display mode, the media player displays the available hard drive media content items in title order. If the user presses the second knob again until the artist mode has been selected, the list of media content items will now be displayed in alphabetical order by artist.

The user, having successfully selected the artist display mode as described above, is then presented with a list of available media content items in alphabetical order by artist, for example, Alice Cooper, Alicia Keys, America, Beatles, Billy Joel, etc. in which the selected/currently playing media content item is highlighted. In an alternative example, if the user selects the title display mode, the list displayed to the user is ordered by title (e.g. How Come You Don't Call Me, Lost in America, Michelle Ma Belle, Piano Man, etc.).

The second knob is configured as a multiple degree of freedom control. Specifi cally, one degree of freedom of the second knob is associated with pressing the second knob; the second degree of freedom is associated with rotation of the second knob. Therefore, in addition to selecting modes by pressing the second knob, a user can al so select media content items from a list of available media content items by rotating the second knob. Accordingly, the user selects the media content item of choice by rotating the second knob until the desired media content item has been selected. The different modes that are selectable by the second knob are capable of displaying media content items in the browse mode or standard mode, as described above.

In order to provide the second degree of freedom, knobs (e.g. either the first knob or the second knob) are configured to recognize a user rotation of the knob and convert the rotation into a control signal. A mechanism for providing the second degree of freedom of the knob comprises an optical light source (e.g. an infra -red light emitting diode), o ne or more optical receivers, the knob and the optically transparent member (e.g. the optically transparent member may or may not be the same as the pressure member according to different embodiments of the invention). The knob is mounted on the optically transparent member in such a fashion that the user can rotate the knob clock -wise or counter-clock-wise. Bands of reflective surface are attached around the circumference of the knob at regular intervals.

The optical light source is mounted to a circuit t board that is positioned at the perimeter of the optically transparent member. The optical light source is angled toward the center of the knob and is aimed through the optically transparent member, according to one embodiment of the invention, to a poi nt on the circumference of the knob. According to one embodiment of the invention the optical light source has a beam angle of plus or minus 8 degrees. The optical receivers are positioned on both sides of the emitter, for example, mounted on the circuit board.

According to one embodiment of the invention, the optically transparent member is coated (e.g. using a light restricting material) in order to block transmission of extraneous sources of light that could be misinterpreted as coming from the optic al light source, if detected by the optical receiver. Such coatings (e.g. optical coatings) can block excessive light from being transmitted either by the display or an external source that might otherwise "swamp" the optical receiver making the optical receiver and or the optical receiver-related circuitry inoperable.

In an alternative embodiment of the invention, select frequencies of light transmitted from extraneous sources in the frequency range of the light emitted by the optical light source are blocked to avoid such a misinterpretation of the light detected by the optical receiver. According to another alternative embodiment of the invention, light emitted by the optical light source is modulated in such a fashion that the modulated light received by the optical receiver can be distinguished from other light received from extraneous sources.

During the operation of the system, the optical light source emits light (e.g. infra -red light). When the knob is rotated by a user, the infra -red light from the optical light source is reflected toward the optical receiver by a band of reflective surfaces attached to the knob. Upon detecting the light reflected toward the optical receiver, the optical receiver's output which is normally at a high state (e.g. 5 volts) transitions to a low state (e.g. 0 volts). Continuation of rotation of the knob by the user results in movement of attached band of reflective surface such that at a particular position of the knob, the reflective surface no longer reflects infra-red light toward the optical receiver. At that point the optical receiver's output returns to a high state.

Upon rotation of the knob by a user, the first of the two optical receivers to detect light from the optical light source indicates the direction of motion of the knob. A circuit (e.g. a microcontroller) translates the changes in optical receivers' outputs into a control signal that is representative of rotation of the knob.

The knob and optically transparent member are constructed from plastic or other material (e.g. clear plastic, acrylic plastic, etc.). A friction sleeve (made of low -friction material such as PTFE, i.e. Teflon®, etc.) secured to the circumference of the knob permits the knob to rotate; a capture member holds the knob in positio n on the optically transparent member.

Additional embodiments of the invention provide an improved user interface for multimedia and other devices. Among other advantages of embodiments of the invention, the improved user interface simplifies the display of a multimedia device in automotive applications so that the display can be easily understood and cause less distraction to drivers than would otherwise be possible using other input and/or control mechanisms. In particular, the multimedia device, so con figured, limits the amount of information displayed to a user until such time as the user is ready to perform a control operation. At that time, the multimedia device expands the information displayed in order to provide sufficient information upon which the user can select a desired control operation.

Embodiments of the invention are particularly useful in multimedia systems and automotive applications.

In one embodiment the system for accepting user input, comprises a plurality of switches and pressure m ember. The pressure member is coupled to the plurality of switches. The pressure member has multiple sections, wherein each section of the multiple sections is associated with a switch of the plurality of switches. The pressure member is positioned in relation to the plurality of switches such that when the user exerts a force to one of the multiple sections the pressure member transmits a resulting force to a switch associated with the one of the multiple sections. This causes actuation of the switch a ssociated with the one of the multiple sections.

In another embodiment, the system includes a display. The display displays at least one input option. At least one of the multiple sections of the pressure member is spatially associated with the at least one input option displayed.

In another embodiment, at least a portion the pressure member is optically transparent. The pressure member is further positioned in front of the display so that the display is visible through the pressure member. The pluralit y of switches is further located adjacent to the display and the at least one input option displayed is viewed through the pressure member.

In another embodiment, the system operates in a motor vehicle.

In yet another embodiment the system operates as a component of a media system.

In one embodiment, one of the multiple sections has a tactile element The tactile element reduces the requirement for a visual location, by the user, of the at least one of the multiple sections of the pressure member.

In yet another embodiment, the pressure member includes four sections, wherein each section is associated with one of the four switches.

In one embodiment, the pressure member transmits a resulting force to a single switch associated with the one of the multiple sections.

In one embodiment, the pressure member transmits a resulting force to at least two switches associated with the one of the multiple sections.

In another embodiment, the switch actuation initiates a system operation.

In one embodiment, the mechani cal characteristics of the pressure member are spatially varied, in order to focus forces exerted upon a selected section of the pressure member to effect a desired switch actuation.

In yet another embodiment, the system comprises a first switch of the plu rality of switches, a second switch of the plurality of switches and a control circuit. As a result of the exertion of a force by the user to the pressure member, the pressure member transmits a first resulting force to a first switch associated with one of the multiple sections of the pressure member. The pressure member also transmits a second resulting force to a second switch associated with another of the multiple sections of the pressure member. This causes an actuation of the first switch of the p lurality of switches and an actuation of the second switch of the plurality of switches. The control circuit identifies the multiple switch activation as an inferred system state.

In another embodiment, the system comprising a fulcrum that localizes defle ction of the pressure member resulting from forces exerted by a user, in order to affect which switches are actuated by the exerted force.

In one embodiment, the system, in response to the exertion of a force on the pressure member by the user, provides confirmation of a user input to the user.

In one embodiment, the system further comprises an indicator light. The indicator light, upon the exertion of a force to the pressure member by the user, is configured to illuminate in order to provide a visual conf irmation of the switch actuation to the user.

In yet another embodiment, the system is configured to provide an audible confirmation of the switch actuation to the user.

In still another embodiment, the audible confirmation of the switch actuation is a synthetic voice.

In one embodiment, the system for accepting a user input comprises a first control configured to select a media source in response to an actuation of the first control by a user. The system also includes a second control. The second contr ol has two degrees of freedom in actuation, configured to choose a mode from a set of modes for the selected media source in response to an actuation of the first degree of freedom of the second control by the user. The actuation of the second degree of f reedom by the user of the second control is configured to identify a media content item selection. A display displays one of the media source, mode and media content item.

In one embodiment, the system for accepting user input comprises a pressure member coupled to the plurality of switches. The pressure member has multiple sections. Each section of the multiple sections is associated with a switch of the plurality of switches. The pressure member is positioned in relation to the plurality of switches such that when a force is applied by a user to one of the multiple sections, the pressure member transmits a resulting force to a switch associated with the one of the multiple sections. Accordingly the switch associated with the one of the multiple secti ons is actuated.

In one embodiment a control comprises a shaft. The shaft is mounted within a void of the pressure member and secured by a fastener.

In one embodiment, the system delays for a predetermined time before executing either a user media source selection, mode selection or media content item selection.

In one embodiment, upon the occurrence of one of a user media source selection, mode selection, or media content item selection, the system provides a sub -menu of options to the user.

In one embodiment, the display is configured to provide a visual confirmation of the media source selected. In yet another embodiment, the display displays a color cue based on a media source selected.

In one embodiment, the display provides a position indicator depict ing to the user, the relative position of a selected media content item within a browsable list of media content items. The position indicator is displayed in a radial format.

In another embodiment, the display is a touch screen. The touch screen is conf igured to process a user input.

In one embodiment, the control is configured to provide a visual confirmation of a user input. In another embodiment, the visual information is text. In yet another embodiment, the visual information is a graphic. In one embodiment, the visual information is a color change.

In yet another embodiment, at least a portion of the control is optically transparent. The control is positioned over the display and information displayed by the display is visible through the control.

In one embodiment, the audible confirmation of the media source selected is a synthetic voice.

In yet another embodiment a second control is positioned in front of the display. The second control accepts actuation of the second degree of freedom by the user, as a user input.

In one embodiment, the system for accepting user input, comprises at least one switch, a display, a pressure member, display and at least one control. The display depicts menu options including media content information and contro I options. The control options are displayed on the display near the switch. The pressure member is disposed over the display wherein at least a portion of the display is visible through the pressure member. The pressure member is further coupled to the at least one switch such that a resulting force transmitted by the pressure member in response to a user applied force causes a switch actuation. The at least one control is configured to accept one of a push and turn (e.g. first degree of freedom and second degree of freedom) in order to select one of the menu options.

In still another embodiment, at least a portion of the at least one control is optically transparent. The at least one control is positioned over the display. The information displayed by the display is visible through the at least one control.

In one embodiment, the display displays a color to provide user feedback. In another embodiment, the at least one control displays a color to provide user feedback.

In yet another embodiment, the at least one control displays a symbolic representation of a selected one of the media content source, mode or media content item.

In one embodiment a user input comprises a first control. The first control has two degrees of freedom in actuation. Actuati on of the second degree of freedom is associated with control of system volume. Actuation of the first degree of freedom is associated with selection of a media source.

The at least one control is disposed over the display and at least a portion of the control is optically transparent such that at least a portion of the display is visible through the at least one control.

In yet another embodiment a media player for use in a motor vehicle comprises a plurality of switches, a display, a pressure member and two controls. The display for displays one of the media source, mode and media content item. The pressure member is coupled to at least one of the plurality of switches. The pressure member is disposed over the display. At least a portion of the display is visible through the pressure member. The pressure member is configured to accept a force exerted by a user within a section of the pressure member. Each of the two controls is located to one side of the display and has two degrees of freedom in actuation.

In still another embodiment, the system displays a set of options on a display to prompt for a user selection. At least a portion of the display is visible through a pressure member, the pressure member being positioned in front of the display. T he system generates a switch actuation in response to a force exerted by the user on a section of the pressure member wherein the section of the pressure member corresponds to a desired option. The switch is arranged in an array of switches adjacent to th e display. Based on the switch actuation the system changes a system state.

In one embodiment, the system provides a confirmation in response to the exertion of the force to the section of the pressure member by the user.

In yet another embodiment, based on the system state, the system initiates a system operation.

In still another embodiment, the system detects a first switch actuation and a second switch actuation caused by the transmission of a resulting force by the pressure member to the first switch and the second switch. Then the system generates an inferred system state.

In still another embodiment, the inferred system state initiates a browse function.

In yet another embodiment, the system accepts actuation of the first degree of freedom of a first control to select one of the following sources: uIndex, AM, FM, satellite radio, compact disk, hard drive, uMusic, DVD, HVAC/climate, core navigation.

In one embodiment, the system accepts actuation of the first degree of freedom of a second control to select one of the following modes: AM presets, AM seek, AM tune, FM preset, FM seek, FM tune, FM station, FM song, FM genre, FM artist, satellite radio presets, satellite radio station, satellite radio category, satellite radio station, satellite radio son g, satellite radio genre, satellite radio artist, CD Track, CD time, CD Disk, CD Artist, CD Song, CD Genre, hard drive title, hard drive track, hard drive artist, hard drive time, hard drive genre, uMusic track, uMusictime, DVD Chapter, HVAC/climate tempe rature, HVAC/climate fan, core navigation origin, core navigation destination, core navigation directions.

In one embodiment, the system displays a list of options pertinent to the selected mode. The system selects a desired option based on actuation of the first degree of freedom of the second control.

In another embodiment, a control mechanism comprises an optically transparent member and a knob. The knob is rotatable by a user and rotationally coupled to the optically transparent member. The knob also has a reflective surface, an optical light source for directing light toward the knob and at least one optical receiver. The at least one optical receiver detects light from the optical light source that is reflected toward the optical receiver by the one of the reflective surface.

In one embodiment, the control mechanism comprises a circuit. The circuit converts the reflected light received by the at least one optical receiver into a control signal. Upon rotation of the knob by a user, reflected light detected by the receiver is converted into a control signal.

In still another embodiment, the control mechanism comprises a modulator for modulating the output light produced by the optical light source and a demodulator. The demodulator is configured to convert the modulated light into the control signal by demodulating the modulated light received by the at least one optical receiver from the light source.

In another embodiment, the reflective surface comprises bands of reflective surface that alternate with bands of non-reflective surface.

In yet another embodiment, the control mechanism further comprises a first optical receiver and a second optical receiver wherein the direction of rotation of the knob is determined by comparing the outputs of the firs t and second optical receivers.

In another embodiment, when detection by the first optical receiver of light reflected from one band of reflective surface is followed by detection by the second optical receiver of light reflected from the one of the bands of the reflective surface, the circuit identifies a knob turn in a first direction. When detection by the second optical receiver of light reflected from the one of the bands of the reflective surface is followed by detection by the first optical receiver of light reflected from the one of the bands of the reflective surface, the circuit identifies a knob turn in a second direction.

In still another embodiment, when knob rotation is in a direction of the shortest rotation between a position of the knob up on detection by the first optical receiver of light reflected from one band of reflective surface and a position of the knob upon detection by the second optical receiver of light reflected from the one of the bands of the reflective surface.

In another embodiment, when the display is positioned in the area behind the optically transparent member, the display viewable through the optically transparent member.

In still another embodiment, when the knob is constructed of transparent material, and at least a portion of the display is positioned in an area behind the optically transparent knob, the display is viewable through the knob.

In another embodiment, a knob surface area has a transmissive material. The transmissive material is capable of projecting the p ortion of the display positioned in the area behind the optically transparent knob on the knob surface area.

In still another embodiment, the optical light source projects the light transversely through the optically transparent member.

In another embodiment, light directed by the optical light source toward the knob is infrared light.

In yet another embodiment, the optically transparent member is positioned between a source of ambient light and the at least one optical receiver. The optical coating on the optically transparent member blocks transmission of ambient light from an extraneous source to the at least one optical receiver over a predetermined range of the electromagnetic spectrum.

In another embodiment a surface area of the optically transparen t member is coated with an optical coating.

In yet another embodiment, the light directed toward the knob by the optical light source is electromagnetic energy. The optical coating on the optically transparent member reduces the transmission of the electr omagnetic energy in at least a portion of the frequency range in which the at least one optical receiver operates.

In another embodiment the optical coating on the optically transparent member reduces the transmission of the electromagnetic energy in a frequency range of the electromagnetic spectrum that is common to both the frequency range of the optical light source and the frequency range that the at least one optical receiver responds to.

In yet another embodiment the optically transparent member con tains a dye such that the dye blocks transmission of light from extraneous sources of light to the at least one optical receiver over a predetermined range of the electromagnetic spectrum.

In another embodiment at least one optical receiver is coated with an optical coating such that the optical coating on the at least one optical receiver blocks transmission of ambient light from an extraneous source to the at least one optical receiver.

In still another embodiment, the optically transparent member is c onstructed from one of polycarbonate material, acrylic, cyclic olephins, thermoset material, and plastic.

In another embodiment the optical source and at least one optical receiver are positioned in locations relative to the optically transparent member s o as to permit transmission and reception of light transversely through the optically transparent member.

In another embodiment the control mechanism operates in a motor vehicle.

In another embodiment operates as the control mechanism for a media player.

In another embodiment the control mechanism operates as the control mechanism for a portable device.

In another embodiment when the user presses the knob, the knob transmits a force to the optically transparent member whereupon the optically transparent m ember transmits a resulting force to a switch associated with a desired control function.

In another embodiment the control mechanism accepts additional user input from either a voice recognition, motion detection or proximity detection device.

In another embodiment a proximity detector detects the presence of a user's hand near the control mechanism. Upon placement of the user's hand near the control mechanism, the control mechanism is configured to change information content of the display.

In another embodiment the information content is a set of at least one menu option.

In another embodiment the proximity detector-based control mechanism is configured to change the information content of a multi -media device employed in a vehicle.

In another embodiment, the control mechanism, based upon detection of the presence of a user's hand proximate to the control mechanism, increases the information content displayed.

In another embodiment the control mechanism, based upon an absence of detection of the presence of a user's hand proximate to the control mechanism, decreases the information content displayed.

In yet another embodiment the proximity sensor further comprises a transmitter and receiver. In addition to sensing a signal indicating proximity of the us er's hand to the control mechanism, the receiver detects a signal transmitted by a remote control.

In another embodiment when the signal indicating proximity of the user's hand and the signal transmitted by the remote control are modulated according to dif ferent modulation schemes, the receiver distinguishes between the signal indicating proximity of the user's hand and the signal transmitted by the remote control by identifying one of the modulation and coding of both signals.

In yet another embodiment, a friction sleeve is affixed to the circumference of the knob thereby providing a friction surface. The friction surface slides rotatably within a holding mechanism for the knob.

In another embodiment the friction sleeve is constructed of a material having a low coefficient of friction.

In another embodiment the material with a low coefficient of friction is PTFE.

In another embodiment the friction sleeve is in contact with the optically transparent member, leaving a gap between the portion of the knob with reflective surfaces and the optically transparent member.

In another embodiment, the capture member is attached to the circumference of the knob. The capture member applies a positioning pressure to the rear side of the optically transparent member there by holding the knob in a position relative to the optically transparent member.

In yet another embodiment, either the optical light source or the at least one optical receiver is mounted on the optically transparent member.

In another embodiment a transparent knob is connected to the shaft of a rotational combination control, a display is positioned in the area behind the knob. The display projects output that is viewable through knob. A circuit converts a user -applied force into a control signal that is representative of the positional control location associated with an input selection desired by the user.

In another embodiment, a spatial relationship exists between a multiple of positional control locations of the knob. The rotational combination contr ol accepts a transverse force vector resulting from a direct force applied by the user to the knob at a distance from a center location of the knob representative of a desired user input.

In another embodiment the knob is rotatable by a user. In response to rotation of the knob by the user, the control mechanism identifies a control indication.

In another embodiment, in response to the identification of a control indication by the control mechanism, the control mechanism displays a set of user input option s. The individual user input options are associated with rotational positions of the knob.

In still another embodiment, the display is configured to display the set of input options associated with the rotational positions of the knob. The input options are viewable by a user through the rotational pressure member.

In another embodiment of the system comprises a plurality of switches and an optically transparent member coupled to the plurality of switches. The optically transparent member has multiple sections. Each section of the multiple sections is associated with a switch of the plurality of switches. The optically transparent member is positioned in relation to the plurality of switches such that when a force is applied by a user to one of the mult iple sections, the pressure member transmits a resulting force to a switch associated with the one of the multiple sections. The switches of the plurality of switches detect the intensity of the force applied by the user.

In yet another embodiment, the system comprises a first switch of the plurality of switches, a second switch of the plurality of switches and a control circuit. As a result of the exertion of a force by the user to the optically transparent member, the optically transparent member transmits a first resulting force to a first switch associated with one of the multiple sections of the optically transparent member and a second resulting force to a second switch associated with another of the multiple sections of the optically transparent mem ber. Accordingly, a state change of the first switch of the plurality of switches and a state change of the second switch of the plurality of switches is caused whereupon the control circuit infers a first system state if the first resulting force is grea ter than the second resulting force or a second system state if the second resulting force is greater than the first resulting force.

In another embodiment the control mechanism has a knob. The knob is rotationally coupled to an optically transparent mem ber, is rotatable by a user and has alternating bands of reflective surface and non-reflective surface. Accordingly, a method for accepting a user input comprises the steps of, from the band of the reflective surface on the knob, reflecting the light received from the optical light source to the at least one optical receiver and detecting, by the at least one optical receiver, the light reflected by the band of the reflective surface on the knob.

In another embodiment the system converts the detected light into a control signal.

In still another embodiment a modulator, modulates the light directed by the light source and a demodulator, demodulates, into the control signal, the modulated light received from the light source by the at least one optical receiver.

In another embodiment the control mechanism comprises a first optical receiver and a second optical receiver wherein a method comprises the steps of, when detection by the first optical receiver of light reflected from the band of reflective surface is followed by detection by the second optical receiver of light reflected from the band of reflective surface, identifying a knob turn in a first direction. When detection by the second optical receiver of light reflected from the band of reflective surfac e is followed by detection by the first optical receiver of light reflected from the band of reflective surface, identifying a knob turn in a second direction.

In another embodiment a display is positioned in the area behind the optically transparent membe r, further comprising the step of the display projecting an image for viewing through the optically transparent member.

In yet another embodiment, the knob is constructed of transparent material and the display is located behind the knob wherein the displa y shows an image through the knob for viewing.

In another embodiment, light projects transversely through the optically transparent member.

In still another embodiment the optically transparent member has an optical coating. The optical coating blocks transmission of ambient light from an extraneous source to the at least one optical receiver over a predetermined range of the electromagnetic spectrum.

In another embodiment the optically transparent member contains a dye. The dye blocks transmission of am bient light from an extraneous source to the at least one optical receiver over a predetermined range of the electromagnetic spectrum

In yet another embodiment, the optically transparent member transmits a resulting force to a switch associated with a des ired control function, in response to a user pressing the knob wherein the resulting force is caused by the user application of a force to the knob.

In yet another embodiment, the control mechanism accepts additional user input from one of a voice recognition device, a motion detection device and a proximity detection device.

In another embodiment, the control mechanism changes the value of the user input based on the additional user input accepted from either the voice recognition device, the motion detection device and the proximity detection device.

In yet another embodiment, upon detecting the presence of a user's hand proximate to a proximity detector coupled to the control mechanism, the control mechanism changes the information content of the display.

In another embodiment the control mechanism, based upon the detection of the presence of the user's hand proximate to the control mechanism, changes at least one menu option.

In another embodiment the control mechanism, based upon the detection of the presence of the user's hand proximate to the control mechanism, increases the information content displayed.

In another embodiment the control mechanism, based upon absence of the detection of the presence of the user's hand proximate to the control mechanism , decreases information content displayed.

In another embodiment, in addition to sensing a signal indicating proximity of the user's hand to the control mechanism, the receiver detects a signal transmitted by a remote control.

In another embodiment when th e signal indicating proximity of the user's hand and the signal transmitted by the remote control are modulated according to different modulation schemes, the receiver distinguishes between the signal indicating proximity of the user's hand and the signal transmitted by the remote control by identifying one of the modulation and coding of both signals.

In another embodiment invention the system for accepting user input comprises a plurality of switches and a pressure member coupled to the plurality of switc hes. The pressure member has multiple sections. Each section of the multiple sections is associated with a switch of the plurality of switches. The pressure member is positioned in relation to the plurality of switches such that when a force is applied by a user to one of the multiple sections, the pressure member transmits a resulting force to a switch associated with the one of the multiple sections which causes actuation of the switch associated with the one of the multiple sections. At least one swi tch of the plurality of switches is interposed between the pressure member and a frame.

In another embodiment, when, in response to the exertion of pressure by the user to the one of the multiple sections of the pressure member, the pressure member is mov ed from the pressure member's neutral position. The actuator of a switch associated with the one of the multiple sections causes the system to identify a switch activation associated with the one of the multiple sections.

In another embodiment the system further comprises a suspension-mounted retainer that moveably couples the pressure member to the frame.

In another embodiment the suspension-mounted retainer includes a compressable spacer.

In another embodiment, when in response to exertion of pressure to one of multiple sections of a pressure member by a user, a section of the pressure member is moved from the pressure member's neutral position, an actuator of a switch associated with the one of the multiple sections of the pressure member causes the syst em to identify a switch activation associated with the one of the multiple sections of the pressure member.

In another embodiment a control mechanism comprises a user input area, a controller and a proximity detector. The proximity detector detects the pr esence of a user's hand near the user input area. Upon placement of the user's hand near the control mechanism, the controller is configured to change the information content of the display.

In another embodiment the information content comprises a set of at least one menu option.

In yet another embodiment the controller is configured to change the information content of a multi-media device employed in a vehicle.

In yet another embodiment, the controller is configured to, based upon detection of the presence of a user's hand proximate to the control mechanism, increase the information content displayed.

In another embodiment the controller is configured to, based upon an absence of detection of the presence of a user's hand proximate to the control mecha nism, decrease the information content displayed.

In another embodiment, the proximity sensor further comprises a transmitter and receiver. In addition to sensing a signal indicating proximity of the user's hand to the control mechanism, the receiver detects a signal transmitted by a remote control.

In another embodiment, when the signal indicating proximity of the user's hand and the signal transmitted by the remote control are modulated according to different modulation schemes, the receiver distinguishe s between the signal indicating proximity of the user's hand and the signal transmitted by the remote control by identifying one of the modulation and coding of both signals.

In another embodiment of the invention, a display is configured to show an initia I output. A detector is positioned, relative to the display such that when the detector detects placement of a trigger near the display, a controller is configured to cause the display to display an alternative output upon placement of a trigger near the detector.

### BRIEF DESCRIPTION OF THE DRAWINGS

The foregoing and other objects, features and advantages of the invention will be apparent from the following more particular description of preferred embodiments of the invention, as illustrated in the accompan ying drawings in which like reference characters refer to the same parts throughout the different views. The drawings are not necessarily to scale, emphasis instead being placed upon illustrating the principles of the invention.

Fig. 1 shows a front view of the system for accepting a user input, according to one embodiment of the invention.

Fig. 2 shows a side view of the pressure member assembly, according to one embodiment of the invention.

Fig. 3 shows a side view of the pressure member assembly after the user has applied a force to the pressure member, according to one embodiment of the invention.

Fig. 4 shows an alternative embodiment of the invention employing a fulcrum to focus the force applied to a section of the pressure member, according to one embodiment of the invention.

Fig. 5 depicts a pressure member with raised tactile feedback areas, according to one embodiment of the invention.

Fig. 6 shows two knobs configured to accept a user selection of the content source, mode of operation, and/or specific media content items, according to one embodiment of the invention.

Fig. 7 shows a display displaying a media content item selection in standard mode, according to one embodiment of the invention.

Fig. 8 shows a display displaying a list of avai lable media content items in browse mode, according to one embodiment of the invention.

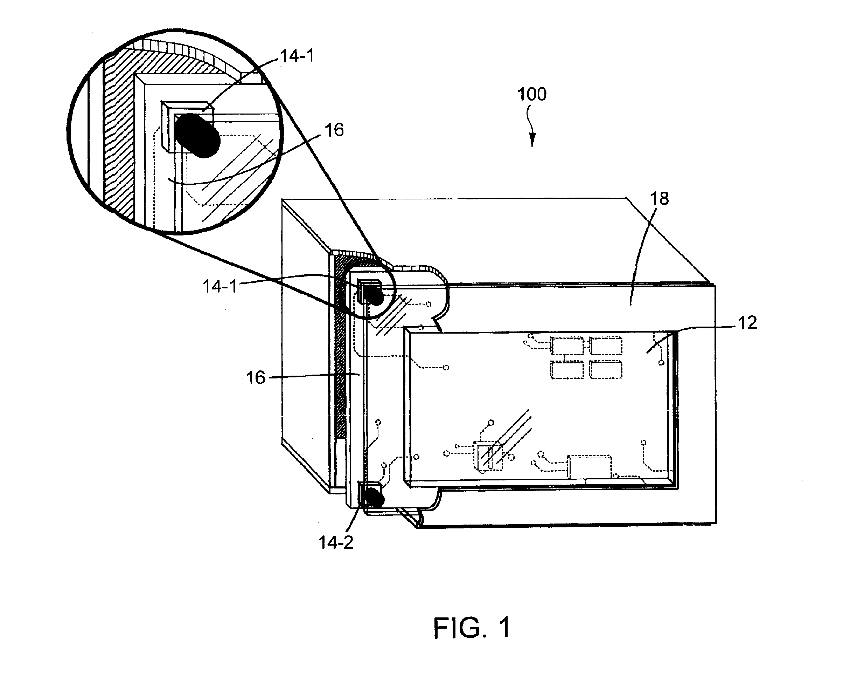

Fig, 9 demonstrates an assembly of components as described previously with respect to Figures 1 through 6, according to one embodiment of the invention.

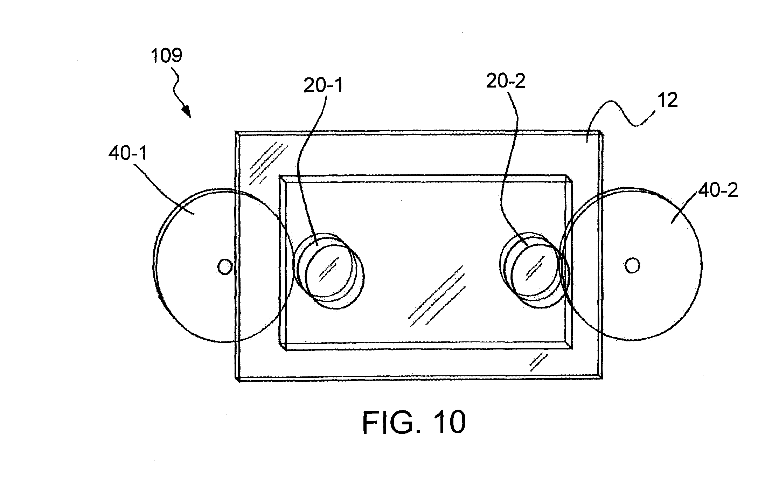

Fig. 10 depicts a configuration of a knob used to accept user input, according to one embodiments of the invention.

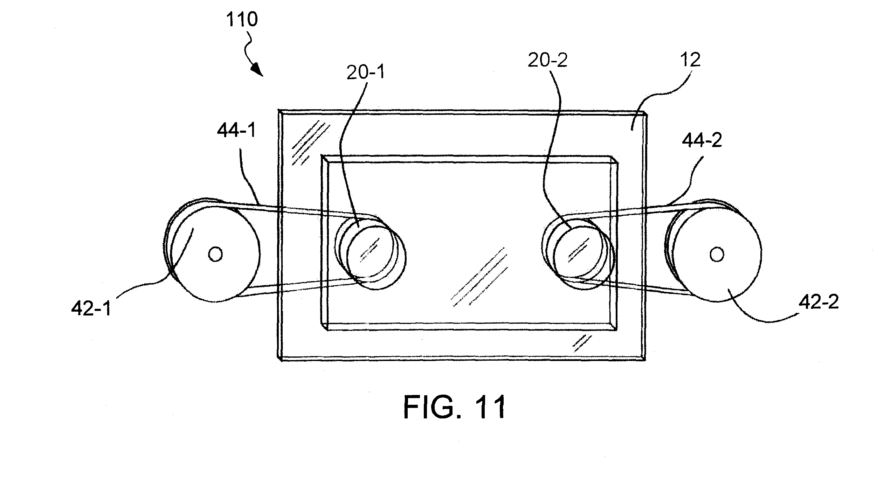

Fig. 11 depicts an alternative configuration of the knob used to accept user input employing a pulley and belt, according to one embodiment of the inve ntion.

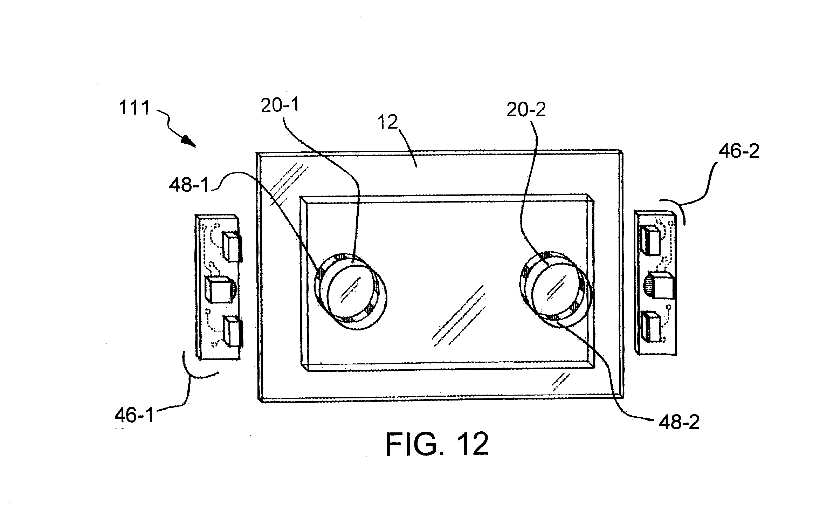

Fig. 12 depicts an alternative configuration of a knob used to accept user input employing infra-red detector circuits and a corresponding edge-stripped first knob and/or edge-stripped second knob, according to one embodiment of the invention.

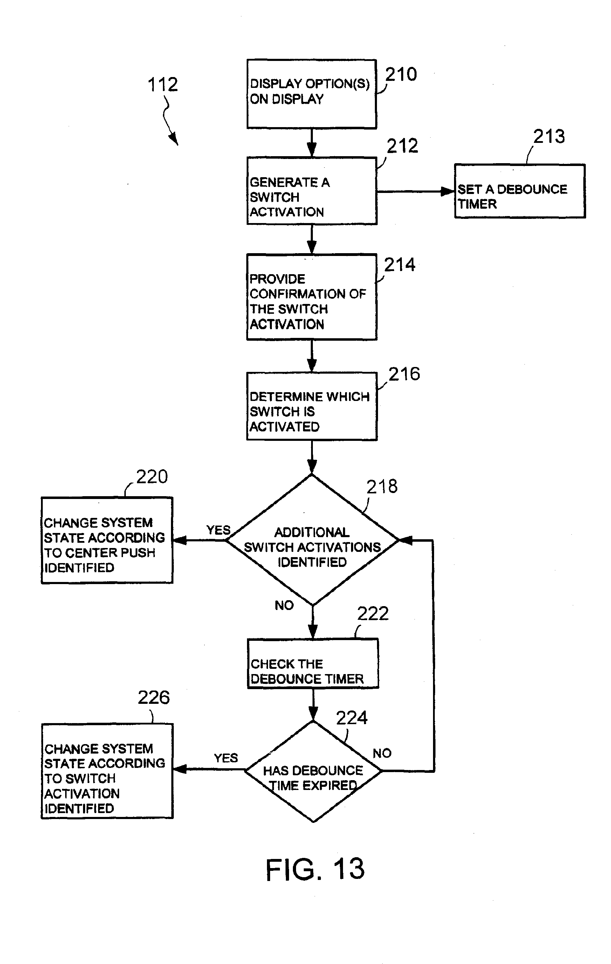

Fig. 13 is a flow chart of a procedure for accepting a user input, according to one embodiment of the invention

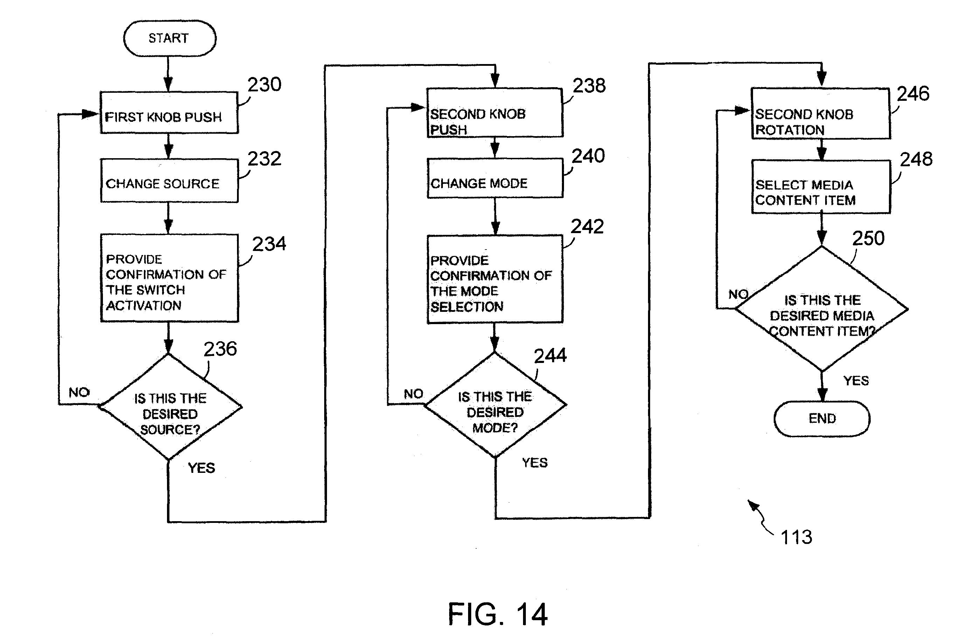

Fig. 14 is a flow chart of a procedure for selecting media, according to one embodiment of the invention.

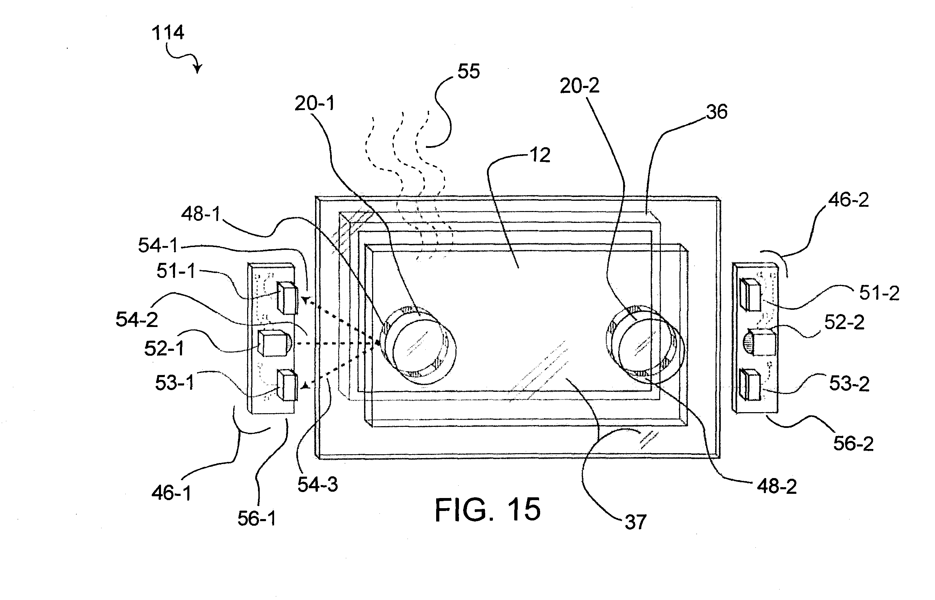

Fig. 15 shows detail features of a control mechanism capable of detecting knob rotation, according to one embodiment of the invention.

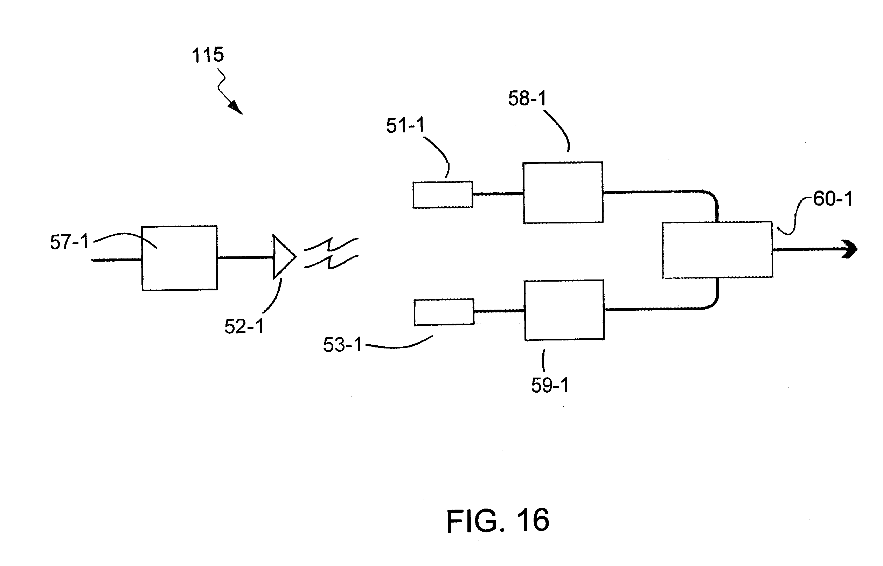

Fig. 16 shows a block diagram depicting an apparatus for transmitting light, according to one embodiment of the invention.

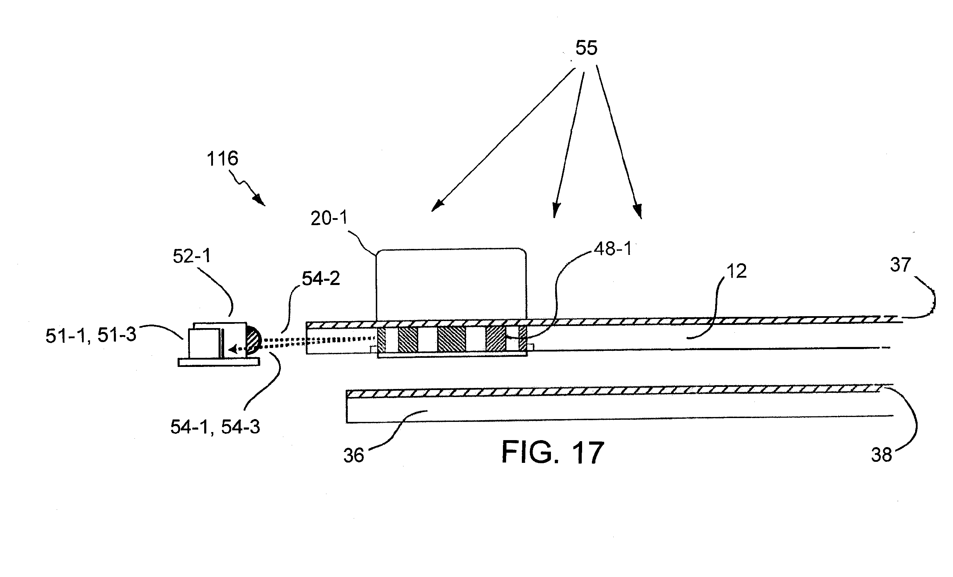

Fig. 17 depicts a side view of the optically transparent member having an optical coating and a display having an optical coating, according to one embodiment of the invention.

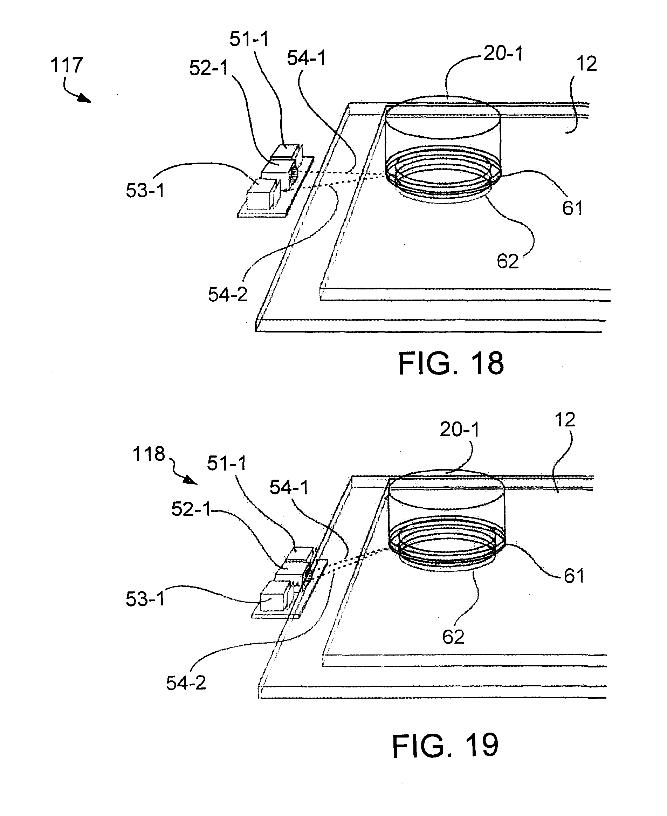

Fig. 18 depicts a side view of an arrangement of components configured to detect the rotation of a knob, accordi ng to one embodiment of the invention.

Fig. 19 shows a position of the light source with respect to the optical receiver such that the transmission of light between the light source and optical receiver is other than through the edge of and transversely th rough the optically transparent member, according to one embodiment of the invention.

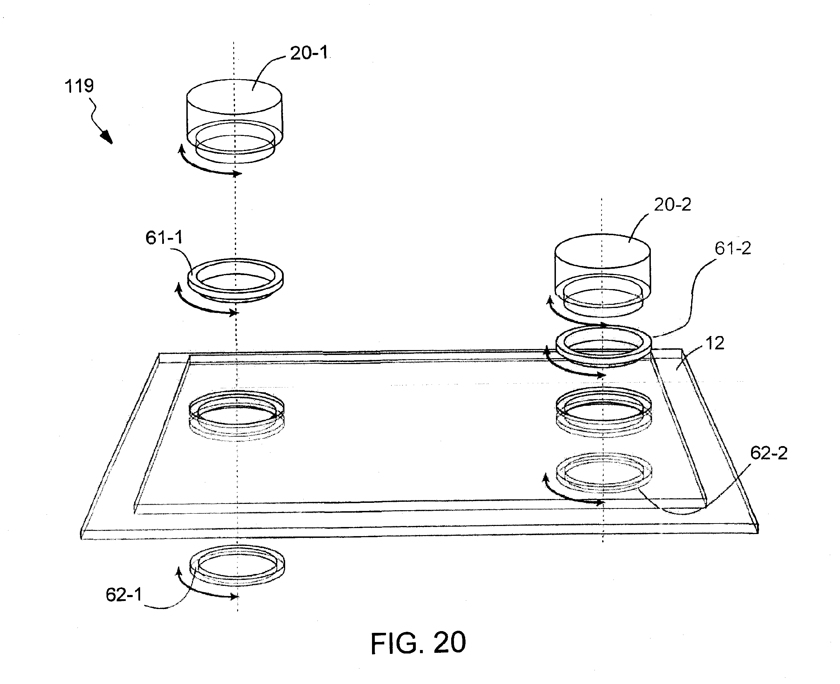

Fig. 20 depicts an arrangement of knobs attached to the optically transparent member showing interconnection of the knob, friction sleeve and capture member, according t o one embodiment of the invention.

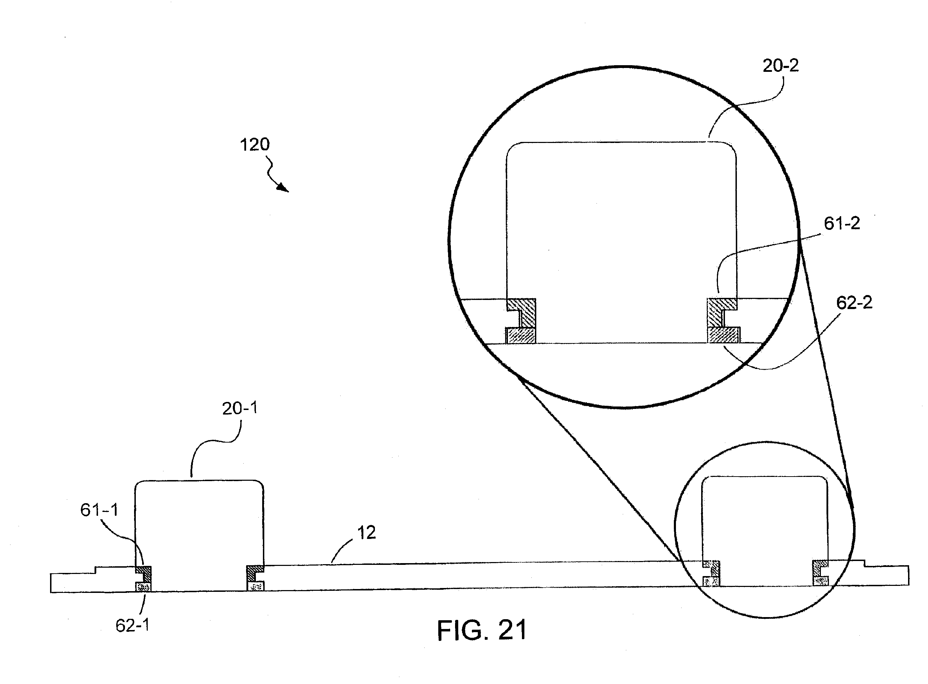

Fig. 21 shows a side view of two knobs attached to the optically transparent member, according to one embodiment of the invention.

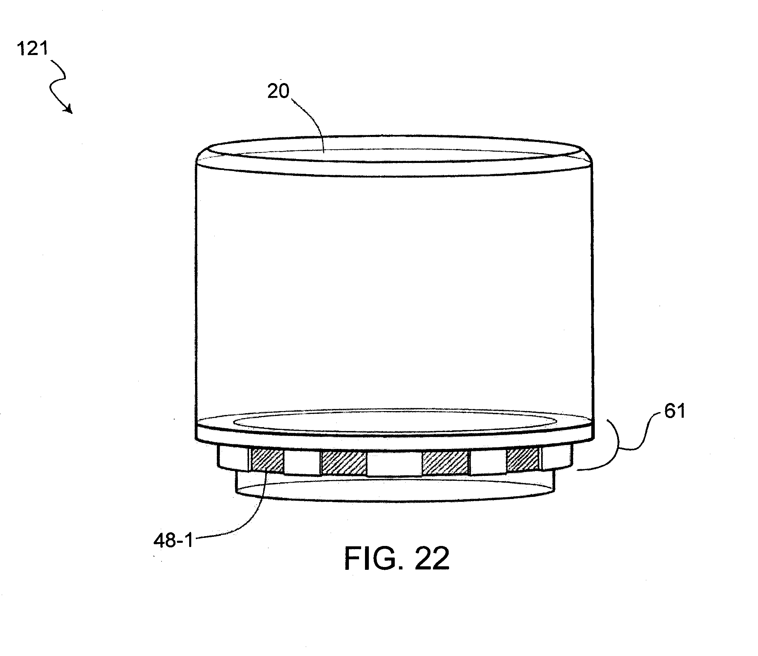

Fig. 22 depicts a knob with bands of reflective surface attached to the circumference of the knob, according to one embodiment of the invention.

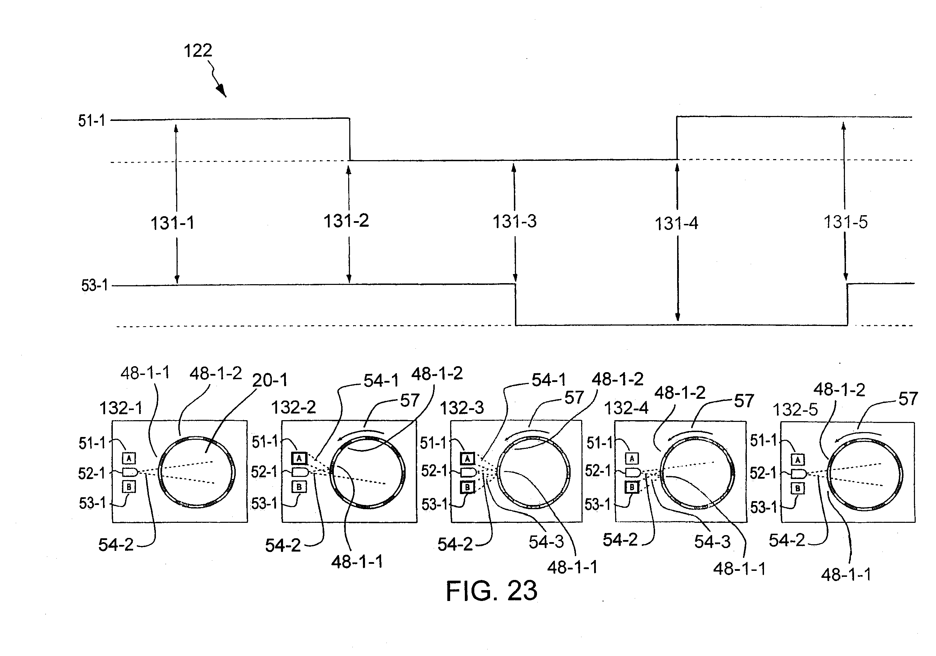

Fig. 23 is a depiction demonstrating the progress of rotation detection of a knob in a first direction by a first optical receiver and a second optical receiver, according to one embodiment of the invention.

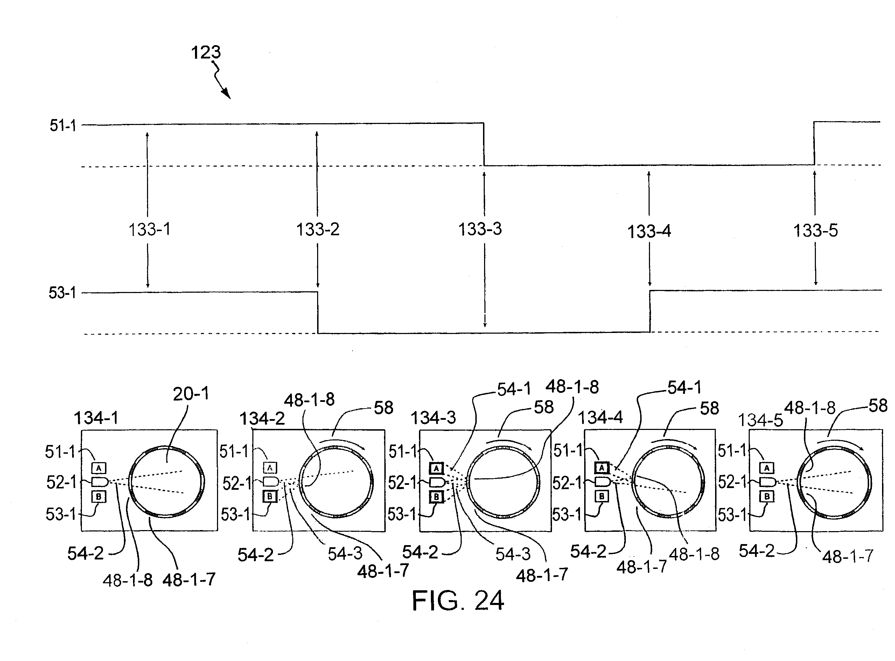

Fig. 24 is a depiction demonstrating the progress of rotation detection of a knob in a second direction by a second optical receiver and a first optical receiver, according to one embodiment of the invention.

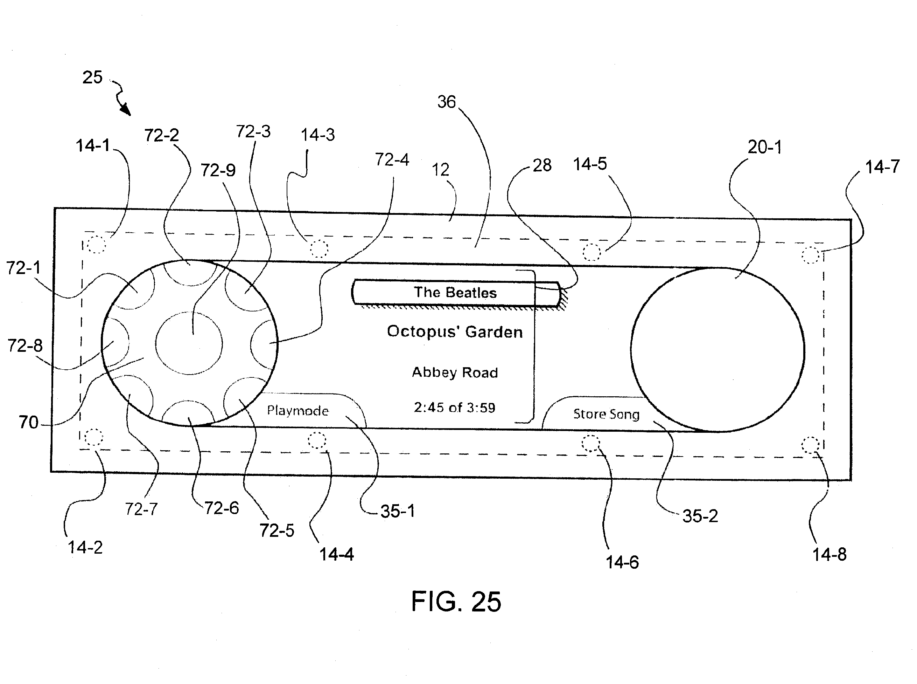

Fig. 25 is a depiction of an alternative configuration in the form of a handheld remote control, according to one embodiment of the invention.

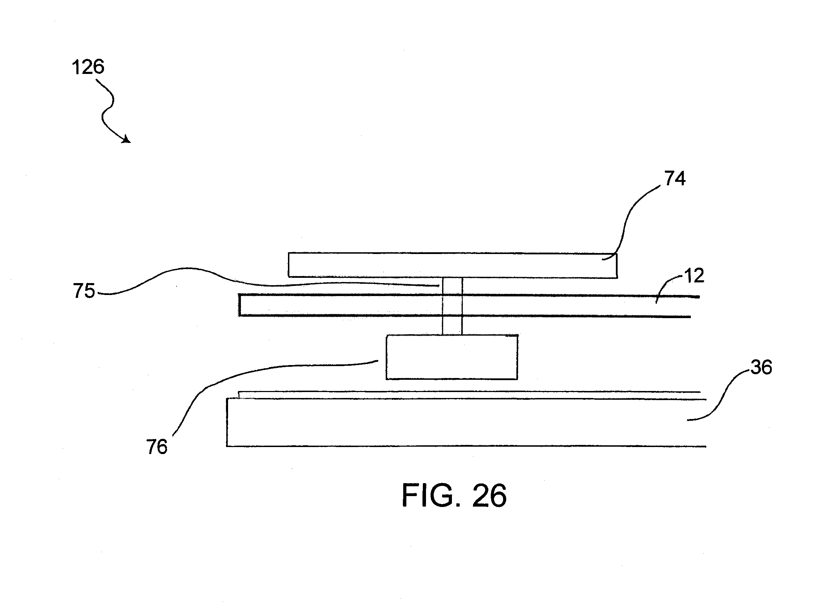

Fig. 26 shows a side view of a component of the handheld remote control, according to one embodiment of the invention.

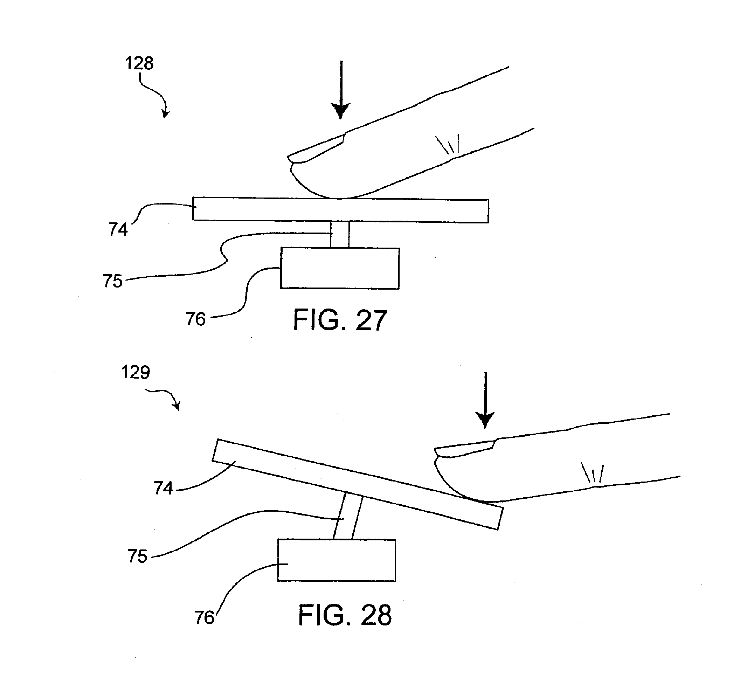

Fig. 27 shows the side view 128 of the rotational combination control 70 which has been depressed by a user at the push control location for a center control input, according to one embodiment of the invention.

Fig. 28 shows the side view of the optically transparent member which has been depressed at a location designated for an individual input, according to one embodiment of the invention.

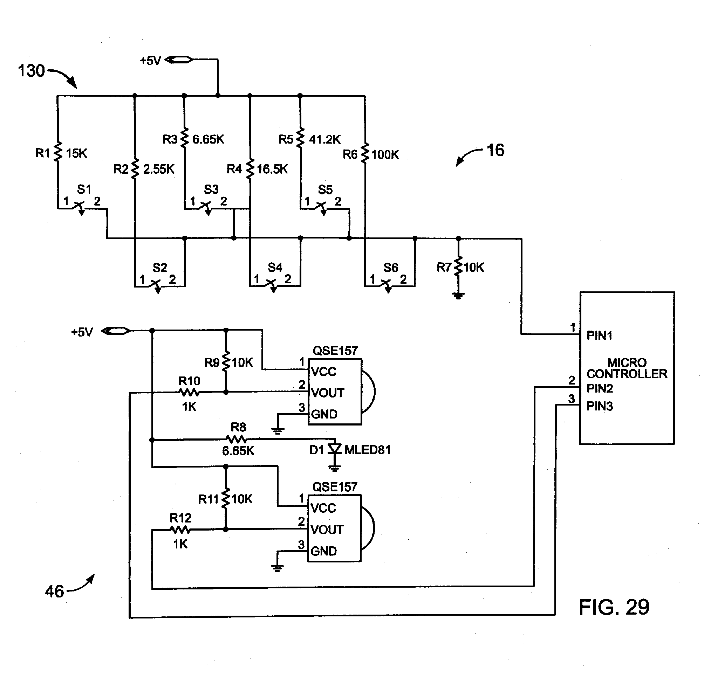

Fig. 29 is an example circuit diagram of the control circuit, according to one embodiment of the invention.

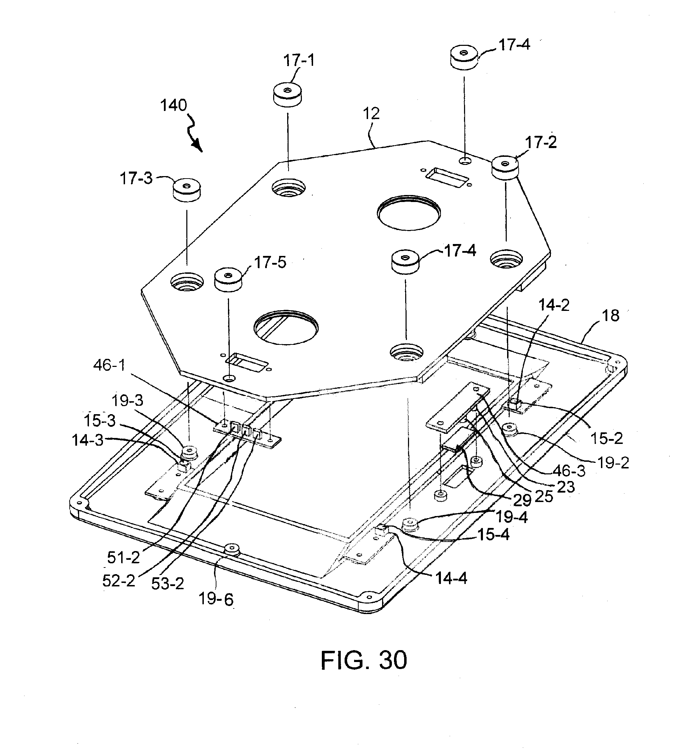

Fig. 30 shows the assembly of an optically transparent member and the frame, according to one embodiment of the invention.

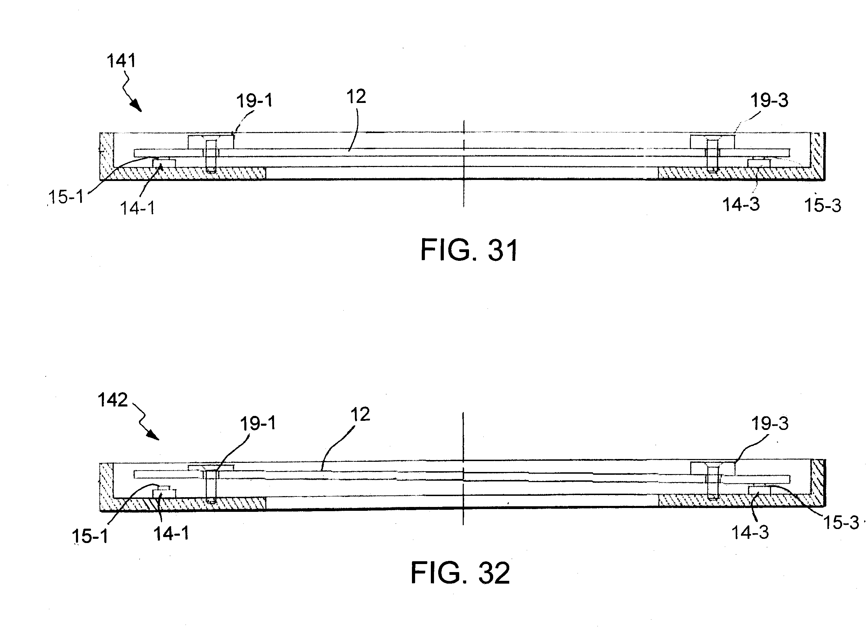

Fig. 31 shows a side view of the assembly of an optically transparent member and the frame, in which the optically transparent member is positioned in its initial locati on, according to the one embodiment of the invention.

Fig. 32 shows a side view of the assembly of the optically transparent member and the frame, in which the optically transparent member is positioned in a second location, according to the one embodiment of the invention.

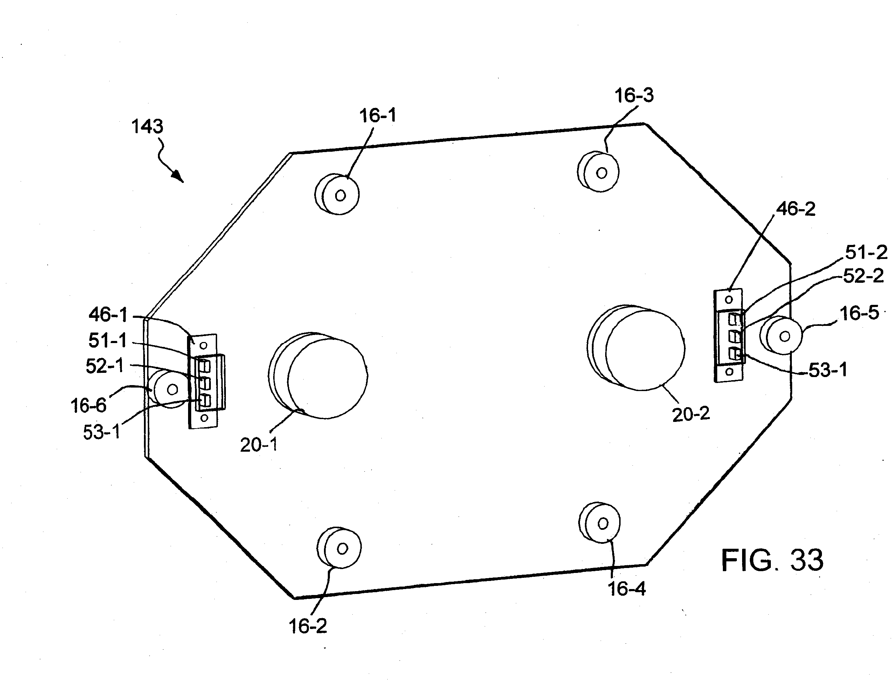

Fig. 33 shows the optical light source and optical receivers mounted to the optically transparent member, according to one embodiment of the invention.

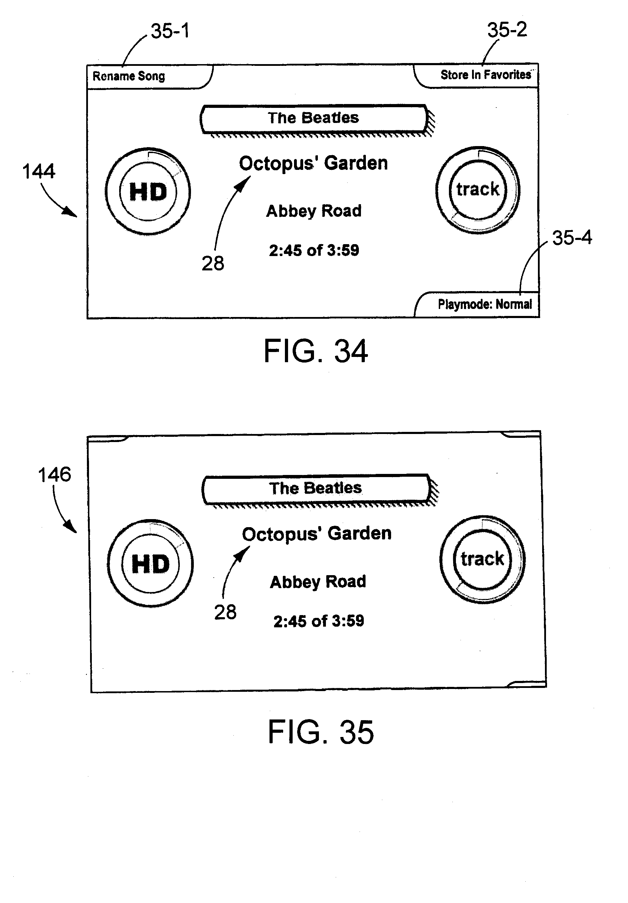

Fig. 34 shows the display displaying a media content item selection along with menu command options, according to one embodiment of the invention.

Fig. 35 shows the display displaying only the media content item selection, according to one embodiment of the invention.

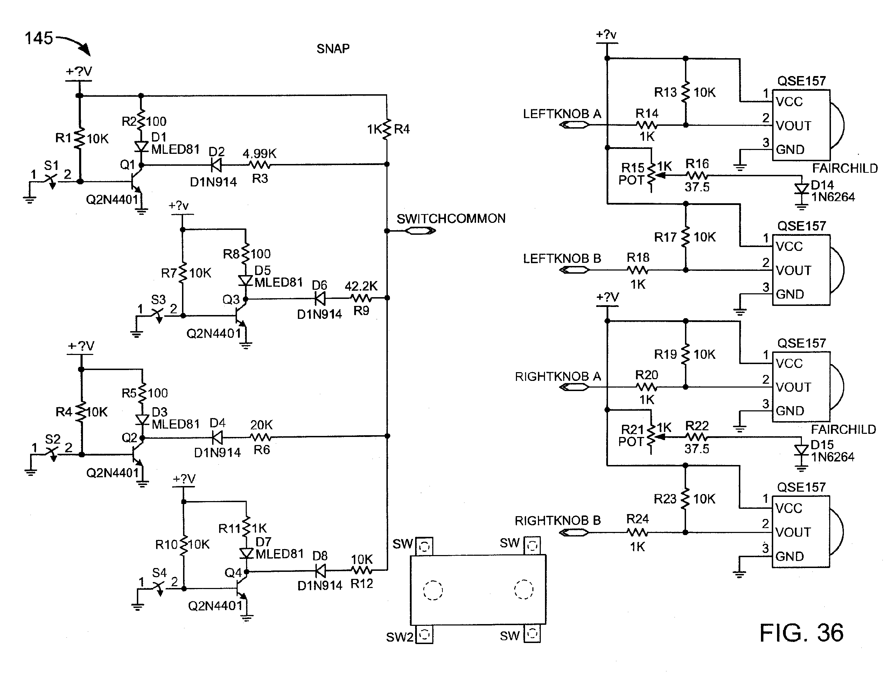

Fig. 36 is page one of an example circuit diagram of the control cir cuit, according to one embodiment of the invention.

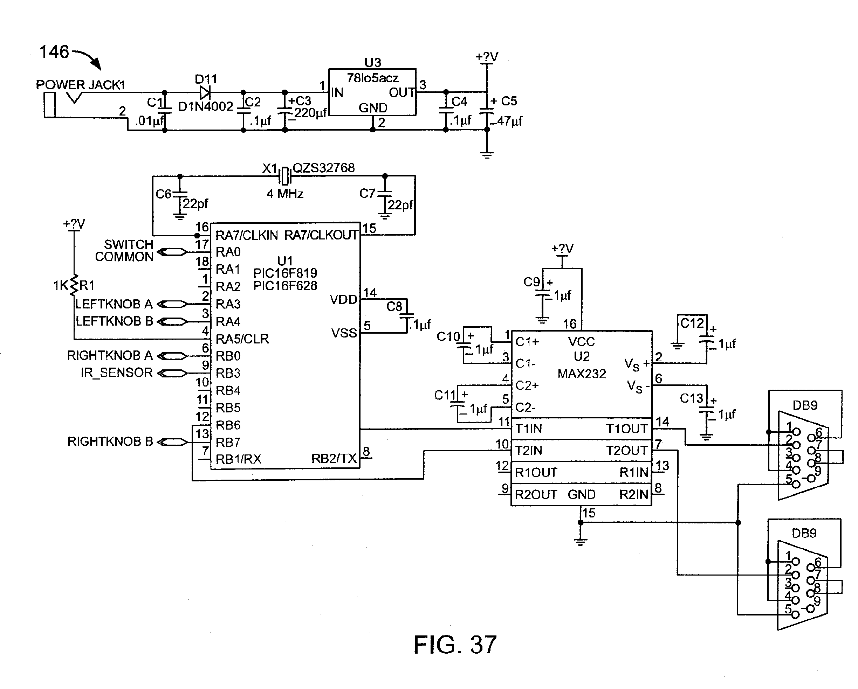

Fig. 37 is page two of the example circuit diagram of the control circuit, according to one embodiment of the invention.

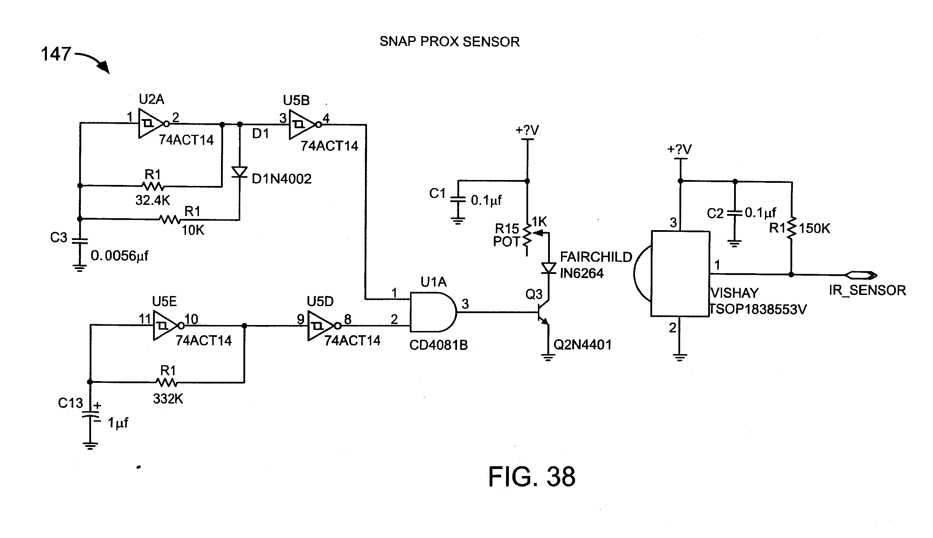

Fig. 38 is page one of an example circuit diagram of a proximity sensor circuit, according to one embodiment of the invention.

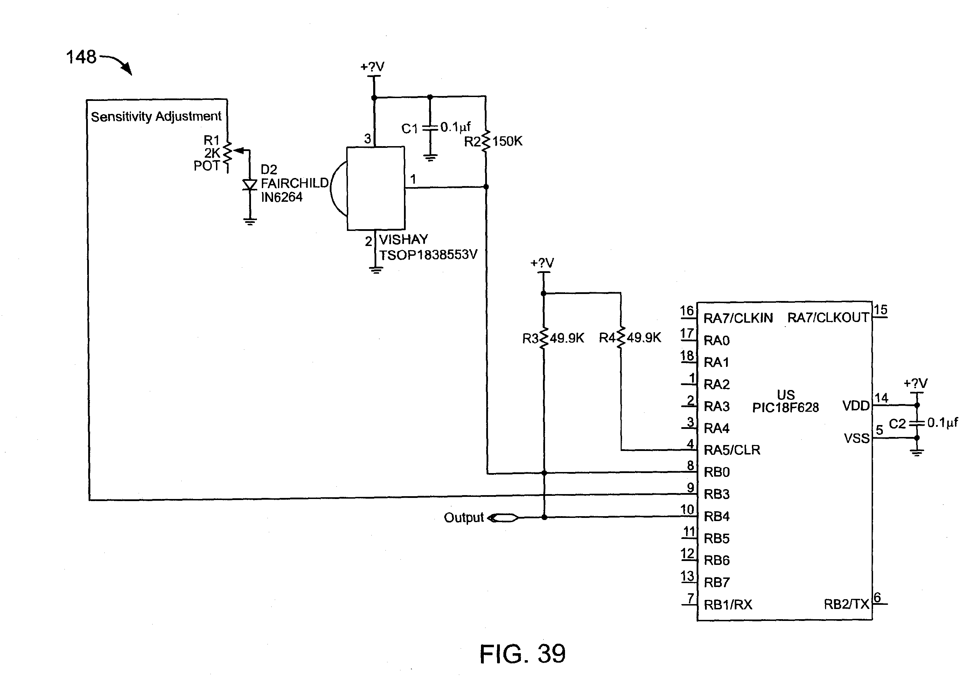

Fig. 39 is page two of the example circuit diagram of the proximity sensor circuit, according to one embodiment of the invention.

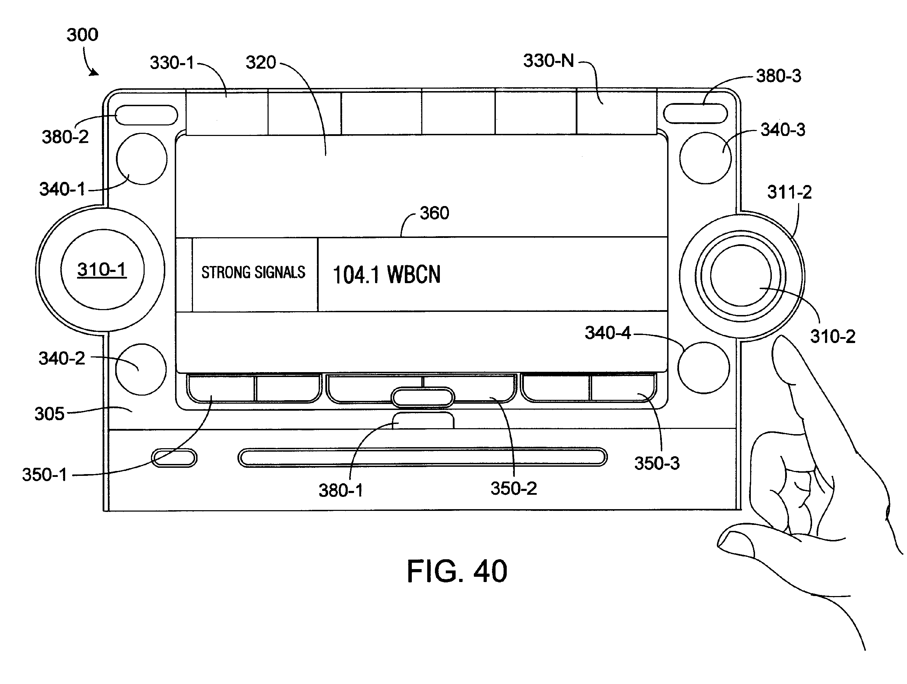

Fig. 40 is an apparatus 100 for accepting user input for use in a multimed ia device, according to one embodiment of the invention.

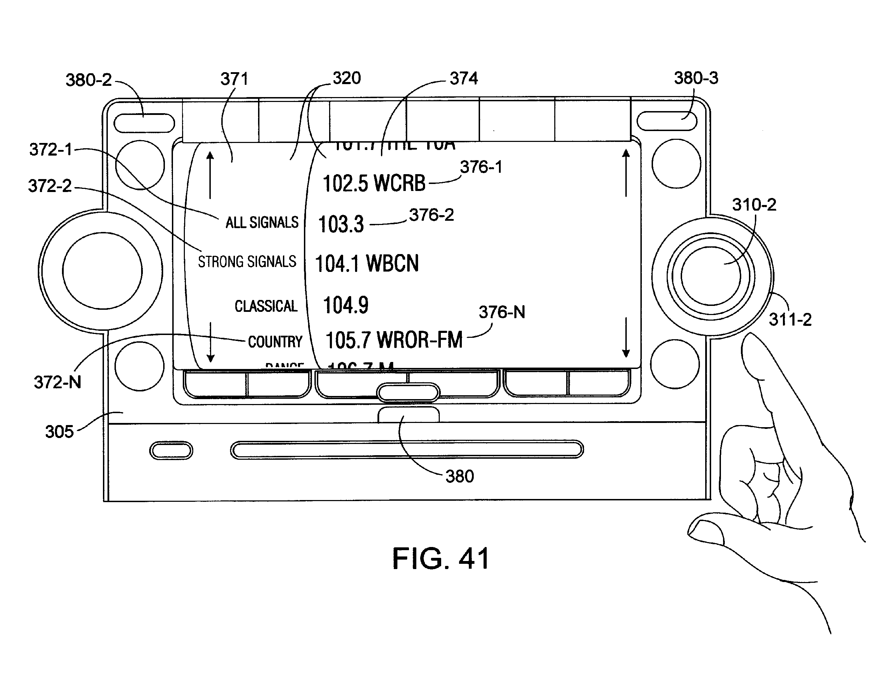

Fig. 41 shows an alternative display format according to one embodiment of the invention.

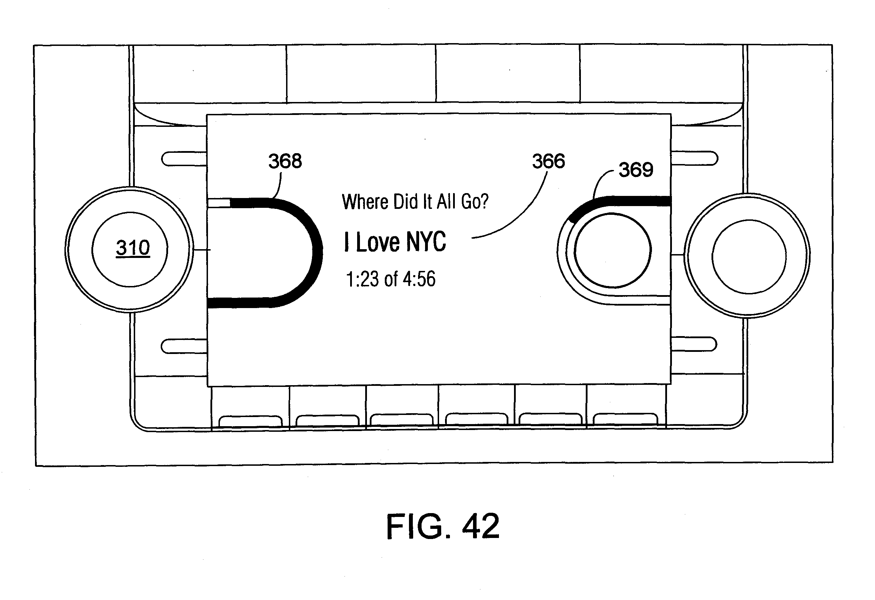

Fig. 42 shows an example of a display displaying variety of control information, according to one embodiment of the invention.

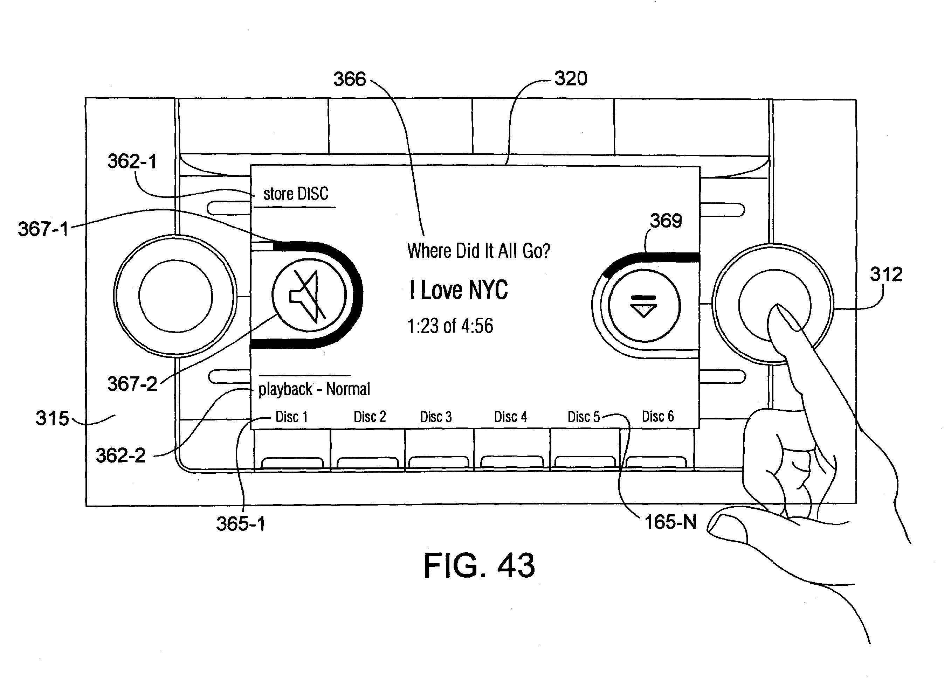

Fig. 43 shows an alternative embodiment of the invention showing expanded information display, according to one embodiment of the invention.

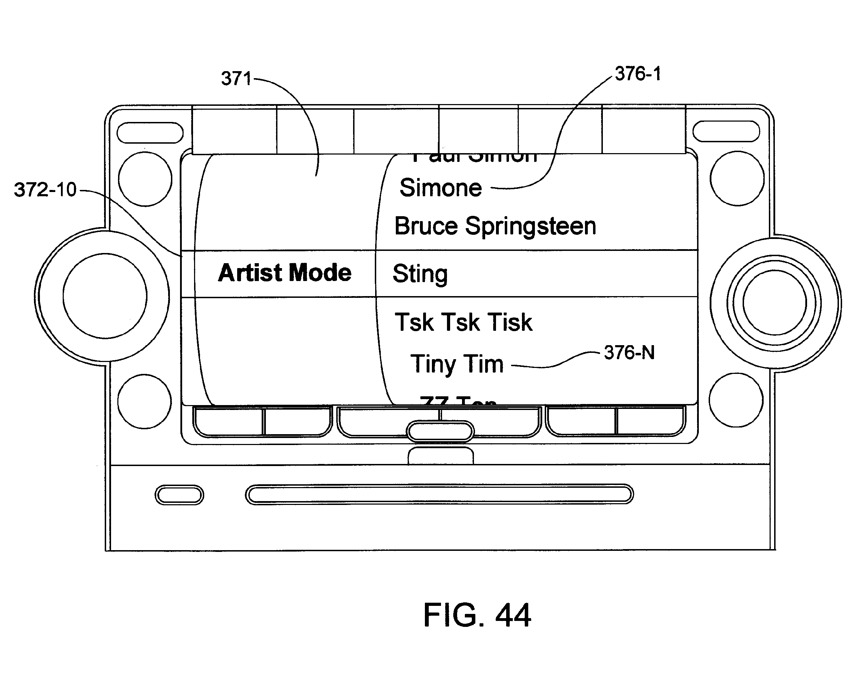

Fig. 44 shows an example of an embodiment of the invention in which the artist mode has been selected by the user.

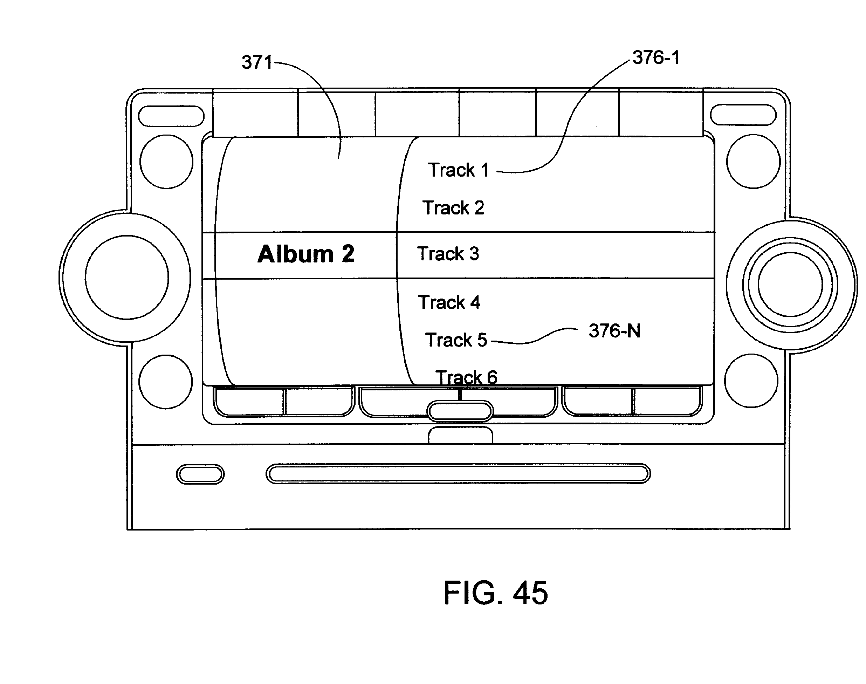

Fig. 45 shows a different example of the embodiment of the invention in which the album has been selected by the user.

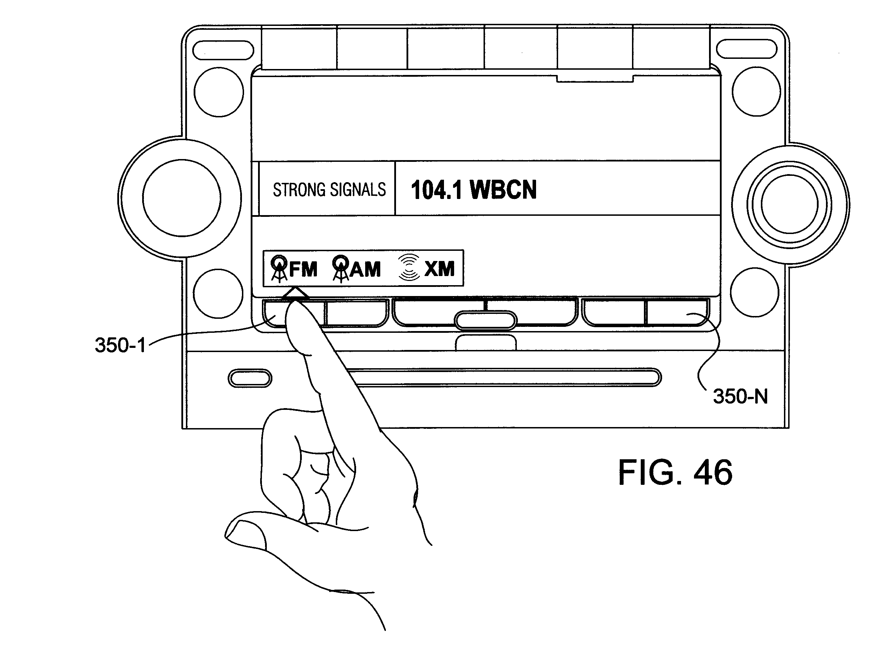

Fig. 46 shows an example use of a tool tip in a multimedia device other than a computer, according to one embodime nt of the invention.

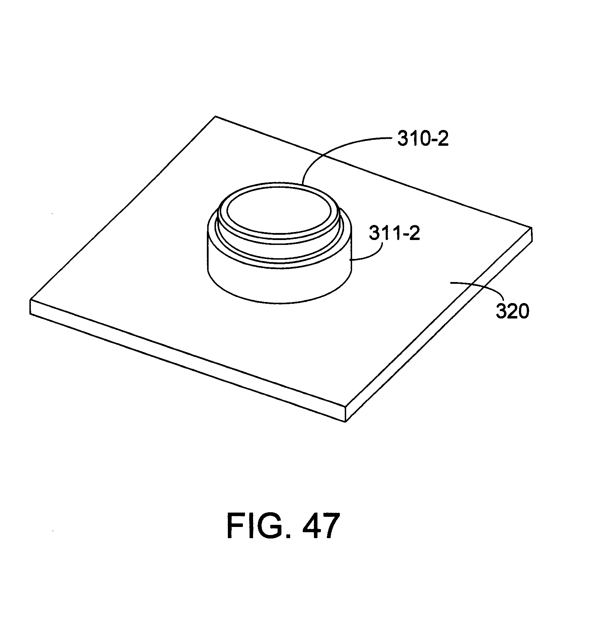

Fig. 47 shows a pair of concentric knobs, according to one embodiment of the invention.

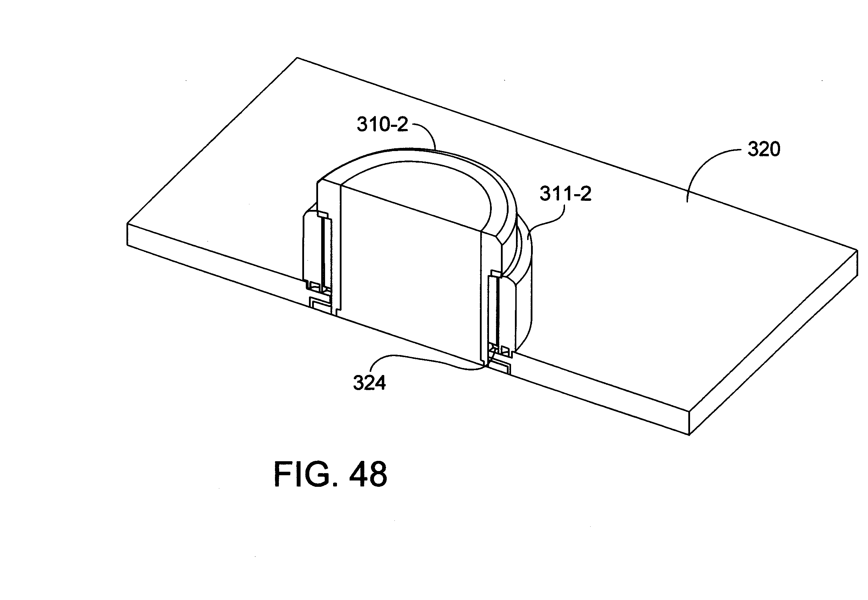

Fig. 48 is a cutaway view of the inner knob and outer knob mounted on a plane, according to one embodiment of the invention.

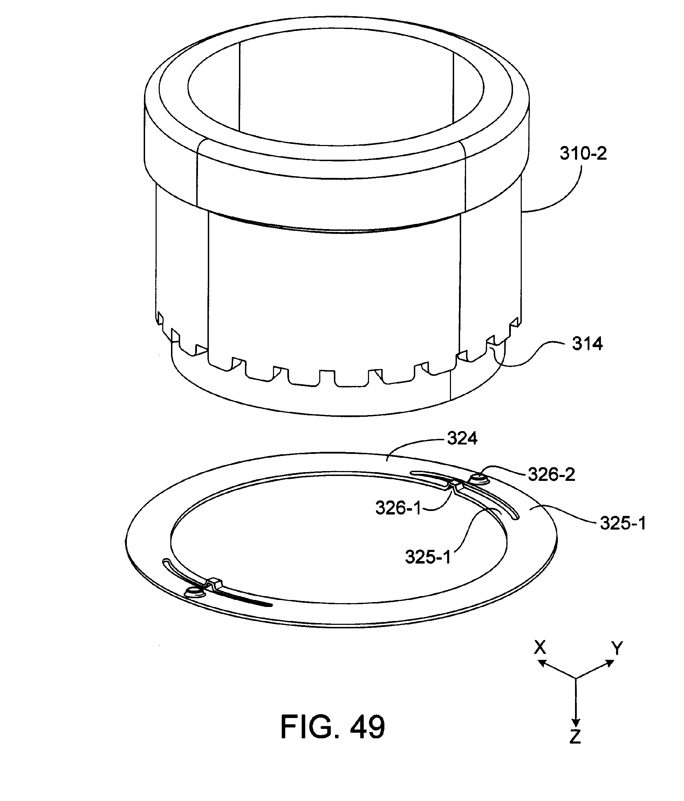

Fig. 49 is an assembl y of the inner knob and split ring, according to one embodiment of the invention.

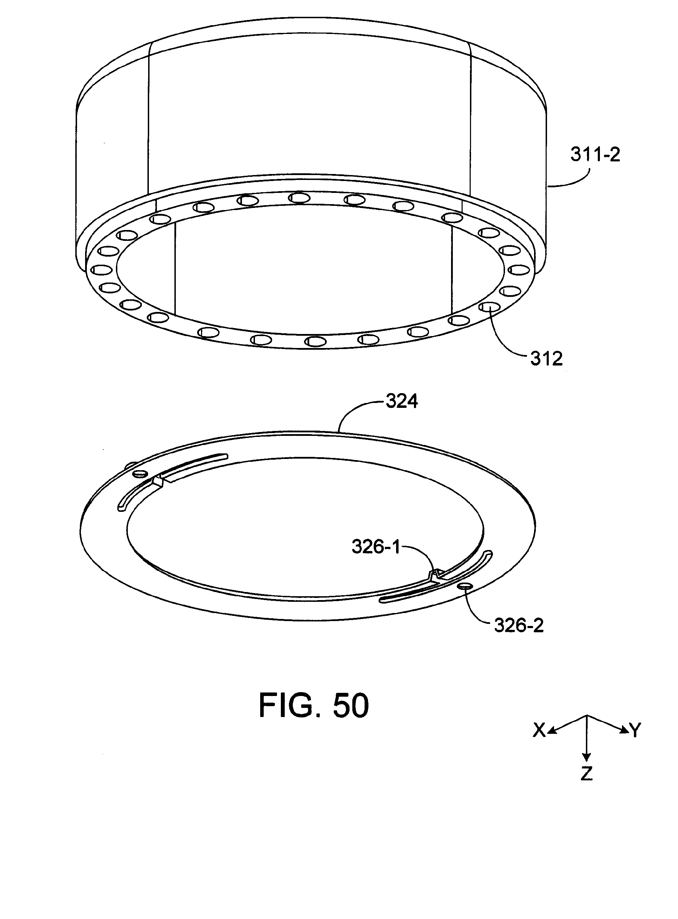

Fig. 50 is an assembly of the inner knob and split ring, according to one embodiment of the invention.

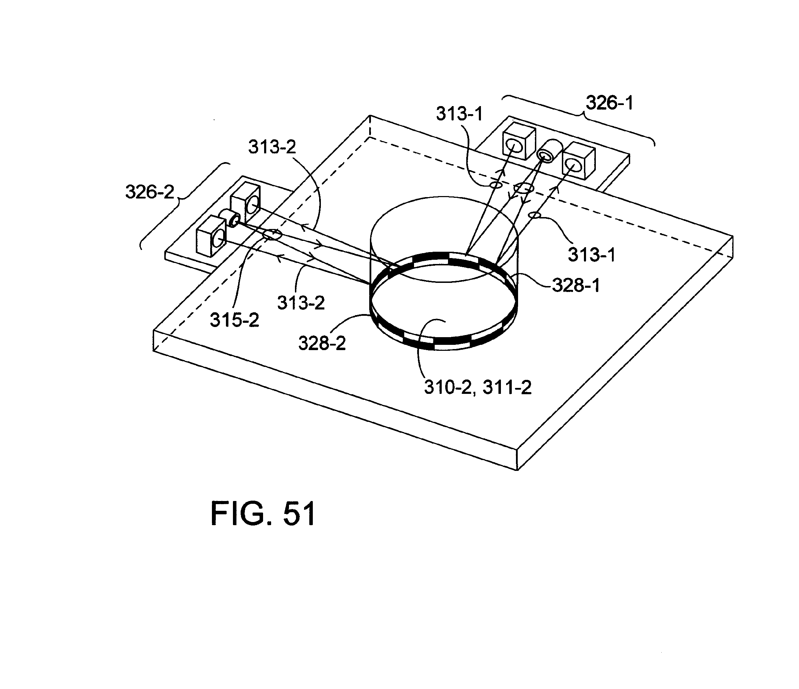

Fig. 51 shows a configuration of multiple sets of emitters and detector s, according to one embodiment of the invention.

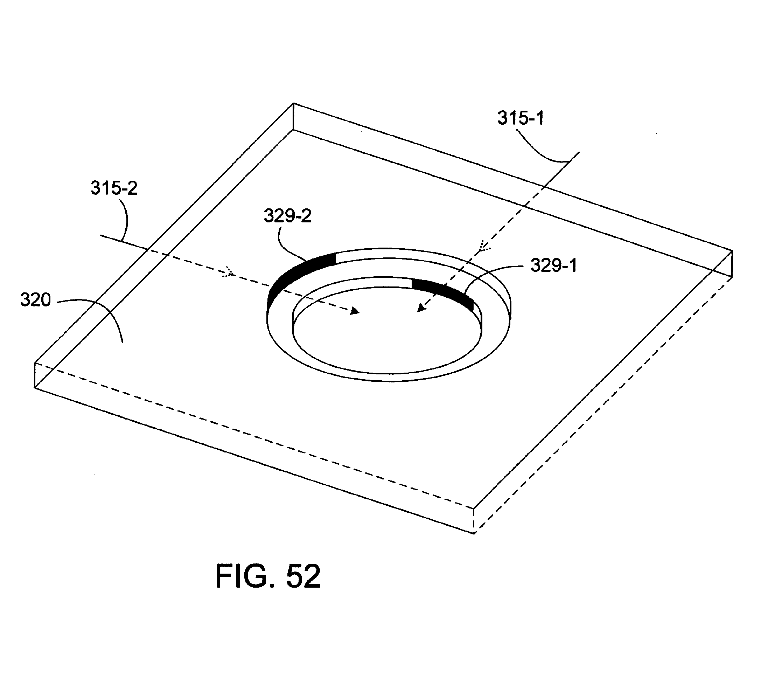

Fig. 52 shows a method of masking the inner and outer knobs in order to prevent cross-coupling, according to one embodiment of the invention.

### DETAILED DESCRIPTION

Now, with particular reference to individu al drawings, Fig. 1 shows a front view of the system 100 for accepting a user input. The system 100 includes a pressure member 12 (e.g. sheet of plastic or sheet of clear plastic), two switches 14-1,14-2 (i.e. two switches are shown in cutaway view; the pressure member is also mounted on two additional switches, not shown, located in position behind the two other corners of the pressure member 12), a control circuit 16 and a frame 18.

The pressure member 12 extends to reach a sufficient distance such tha t the pressure member 12 is positioned over and in contact with the switches 14 (e.g. in this example embodiment, the pressure member 12 extends over four switches positioned at each corner of the pressure member 12). Upon the exertion of a force by the u ser on the pressure member 12, the pressure member 12 is depressed in the area near the location of one or more switches 14.

In one embodiment, the frame 18 holds the pressure member 12, in position, around the edges of the pressure member 12 such that the pressure member 12 is in the correct position to exert a resulting force on one or more individual switches 14 within a plurality (e.g. an array) of switches. This permits the pressure member 12, in response to a force exerted by a user upon the pressure member 12, to transmit a resulting force to one or more switches 14 that causes actuation of one or more of the switches 14. The switches in the array can be arranged in a variety of different patterns (e.g. spaced evenly, spaced with different distances between switches so as to provide a different sensitivity to resulting forces applied at different locations on the pressure member 12, etc.), according to different embodiments of the invention.

A variety of alternative methods for securing the pressure member 12 are contemplated besides the method of holding the pressure member 12 in position above the switches 14 using a frame 18. Such alternative configurations are considered to be within the spirit and scope of the invention described herein. For ex ample, the pressure member 12 may be attached to a frame 18 or the circuit board 16 by a spring -loaded device that allows for depression of the pressure member 12 against the switch 14. In another example, rather than the frame 18 holding the pressure mem ber 12 in position, the pressure member 12 is permanently positioned by some method of attachment of the pressure member 12 to the switch(s) 14.

The system 100 also includes a control circuit 16, coupled to each of multiple switches 14 in such a manner that the control circuit 16, based on the switch 14 actuation(s), changes the system state (e.g. parameters, settings, operations performed, functions, data stored in memory locations, etc.). In turn, a media player, an audio system or other controllable dev ice can perform appropriate actions based on the translated system state.

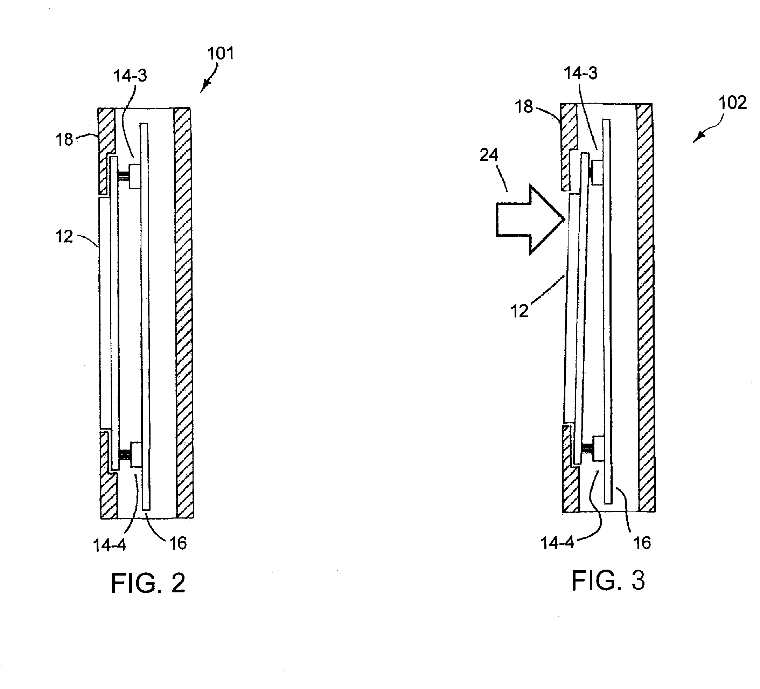

Fig. 2 shows a side view 101 of the pressure member assembly, according to one embodiment of the invention. Fig. 2 shows a side view of the system 100 including the pressure member 12, a frame 18 and two switches 14. The frame 18 holds the pressure member 12 in a position such that by exerting a force against the pressure member 12 a resulting force can be exerted upon the switch 14-3,14-4 that is located behind the pressure member 12.

Fig 3 shows a similar side view 102 of the system 100 including the pressure member 12, a frame 18 and two switches 14-3, 14-4. In contrast to Fig. 2, however, in Fig. 3 the user has exerted a force 24 upon the pressure member 12 at a location close to switch 14-3. In response to the exerted force 24, the pressure member 12 transmits a resulting force against the switch 14-3 causing the switch 14-3 to actuate. Accordingly, the user, by exerting a force upon the section of the pressure member 12 near by to the switch 14-3 associated with a desired control function, effectively selects the desired control function for operation. The control circuit 16 translates the switch 14 actuation occurring in response to the user's applied force into a circuit state for performing the desired control function.

The pressure member 12 may exhibit one or more different responses to the exertion of a force on the pressure member 12, depending upon the configuration of the pressure member 12, the number and locations of switches 14 and/or the configuration of the frame 18 and other components of the system. In one embodiment, exertion of a force on the pressure member 12 results in movement of the end of the pressure member 12 to which the force is being applied in the direction of the nearby switch 14, thereby causing a resulting force to activate the nearby switch 14. However, in an alternative embodiment, a section of the pressure member 12 bends in the direction of the nearby switch 14 such that only a portion of the pressure member 12 causes the resulting force to be exerted against the pressure member 12, in the area of the switch 14 affected. In one such example also, when the user exerts a force on the pressure member 12, the frame 18 holds the portion of the pressure member 12 not exposed to the exerted force from rising too far in the in the direction away from the switch 14 array and/or from falling out of position with respect the array of switches 14. In certain situations, depending upon the location of the force applied to the pressure member 12, more than one switch 14 may be activated.

In addition to the effect of the frame 18 on the movement, bending and other motions of the pressure member 12, fulcrums may also be located beneath the pressure mem ber 12 to localize the effect of forces exerted on the pressure member 12 and the resulting forces that cause switch 14 actuations, such that only limited number of section(s) of the pressure member 12 bend toward and activate switches 14 as a result of th e exertion of forces on the pressure member 12 by the user. The use of such fulcrums will be described in more detail later.

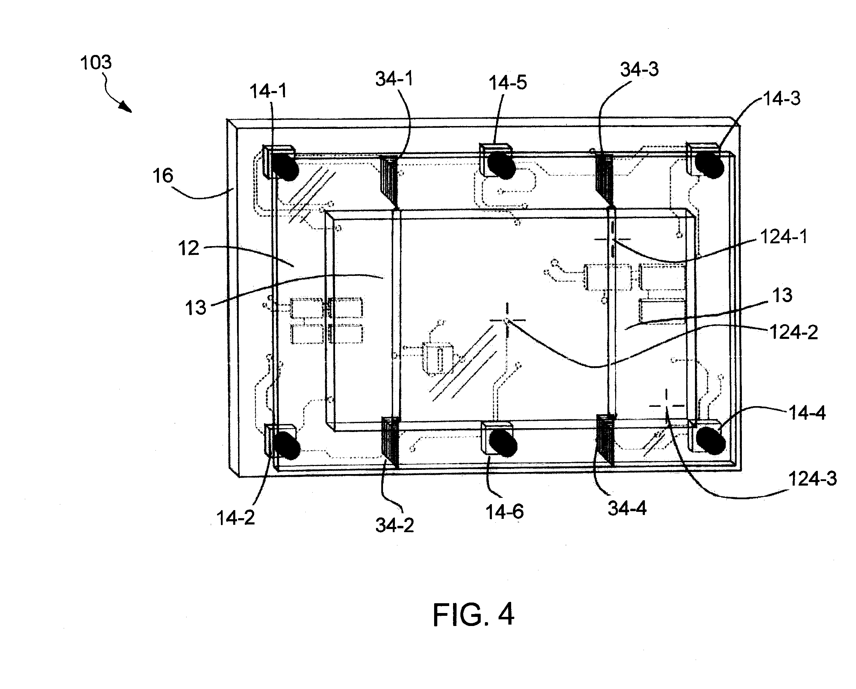

Fig. 4 shows an alternative embodiment 103 of the invention employing a fulcrum to focus the force applied to a section of the pr essure member 12 according to one embodiment of the invention. Fig. 4 depicts the system 100 without the frame 18 (i.e. for convenience of demonstration) but including a pressure member 12, four switches 14-1, 14-2, 14-3, 14-4, as described earlier and a control circuit 16. The pressure member 12 has groove(s) 13 (e.g. located near the fulcrum(s) ). Grooves are used to modify the local bending stiffness of the pressure member. Grooves may be formed by scoring the surface in a machining operation, or can be effectively formed by molding a part with a different sectional thickness in areas where it is desired to reduce the bending stiffness of the pressure member. In addition, Fig. 4 includes two additional switches 14-5, 14-6 and four fulcrums 34-1, 34-2, 34-3, 34-4. The fulcrums 34-1, 34-2, 34-3 and 34-4 support the pressure member 12 at various positions on the pressure member 12 located between various pairs of switches 14 -1, 14-5;14-2,14-6;14-3, 14-5; 14-4, 14-6 which are located at the ends and c enter of the pressure member 12. For example, fulcrum 34-3 provides physical support to the pressure element 12 at a position that is located between center-located switch 14-5 and corner-located switch 14-3. The fulcrums 34 focus the user forces, exerte d on the pressure member 12, to increase the likelihood of desired switch 14 actuations.

In one example, a force exerted on the pressure member near the fulcrum location 124-1 will not be transmitted to the end switch 14 -3 due to the support provided by th e nearby fulcrum 34-3. Accordingly, such a fulcrum reduces the likelihood that a user force, exerted in the area of the fulcrum 34-3, would cause switch actuation.

Conversely, in an alternative example, depicted in Fig 4, the force 124-2 exerted against the pressure member 12 at a position closer to the center switches 14 -5, 14-6 and away from the fulcrum 34-3 causes switch 14-5 and 14-6 actuations. Force 124-2 is less likely to result in a deflection of the pressure member in the vicinity of switches 14-3, 14-4, 14-1, or 14-2, due to the action of fulcrums 34. Force 124-2 causes the middle section of pressure member 12 to be deflected inward. Grooves 13 facilitate the bending of pressure member to allow this deflection, and the fulcrums cause the inward directed force 124-2 to cause outward deflection of the outside sections of pressure member 12, away from switches 14-1, 14-2,14-3, and 14-4. Equivalently, the force 124-3 exerted against the pressure member 12 at a position closer to the corner switch 14-4 causes actuation of the corner switch 14-4, and does not affect other switches. These examples demonstrate the way in which fulcrums 34, and fulcrums in combination with local variations in bending stiffness of the pressure member, focus forces on th e pressure member 12 in a manner that reduces the likelihood of unintended switch 14 actuations.

According to one embodiment of the invention, the shape, geometry, and physical properties of the pressure member 12 may be designed in such a manner as to ap propriately focus the movement and/or bending behavior of the pressure member 12 and, in turn, the resulting force exerted by the pressure member 12 on the switches 14. Grooves 13 in the pressure member 12 provide the appropriate variation in the bending stiffness of the pressure member 12 so that a user force, exerted in the appropriate section of the pressure member 12 causes the pressure member 12 to bend and generate desired switch 14 actuations. Scores, notches, bevels, thinning or other modifications of the pressure member 12, etc. may alternatively be added to provide such desired directional control.

The system is capable of differentiating between the application of forces to the pressure member in the vicinity of individual switches from the appl ication of forces to the pressure member spaced away from individual switches. In order to detect a force exerted on the pressure member 12 by the user in a location other than near a switch 14, the control circuit 16 identifies the existence of two or mo re switch 14 actuations as having come from such a center push or in -between push, etc., rather than having been generated by the user exerting the force to the pressure member 12 near one of the switches (e.g. near switches 14 - 1, 14-2, 14-3, 14-4 located at corners of the pressure member 12). Note that the use of fulcrums can modify the number of switches that may be activated due to the application of a force. For example, force 124-1 does not result in a switch activation due to the presence of fulcrums 34-3 and 34-4. If these fulcrums were not present, force 124-1 could result in as many as 4 switch activations. After the control circuit 16 detects any multiple switch 14 actuation, the control circuit 16 translates the multiple switch 14 actuations in to a circuit state for performing a desired control function. Also, such multiple switch 14 actuations may occur sequentially rather than simultaneously.

One method for detecting multiple switch actuations is the following. The method identifies essentially simultaneously switch 14 actuations, that is, switch 14 actuations that are either simultaneous or which occur within a short, predetermined time interval.

1. Switch 14 states from all switches 14 are logically OR'ed by the control circuit 16 to create a single actuation state. Accordingly, actuation of any switch 14 results in a single actuation state.

2. In response to a single actuation state, the control circuit 16 samples the state of each switch 14 to determine which switch 14 has been actuated .

3. The control circuit 16 enables a timer to monitor a switch 14 debounce period. The switch 14 debounce period is an elapsed time period during which any additional single actuation states are ignored. The debounce period is an adjustable parameter st ored in memory which is used by the software performing the detection of multiple switch actuations.

4. During this debounce period the control circuit 16 tests individual switch 14 states to identify multiple switch 14 actuations. Switch 14 states of any more than two switches 14 occurring during the debounce period represent simultaneous switch 14 actuations.

5. After the debounce period expires, if a single switch 14 state was detected, the control circuit 16 identifies a switch 14 identification of th e switch 14 experiencing the switch 14 state; if multiple switch 14 states were detected, the control circuit 16 identifies the existence of the center push or in -between push.

According to one embodiment of the invention, the system is configured to treat reception of a user input in the form of the center push or the in -between push as a distinct input (i.e. a separate input from those resulting from forces applied near the switch locations). In one embodiment, the system is configured to interpret the c enter push or in-between push as a command for a media player to operate in either "browse" or "standard" display mode. Details of the browse and standard display mode will be provided later.

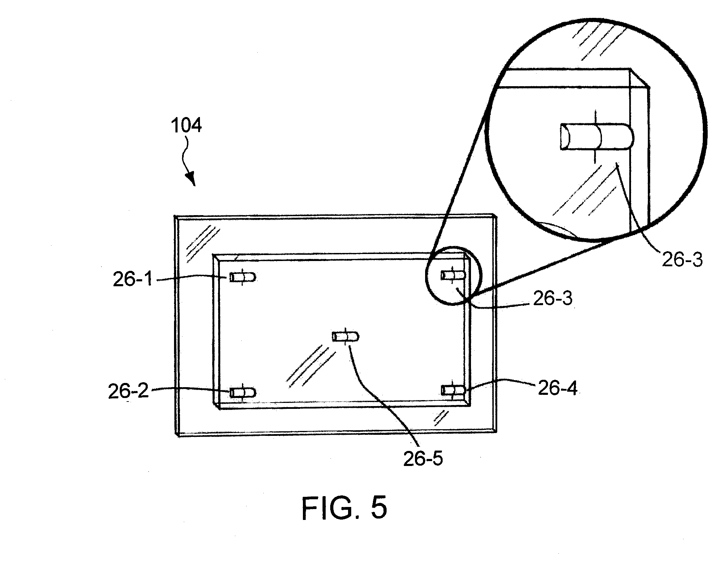

Fig. 5 depicts a pressure member 104 (e.g. 12) with raised tact ile feedback areas 26 (e.g. tactile elements), according to one embodiment of the invention. The "tactile element" (e.g. raised tactile feedback areas 26) provide the user with tactile feedback area 26 location points on the pressure member 12 for finding a desired section of the pressure member 12 at which to exert a force 24. Accordingly, the user can identify the tactile feedback areas 26 by feel, thus reducing the need to look at the pressure member 12. The location of the tactile feedback areas 26 may also be configured such that the tactile feedback areas' 26 location(s) on the pressure member 12 identify the optimal points for the user to exert the force 24 within any section of the pressure member 12. In other words, the tactile feedback areas 26 identify the location(s) at which the exertion of the user force 24 (i.e. to the pressure member 12) most effectively focuses the resulting force to activate an appropriate switch 14 or combination of switches 14 thereof.

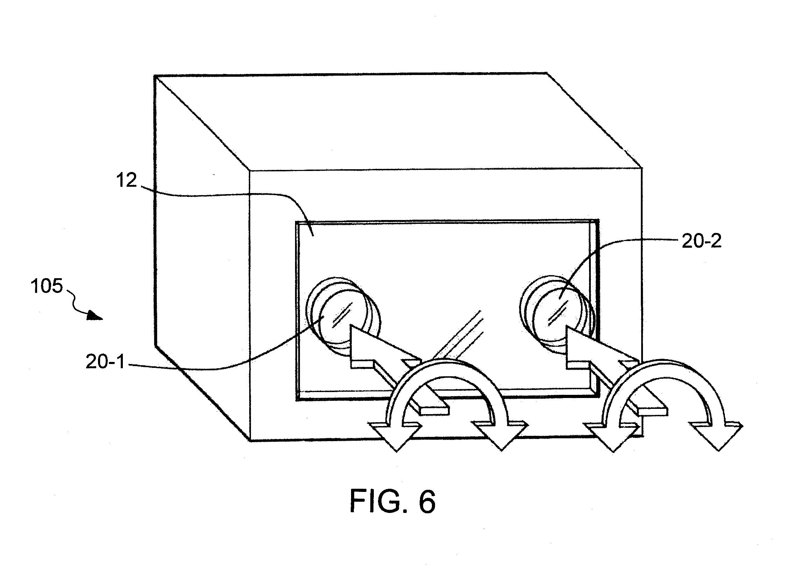

Fig. 6 shows two knobs 105 config ured to accept a user selection of the source, mode of operation (e.g. in the case of a media player), and/or media content items, according to one embodiment of the invention. The figure includes the pressure member 12, the first knob 20 -1 and the second knob 20-2. The first knob 20-1 and the second knob 20-2 may be mounted in different locations and/or ways according to different embodiments of the invention. According to one embodiment, the first knob 20-1 and the second knob 20-2 are mounted on the pressure member 12, itself. In other embodiments the first knob 20 -1 and the second knob 20-2 are mounted on a circuit board positioned beneath the pressure member 12. The first knob 20-1 and second knob 20-2 accept user inputs in the form of pressing and/ or rotating either knob 20. Such first knobs 20-1 and second knobs 20-2 can be conventional push/rotate analog or digital controls with knobs 20 attached to control shafts, appropriately configured for use as part of the invention, other control mechanism s providing the same control inputs or knobs 20 with mechanisms as described below.

Embodiments of the invention provide additional mechanisms and methods for accepting user input such as the manipulation of knobs 20. A knob 20 is configured to provide control based on two degrees of freedom of the knob 20. In one example, one degree of freedom of the knob 20 is based on the user pressing the knob 20; the second degree of freedom of the knob 20 is based on the user rotating the second knob.

In one embodiment, a colored light source, alphanumeric or graphic display is positioned beneath either of the first knob 20-1 and/or second knob 20-2 for the display of color cues through the first knob 20-1 and/or second knob 20-2 for observation by the user. Pressing of the first and second knobs 20 results in selecting different items that are configured to be selectable by the knobs 20, where colors visible through the first knob 20 -1 and second knob 20-2 are changed according to the items selected

In one embodiment of a media player, the first knob 20 -1 is configured to, as a result of the user pressing the first knob 20 -1, select the next source from a sequence of sources. For example, with respect to a list including sources ulndex™, AM, FM, Satellite Radio, CD, HD uMusic, DVD, etc. (e.g. in any order) if a currently selected source is AM (i.e. AM radio), by pressing the first knob 20-1, the user will cause the media player to switch to FM (i.e. FM radio), as described earlier. Wh en the user changes source by pressing the first knob 20 -1, a displayed color (e.g. color of the first knob 20 -1, LCD display, or any other particular visual display associated with the media player, etc.) identifies the source selected, for example, red for AM, blue for FM, green for CD's (i.e. compact disks). Each time the user presses the first knob 20-1 to change source, the color of the first knob 20 -1 changes.

The second knob 20-2 is also configured to accept user input. In response to the user pressing the second knob 20-2, the second knob 20-2 causes the next mode from a sequence of available modes to be operational. Mode selection for the second knob 20 -2 is based on a subset of available modes specific to each particular media content source. In other words, the second knob 20-2 is configured such that by pressing the second knob 20-2, the user selects among the mode alternatives defined for whatever source the user selected by the user's manipulation of the first knob 20-1.

As described earlier with respect to the first knob 20-1, operation of the second knob 20-2, in one embodiment, also incorporates providing audible and visual cues to confirm user selections to the user. In particular, with respect to the color coding displayed either o n the display or transmitted through the second knob 20 -2, one color scheme is to display different colors to represent modes of operation associated with the second knob 20 -2. An alternative color scheme uses different shades of the color displayed in as sociation with first knob 20-1 source selections to depict the second knob 20 -2 modes selected. Other color schemes and audible and/or visual cues are also feasible.

Finally, the second knob 20-2 is configured to also select a desired media content item from among multiple media content items in a list of available media content items. Accordingly, in response to the user selecting a particular mode, the second knob 20 -2 is configured such that rotating second knob 20-2 causes the media player to successi vely select different individual media content items from the available media content items. In one embodiment of the invention, the second knob is positioned in front of the display and the second knob accepts rotation by the user as a user input.

The sequence order of the media content item selections depends upon the mode selected (e.g. song, artist, genre, etc. order), as described later in more detail.

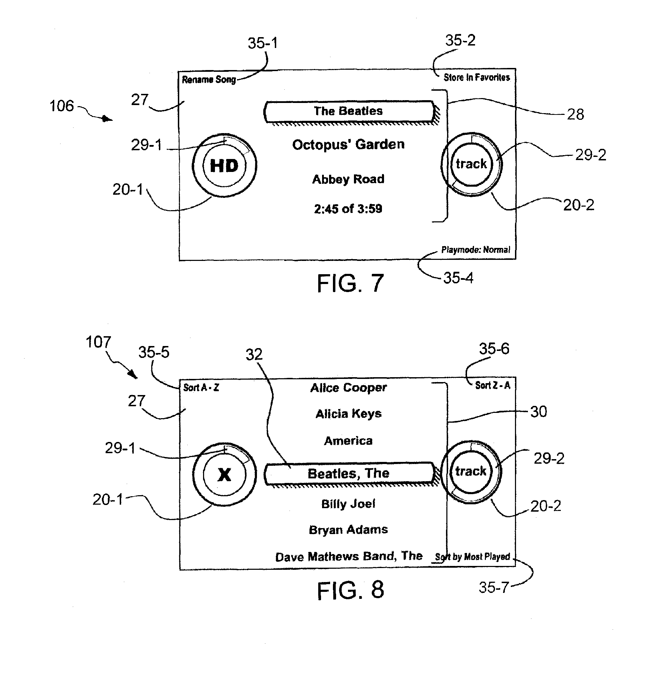

Fig. 7 shows a display 106 (e.g. 27) displaying a media content item selection 28 in standard mode, according to one embodiment of the invention. The figure includes a first knob 20-1 and second knob 20-2, options 35-1, 35-2, 35-4, a media content item selection 28 and a radial scroll bar 29. The first knob 20-1 and second knob 20-2 accept user inputs, as described above with respect to Fig. 6.

Fig. 7 depicts an alternative embodiment of the invention in which a clear or translucent first knob 20-1 and/or second knob 20-2 provide a visual cue with respect to the source and/or mode selected. For example, the first knob 20-1 may show the hard disk source as having been selected or alternatively show additional command options such as "X" (See Fig. 8) for "cancel" or "escape", or to display options such as selections/commands used as submenu options. In one such embodiment, the knobs 20 are mounted in front of the display such that letters displayed on the display screen are projected through the first knob 20-1 and/or second knob 20-2, as depicted with respect to the first knob 20 -1. For example, the display 16 shows that the "hard drive" is the selected source and that, as depicted with respect to the second knob 20-2, the selected mode is "track".

In addition, the display 27 displays options 35-1, 35-2, 35-4 (e.g. that project through a transparent pressure member 12) that coincide with available options for the selected source (e.g. hard disk, as depicted in Fig. 7). Notably, the display options 35-1, 35-2, 35-4 are spatially associated with the switches 14 that operate the options 35. The options are displayed such that when a user exerts a force on the pressure member 12 near the option 35, the switch 14 actuation resulting from the exertion of the force causes a system state to change that is related to the displayed option 35. Exemplary optio ns include: for uIndex™ Mode: search by song, reset search, search by artist, search by genre; for AM: add to presets; for FM: RDS Options, add to presets, continuous play; for satellite radio: add to presets, continuous play; for CD: name current, store C D, eject, play mode-current; for HD: rename song, store in favorites, play mode-current; for uMusic: plus more songs like this, minus less songs like this; for DVD audio track, subtitle, eject, display.

According to one embodiment of the invention, the fir st knob and/or second knob are configured to accept alternative sets of command options, such as options for mode selections and for sub-selections (e.g. sub-menus). The second set of alternatives (i.e. the sub-selections or sub-menus, etc.) may be automatically made available to the user after a pre-determined period of time, or the set of alternatives may be activated by a selection such as a pressure member 12 input, such as a fixed button, or other control, etc.

For example, in one embodiment, when a user wants to select a mode, the user first selects the mode (e.g. such as the title mode) by pressing the second knob 20 -2 until the title mode is selected. After 5 seconds, the system 100 automatically displays a sub -menu of title mode options such as: "sort a-z", "sort z-a", "sort by most played". In one such embodiment, the sub-menu of mode options is displayed from in the main display 28; alternatively, the sub - menu of mode options may be displayed as a set of pressure member 12 usable menu options. According to yet other embodiments, such a sub -menu of mode options may be selected by pressing a fixed button or other control device.

In another example, having selected an artist from a list of artists depicted in browse mode, multiple songs may, in the case of a popular artist, have been selected for the artist in question. Accordingly the system 100 provides the user with sub -menu options such as "by album", "by track", etc. by which the user can select specific media content item selections (e.g. "by album", "by track", etc.) from the list of available media content items for the previously-selected artist. Other such sub-menu option selections are also possible (e.g. source, mode, other commands, etc. sub -menu selections). As described earlier, in one embodiment, the system 100 is configured to automatically present the sub -menu options to the user after a predetermined elapsed time (e.g. 5 seconds). Alternatively a different user input device (e.g. such as a separate "touch screen", pressure m ember 12 or other user selection mechanism) may be provided to initiate presentation of the sub -menu options to the user.

According to one embodiment of the invention, upon selection of a source (e.g. by pressing the first knob 20-1 until the desired source has been selected), a mode (e.g. by pressing the second knob 20-2 until the desired mode has been selected) or a media content item (e.g. by rotating the second knob 20-2 until the desired media content item has been selected), the system 100 delays exec ution of the selection made until a predetermined time has elapsed. This avoids the problem of jumping from source to source, mode to mode or from performing multiple media content items as the first knob 20 -1 or second knob 20-2 is being repeatedly pressed or scrolled.

The media player display also shows a detailed or standard display 16 mode listing 28 of the selected media content item (e.g. the media content item that is playing) including, for example, such information as the name, artist and duration (e.g. The Beatles, Octopus' Garden, 2.45 of 3.59 min.).

Finally, the radial scroll bar 29-1, 29-2 provides a position indicator of a selection from the lists of sources, modes, content items, etc. by displaying, to the user, the relative position in such lists of the selected source, mode, or content item, etc.

Fig. 8. shows a display 106 (e.g. 27) displaying a list 30 of available media content items in browse display mode, according to one embodiment of the invention. The figure includes a first knob 20-1 and second knob 20-2, options 35-5, 35-6, 35-7, analogous to those described with respect to Fig. 7 and a list of available media content items 30. The list 30 of available media content items includes entries representing available media content it ems listed sequentially (i.e. in "artist mode" i.e. alphabetical order by artist), including media content items sequentially prior and subsequent to the selected media content item 32.

According to one embodiment of the invention, the system 100 is conf igured to treat reception of a user input in the form of the center push or the in -between push as a distinct input (i.e. a distinct input from the inputs resulting from forces exerted on the pressure member 12 near the switch locations). In one embodimen t, the system 100 is configured to interpret the center push or in -between push as a command for the media player to change operation between "browse" or "standard" display mode. In the browse display mode, a list of abbreviated media content item identifiers 30 is displayed to the user. For example, in the browse display mode the media content item artist names "Alice Cooper, Alicia Keys, America, Beatles and Billy Joel, etc." may be displayed to the user. If the user deselects the browse display mode in favor of the standard display mode by initiating a center push, the media player display instead shows more detailed information (See Fig. 7, 28) about the selected media content item 32 (e.g. the media content item that is playing) including, for example , such information as the name, artist and duration (e.g. The Beatles, Octopus' Garden, 2.45 of 3.59 min.). The browse display and standard display options operate within various source modes (e.g. artist, title, album, time, etc.).

In addition to the embodiments of the invention using a center or in-between push to select between browse and standard display mode, pressure member 12 forces and pushes can be designated to perform other functions, as well. For example, in one embodiment, the pressure member 12 is configured such that forces and/or pushes exerted on the pressure member 12 perform operations that were otherwise performed by knob 20 push operations as described below with respect to a first knob 20 -1 and second knob 20-1. According to other embodiments, the center push and/or in -between pushes may be configured to be treated as a modifier that causes a change in the available options of other controls (e.g. one or more of the knobs 20) in much the same way as a function or shift key operates on a computer keyboard. The pressure member 12 forces and/or pushes can be designated to other uses, as well.

Fig, 9 demonstrates an assembly of components 108 as described previously with respect to Figures 1 through 6, according to one embodiment of the invention.

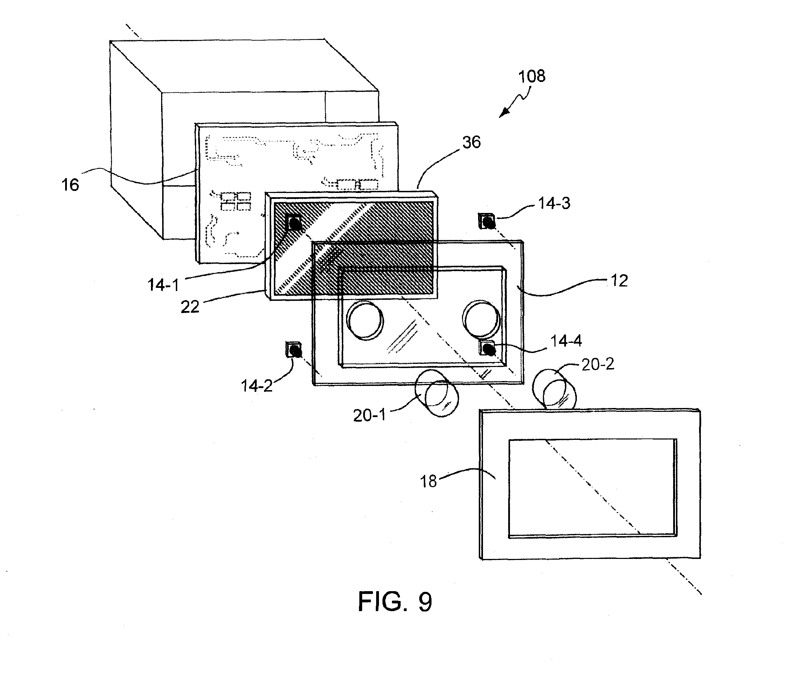

Fig. 9 includes the control circuit 16, the display 36, the switches 14 -1, 14-2, 14-3, 14-4, the pressure member 12, the first knob 20-1, the second knob 20-2 and the frame 18 combined in one physical unit. In this configuration, the control c ircuit 16 is mounted in the same enclosure as other components of the system 100. The control circuit 16 can be provided in various configurations including, among others, being mounted as a separate component of the system 100, being mounted in other loc ations such as in a separate enclosure, as part of a cable or other component, or performed as software functions on a computer, etc. The display 36, in this configuration, is mounted behind the pressure member 12. Accordingly, the pressure member 12 pro vides a protective shield for the display 36 (such as a fragile LCD display).

Alternatively, the display 36 could be mounted independently of the other components, such as in a separate location (e.g. mounted above the pressure member 12 such that options 35 displayed still show a spatial correspondence to the switches 14 that control the control functions). The display 36 could be mounted in other places, as well.

The pressure member 12, is located such that switches 14 are coupled to the pressure member 12. The switches 14 can be activated by a resulting force exerted upon the switch or switches 14 in response to the exertion of a force by the user upon the pressure member12. First knobs 20-1 and second knobs 20-2 may be mounted on the pressure member 12 or through holes/voids in the pressure member 12, as described above or in other alternative locations and ways. In one embodiment, the knob(s) 20 fit into a hole/void(s) in the pressure member 12 and the knob(s) 20 is held in place in the pressure mem ber 12 by a pressure pin or other similar device. The frame 18 is mounted in such a fashion that it holds the pressure member 12 in place with respect to the location of the switches.

Although Fig. 9 depicts a configuration of the invention combining the pressure members and knobs along with the display operating within the same physical device, alternative configurations employing individual components are also feasible. For example, one embodiment may only include the pressure member 12 mounted on switc hes 14 capable of accepting user input by pressing the pressure member 12. Alternatively, in another configuration, only the first knob 20-1 and/or second knob 20-2 are provided in order to provide those features corresponding to the knobs. Various other embodiments of the invention, based on alternative combinations of the components described herein, are also contemplated as being within the scope of the invention.

Fig. 10, 11 and 12 depict alternative configurations (i.e. 109, 110, 111) of the knobs 14 used to accept user input, according to various embodiments of the invention. In particular, the three embodiments depicted provide mechanisms for accepting a user input that do not interfere with the line of sight for color or other cues (e.g. alphanume ric display) that shine through the back of either the first knob 20-1 and/or the second knob 20-2 for viewing by the user. In certain configurations, the pressure member 12 may be opaque in the location in front of the mechanisms, so as to hide the mecha nisms from the view of the user. One embodiment of the invention comprises one or more transparent knobs 20 positioned over the pressure member 12 and the display 27 in such a manner that the user can observe selection options on the display 27 in order t o make user selections by rotating a knob 20 (e.g. first knob 20-1 or second knob20-2) and/or by pushing the pressure member 12.

Fig. 10 includes a first drive gear 40-1 for the first knob 20-1 and a second drive gear 40-2 for the second knob 20-2. Each drive gear 40 is driveably coupled to the corresponding knob 20 (e.g. gear coupling, friction coupling, belt, etc.) such that rotating the first knob 20 -1 and/ or the second knob 20-2 causes rotating in each respective drive gear 40, that in turn operates a rotary control (e.g. a potentiometer, rotary digital encoder, etc.) mechanism of the media player or other controllable device.

Fig. 11 depicts an alternative arrangement using a pulley 42 and belt 44 according to one embodiment of the invention. Each pu lley 42 is driveably coupled via the belt 44 to the corresponding knob 20. In turn, the pulley 42 operates a rotary control (e.g. a potentiometer, rotary digital encoder, etc.) mechanism of the system 100.

Fig.12 depicts an arrangement using infra -red detector circuits 46 and corresponding edge-striped knobs 20. According to the embodiment depicted in Fig. 12, the infra-red detectors detect changing infra-red light reflected from stripes on the first knob 20-1 and/or the second knob 20-2. In turn, the control circuit 16 converts a signal created by the infra-red detector circuits into control signals (e.g. to change a system state) to control the system 100. The benefit to this arrangement is that no mechanisms for coupling knobs to control devices are visible to the user, or cover sections of the display.

Each drive mechanism described in Figs. 10, 11, 12 (i.e. gear drive 40, pulley 42 and/or infrared detector circuit 46) is positioned near the outside edge of the pressure member 12. Accordingly, the rear side of the first knob 20-1 and/or second knob 20-2 are left free from obstruction for the transmission of light and/or color through the first knob 20-1 and/or second knob 20-2. Accordingly, in one embodiment of the invention a light source projects colored light through a clear or translucent first knob 20 -1 and/or second knob 20-2 in order to provide a visual cue with respect to the source and/or mode selected, as described earlier.

Having described the system 100 for accepting user input, the fo llowing describes a procedure for accepting user input.

Fig. 13 is a flow chart 112 of a procedure for accepting a user input, according to one embodiment of the invention.

In step 210, the system 100 displays a set of menu options on a display 16 to pro mpt for a user selection. Various different mechanisms for displaying the set of options are feasible. For example, such display mechanisms may include video and cathode ray tube (CRT) monitors, liquid crystal display (LCD), plasma display, digital read out devices, etc. mounted behind the pressure member 12, in a nearby location, or elsewhere.

In step 212, the system 100 detects a switch 14 actuation, in response to a force 24 exerted by the user on a section of the pressure member 12. Sections of the pressure member 12 are associated with menu options from the set of options displayed in step 210. The media player uses the switch 14 actuation to enact the user's desired activity (e.g. selection of a particular media content item, enacting a system com mand, etc.). The switch 14 actuation is the switch 14 actuation caused by the user's choice of the section of the pressure member 12 on which the user exerts a force.

The multiple (e.g. array) of switches 14 are coupled to the pressure member 12 so that one or more of the switches 14 are able to be activated depending upon which section of the pressure member 12 the user exerts a force. For example, assume that menu option one is "Rename Song" and menu option two is the "Store in Favorites". The user can select "Store in Favorites", for example, by exerting a force to a section of the pressure member 12 associated with (i.e. near, in an analogous position, etc.) the switch 14 -3 that translates the switch 14-3 actuation to a system state. The system state, in turn, causes performance of a function defined by menu option 2 (e.g. "Store in Favorites").

In step 213, the control circuit 16 sets a debounce timer, used to measure an elapsed time period starting from the time of the first switch 14 actuation for a predetermined debounce period. The debounce period is an adjustable parameter stored in memory, during which period any additional switch 14 actuations will be considered to have been part of a multiple switch 14 actuation. During the debounce period, the control circuit 16 tests individual switch 14 states to identify multiple switch 14 actuations.

In step 214, the control circuit 16 provides a confirmation (audible, visual, tactile, as well as changes in color, etc.) in response to the exertion of th e force to the section of the pressure member 12, by the user. For example, in one embodiment, the system plays a familiar "click" to confirm the switch 20 actuation, in response to the user input

In step 216, the control circuit 16 determines which switc h 14 has been activated.

In step 218, the control circuit 16 continues to periodically test switches 14 in order to determine which additional switches 14 are activated, if any. The control circuit 16 continues checking for additional switch 14 actuations (See steps 222, 224) until the expiration of the debounce time period.

In step 220, if the control circuit 16 has detected multiple switch actuations, the system state is changed according to the identified center push. If multiple switch activations hav e not been detected, the system proceeds to step 222.

In step 222, the control circuit 16 checks the elapsed time remaining on the debounce timer. Step 222 and the step of checking to see if the debounce timer has expired (i.e. step 224) are repeated until the debounce timer expires. Once the debounce timer has expired (e.g. without the occurrence of additional switch 14 actuations) the control circuit 16 determines that only one single switch 14 actuation has occurred. Accordingly, in step 226, the control circuit 16, changes the system state in accordance with the single switch actuation detected. In turn, the media player or controllable device uses the system state as the basis for conducting a control operation.

Fig. 14 is a flow chart 113 of a proc edure for operating a media player according to one embodiment of the invention. The procedure describes the process of first selecting a source then selecting the appropriate mode of operation of the media player followed by the user selecting the desired content item.

In step 230, the system 100 detects the first knob 20 -1 push (i.e. second degree of freedom) by the user in order to select a source of the media player. The system 100 detects repeated user presses of the first knob 20-1 thereby cycling to subsequent next sources in a sequence, namely: ulndex™, AM radio, FM radio, satellite radio, compact disk, hard drive, uMusic, digital video disk (DVD), etc.

In step 232, the source is changed. For example, the first knob 20 -1 push may switch from the uIndex™ source to the AM radio source. Upon pressing the first knob 20 -1, the source may immediately switch to the newly selected source (i.e. AM) and the media player begins to provide media content from the new source. According to another embodiment, there is a delay from the time that the user pushed the first knob 20 -1 (e.g. thereby selecting the next source in a sequence) to the time that the system 100 starts playing media content from the new source which reduces the effect of thrashing through multiple sources in succession.

In step 234, confirmation to the user of the change is made and the display is updated. The system 100 provides visual and/or auditory confirmation of the source selected such as displaying colors from the first knob 20-1, from the display 27, playing an audible click, etc. as described earlier.

In step 236, the system 100 determines if the desired source has been selected. The user moves on to select mode the (See Step 238). If the correct source hasn't been selected step 230 - 234 are repeated.

In step 238, the system 100 detects the second knob user press (i.e. first degree of freedom) selecting from among the available modes for the current source (i.e. the source selected by the first knob 20-1 press) including: uSearch mode(s): select letter; AM radio modes: seek, tune, presets; FM radio modes: seek, tune, station, presets, artist, song, genre; satellite radio modes: station, presets, artist, song, genre/category; compact disks modes: genre, artist, song, track, time (fast forward/rewind); hard disk modes: artist, song, album, time (fast forwarding/rewind); uMusic modes: track, time (fast forward/read write); DVD mode: chapter.

In step 240, the mode is changed.

In step 242, the system 100 provides visual and/or audito ry confirmation of the mode selected such as displaying appropriate colors from the second knob 20 -2, from the display 27, displaying different shades of the color used to confirm source selections on either the second knob 20-2 and/or the display 27, etc.

In step 244, if the correct mode has been selected, the user continues to the next step. If the correct mode has not been selected, steps 238 - 242 are repeated until the correct mode is selected.

In step 246, the system detects a second knob rotation t o select a media content item.

In step 248, the system 100 selects a desired media content item from among multiple media content items in a list of available media content items. The selected item is displayed, and the system may begin playing the item. According to one embodiment, there is a delay from the time that the user selects the media content item to the time that the system 100 starts playing the media content which reduces the effect of thrashing through multiple media content items in succession.

In step 250, if the desired media content item has been selected, the process ends. If the desired media content item has not been selected, the user repeats steps 246-248 until the desired item has been selected.

Fig. 15 shows detail features of a control mechanism 114 configured to detect knob 20 rotation, according to one embodiment of the invention.

The figure shows the optically transparent member 12, two knobs 20 -1, 20-2 affixed to the optically transparent member 12, multiple instances of reflective surface 48-1, 48-2 attached to each of the circumferences of the knobs 20 -1, 20-2, two sets of optical receivers 51-1, 53-1 and 51-2, 53-2, light 54-2 directed toward a knob 20-1 by the light source 52-1, light 54-1, 54-3 reflected by the reflective surface 48-1, a display 36, an optical coating 37 on the display 36 and extraneous light 55.

In addition to the acrylic and plastic materials, mentioned previously, the optically transparent member 12 and/or the knob 20 -1 may be made of polycarbonate, cyclic olephins, thermoset materials, or other materials.

Multiple knobs 20 used in a media player or other electrical device operate in a similar fashion, except that the knobs 20 provide user input with respect to different control functions. Embodiments of the invention may be configured so as to have two optical receivers 51 -1, 53-1. Each individual optical receiver 51 -1, 53-1 can operate so as to detect light 54 -1, 54-3, reflected by the reflective surface 48 -1. The detected light 54-1, 54-3 is representative of user rotation of the knob 20-1. Used in combination with logic circuitry (e.g. and other operational circuitry, as will be described later, all functioning as part of the circuit 46), the two optical receivers 51-1, 53-1 also identify direction of the knob 20-1 rotation.

According to one embodiment of the invention, the at least one optical receiver 51 -1, 53-1 (hereafter referred to as the optical receiver) is a detector such as a semiconductor device configured to normally output a logic hig h output (e.g. 5 volts, 3.3 volts, or any other commonly used logic reference voltage level). When the optical receiver 51 -1, 53-1 senses the light 54-1, 54-3 reflected by the reflective surface 48-1, the optical receiver 51-1, 53-1 output transitions to a low output (e.g. 0 volts). Alternatively, the semiconductor device (i.e. optical receiver 51-1, 53-1) may be configured to operate in a normally low state and transition to a high state upon detection of light 54-1, 54-3 by the optical receiver 51-1, 53-1.

The optically transparent member 12 may be the same component, providing the same functions (i.e. the function of accepting user input in the form of a force exerted by the user on the pressure member) as a pressure member, described earlier. It is po ssible, also, according to other embodiments of the invention, for the optically transparent member 12 to be configured in such a fashion as to not provide the functions of the pressure member. The optically transparent member 12 may, according to various alternative embodiments of the invention, have various shapes, forms or compositions. According to one embodiment, the optically transparent member 12 is a clear sheet of plastic, such as for example, a sheet of acrylic plastic.

According to one embodi ment of the invention, a display 36 (e.g. liquid crystal display (LCD), thin film transistor (TFT), plasma or other video display, etc.) may be positioned in the area behind the optically transparent member 12 such that the display 36 can be viewed by the user through the optically transparent member 12. As described earlier, the display 36 may display user options, menu options, etc. or other content such as video content, etc.

The knob 20-1 is rotationally coupled to the optically transparent member 12, as will be described in more detail later. The knob 20-1 is rotatable by a user. Accordingly, by rotating the knob 20-1, the user is able to perform control selections. According to one embodiment of the invention, the knob 20-1 is constructed of transparent material such that the display 36, positioned behind the optically transparent member 12, shows through the knob 20 -1. For example, the display 12 may be configured to show, in the middle of the display 12, a list of compact disk (CD) tracks availab le to be played on an audio player and/or configured to show, at the position behind the knob 20-1, an alphanumeric symbol or icon signifying that the audio player is operating in the CD mode. According to one embodiment of the invention, the knob 20-1 surface area comprises a transmissive material capable of projecting the portion of the display positioned in the area behind the optically transparent knob on the top surface of the knob 20-1. The knob 20-1 may also be configured with detents that provide the user with feedback of the nature of a physical and/or audible "click" at points representing different input selections along rotation of the knob 20-1.

Attached to the knob 20-1 are alternating bands of reflective surface 48-1 and non-reflective surface. The bands of reflective surface 48-1 and non-reflective surface are arranged around the circumference of the knob 20 -1 such that as the user turns the knob 20-1 into a particular position, light 54-2 (e.g. infrared light) that is emitted by the light source 52-1 in the direction of the knob 20-1 is reflected by a band of reflective surface 48 -1 back toward at least one optical receiver 51-1, 53-1. The light source 52-1 continually emits a modulated pulse train. Although the light source 52 -1 may, in some configurations, provide a wide beam of light 54-2, Fig. 15 shows a line representing the most direct beam of light 54 -2 that is reflected by the reflective surface 48-1 to either of the optical receivers 51-1, 53-1.

As will be described in more detail later, the circuit 46-1 converts the changes in light 54-1, 54-3 detected by the optical receiver 51 -1, 53-1 into control signals. In effect, the changes observed in the light 54-1, 54-3 that is reflected toward the optical receiver 51 -1, 53-1, as the result of the reflective surface 48-1 on the knob 20-1 changing position, are converted into a control signal that is representative of the rotation of the knob 20 -1.

According to one embodiment of the invention, the alternating bands of reflective surface 48-1 and non-reflective surface are affixed around the circumference of the knob 20 -1 at a distance from the end of the knob 20-1 that coincides with the location of the optically transparent member 12. Accordingly, the light 54 -2 emitted by the optical light source 52-1 is directed transversely through the optically transparent member 12 toward the alternating reflective surfaces 48-1 that are located in a position on the knob 20-1 such that the alternating bands of reflective surface 48 -1 and non-reflective surface are inconspicuous or even invisible to the user. Since the optically transparent member 12 and/or the knob 20 -1 may be transparent, the knob 20-1 mounted on the optically transparent member 12 appears to operate without the use of either mechan ical or electromechanical transducers or drive mechanisms, thereby providing a striking stylistic feature.

Other detector/sensor/circuit configurations are also possible that provide the functions of detecting light 54-1, 54-3 directed from a light source 52-1 to optical receivers 51-1, 53-1 by the optical surface 48-1 (i.e. that is affixed to a knob 20-1, the knob 20-1 coupled to an optically transparent member 12) in a fashion that provides outputs capable of driving control circuitry. These configurations are considered to fall within the scope of the invention described herein.

The details of the operation of one of the knobs 20-1 and associated components are described herein by way of example, and also apply with respect to the second knob 20 -2 or other additional knobs, etc.

One or more of several different techniques may be employed to isolate the optical receiver 51-1, 53-1 from receiving light generated by unintended sources that might result in undesired control signals or otherwise interfere with normal operation of the optical receivers. According to one such technique, an optical coating 37 is applied to the optically transparent member 12 to block transmission of light from extraneous sources of light 55 to the optical receiver 51-1, 53-1. The optical coating 37 on the optically transparent member 12 reduces the transmission of electromagnetic energy in at least a region of the electromagnetic spectrum that is the same region of the electromagnetic spectrum in which the optical light source 52-1 outputs light directed toward knob 20-1.

For example, sunlight 55 originating from outside the media player case pointed toward the optical receiver 51-1, 53-1 may be blocked by the optical coating 37 applied to the optically transparent member 12. Alternatively, an optically transparent member 12 may have a polarizing layer that selectively blocks undesired light 55 from reaching the optical receiver 51 - 1, 53-1. Therefore ambient light reaching the optical receiver 51 -1, 53-1 only has energy in the passband of the optical coating.

Improved detection of light output from light source 52 -1 in the presence of unintended sources of light 55 can be obtained by modifying the light 54 -2 transmitted by the light source 52-1 in such a fashion that makes it distinguishable from other light 55 (e.g. extraneous light from other sources such as room light, sunlight, etc.) received by the optical receiver 51 -1, 53-1. Accordingly, light 54-2 may be modulated and later de-modulated in such as fashion as to be distinguishable from other undesired sources of light.

Fig. 16 shows a block diagram depicting an apparatus for transmitting light, according to one embodiment of the invention. The apparatus includes a modulator 57 -1, a light source 52-1, two optical receiv ers 51-1, 53-1, two demodulators 58-1, 59-1 and a logic device 60-1.

Accordingly, modulator 57-1 first modulates a signal, which, in turn is applied to the light source 52-1. Modulation imparts a predetermined time varying structure onto the signal applied to the light source (e.g. a pulse train of a certain frequency, such as 40 Hz). The light source 52-1 then generates a modulated light output 54 -2. The signal may be further encoded in any of a variety of ways if desired, such as for example, by a puls e code length (e.g. RECS 80, RC5, etc.) or other scheme. The modulated light 54 -2 is then transmitted by the light source 52-1 to the first optical receiver 51-1, for example, via reflection by the reflective surfaces 48-1.

The optical receiver 51-1, 53-1 outputs a signal representing the intensity of all light received, including modulated light 54 -1, 54-3 and ambient light, to the demodulator 58 -1 for demodulation. If an optical coating is applied to the optically transparent member 12, then the ambient light that impinges on the optical receiver 51 -1, 53-1 via transmission through the optically transparent member 12 will only have energy in the passband of the optical coating (e.g. optical filter coating). If an optical filter is placed in front of the optical receiver 51-1,53-1, then all light that reaches the optical receiver 51 -1, 53-1 will only have energy in the passband of the optical filter.

The output of the optical receiver 51-1. 53-1 is an electrical signal representative of the time varying intensity of light that impinges on it. The demodulator 58 -1 receives the signal output of the optical receiver 51-1, 53-1 and looks for the presence of the modulated signal. The demodulator outputs a signal representative of whether or not a modulated signal is present at its input. This signal represents the conditions of light being reflected off reflective surfaces of knobs 20 or not. A logic device 60-1 compares the outputs of demodulators 58-1 and 59-1 to determine the direction of rotation of knobs 20. The logic device 60-1 further associates direction of rotation with a desired control function to enact circuit -controlled actions such as changing volume, changing modes or implementing user selections, etc. The logic device 60-1 and control ci rcuit 46 may be part of the same circuitry or separate circuits.

An additional function performed by the optically transparent member 12 (e.g. simultaneously performing the functions of the pressure member 12, as described above) is for the optically trans parent member 12, upon the exertion of a force on the knob 20 by a user, to transmit a resulting force to one or more switches 14 associated with a desired control function.

For example, a user desiring to change a mode of operation of a media player fro m CD mode to FM mode presses the left knob 20-1 on the media player. The force exerted by the user on the knob 20-1 is, in turn, transmitted to the optically transparent member 12. Because of the location of the knob 20-1, mounted on the left side of the optically transparent member 12, the force applied to the optically transparent member 12 causes the activation of two switches 14-1, 14-2 on the left side of the optically transparent member 12 (i.e. pressure member). In turn, the system for accepting a user input 100 interprets the activation of the two switches 14-1, 14-2 as being a user control input for changing from CD to FM mode.

The apparatii and methods described for the control mechanism described herein are particularly useful for controlling operations of a media player in motor vehicles.

Fig. 17 depicts a side view 116 of the optically transparent member 12 having an optical coating 37, and display 36 having an optical coating 38, according to one embodiment of the invention.

The figure shows the optically transparent member 12, the knob 20 -1 (shown as the left hand knob 20-1 by way of example) of a multi -media player (e.g. or other device), the knob 20-1 having multiple instances of reflective surface 48 attached to the circumference of t he knob 20-1), two optical receivers 51-1, 53-1 and light 54-1, 54-3 initially directed from the light source 52-1. As described in more detail earlier, light 54-1, 54-3 reflected by the reflective surface 48-1 is detected by a first and/or second optical receiver 51-1, 53-1 and converted by a circuit 46-1 into the control signal.

Fig. 17 shows a optical coating 37 on the optically transparent member 12 capable of blocking extraneous light 55 from being transmitted into the optically transparent member 12 and toward one of the optical receivers 51 -3, 53-1 that would otherwise cause either generation of un-intended control signals or "swamping" of the optical receiver 51 -1, 53-1 with excessive light.

In addition, the display 36 also has an optical coating 38 capable of blocking transmission of light in an undesired frequency range by the display 36 toward the optical receivers 51-1, 53-1. As described with respect to the optical coating 37 on the optically transparent member 12, such blocking of undesired light from the display 36 reduces possible generation of un-intended control signals or "swamping" of the optical receiver 51 -1, 53-1 that could otherwise make the optical receiver 51-1, 53-1 and/or the optical receiver-related circuitry 46-1 inoperable. It should be noted that use of coatings is optional, and may not be required in all applications.

For example, if the optical sources 52-1,52-2 were chosen such that the spectrum of their light output does not overlap significantly with the spectrum of t he light output of the display 36, the optical coating 38 would no longer be necessary or useful and could be omitted. If an embodiment of the invention is employed in an environment where extraneous sources of light do not have appreciable energy in the frequency range of the light output of sources 52-1, 52-2, the optical coating 37 could be omitted. Alternatively, modulation techniques could be employed that would be sufficient to allow discrimination of the light output from sources 52-1, 52-2 from the light generated by extraneous sources of light.

In addition to options of providing optical coatings 37, 38 on either the optically transparent member 12 or the display 36, other alternatives are available for blocking extraneous light 55 according to ot her embodiments of the invention. For example, optical coatings may be applied to the optical receivers 51 -1, 53-1 to block the extraneous light 55 from impinging on the receivers. Also, dyes may be added into the optically transparent member 12 during fabrication, capable of blocking extraneous light from being transmitted within the optically transparent member 12 to the optical receivers 51 -1, 53-1.

Fig. 18 depicts a side view 117 of an arrangement of components 117 configured to detect the rotation of a knob 20, according to one embodiment of the invention.

Fig. 18 includes the optical light source 52-1, the optical receiver 51-1, 53-1, light 54-2 directed by the optical light source 52-1 toward the knob 20, light 54-1, 54-3 reflected by the reflective surface 48-1 toward the optical receiver 51 -1, 53-1, the optically transparent member 12 and the knob 20-1. Attached to the circumference of the knob 20 -1 are a friction sleeve 61 and a capture member 62.

According to one embodiment of the invention, the knob 20-1 is affixed to a void in the optically transparent member 12 in such a fashion that the knob 20 -1 is held in place on the optically transparent member 12 and is rotatable by the user. A friction sleeve 61 fits over the knob 20-1 encircling the circumference of the knob 20-1. The inside of the friction sleeve 61 attaches to the knob 20-1; the outside of the friction sleeve 61 slides against the inside of the void (e.g. circular hole) in the optically transparent member 12 thereby allowing the knob 20-1 to rotate. At the rear end of the knob 20 -1 a capture member 62 is attached to the knob 20-1 in such a position on the knob 20-1 that the capture member 62 holds the knob 20-1 to the optically transparent member 12 from behind the optically tra nsparent member 12 so that the knob 20-1 will not slide off the optically transparent member 12.

Fig. 18 shows the optically transparent member 12 and the optical receiver 51 -1, 53-1 positioned in locations relative to the optically transparent member 12 s o as to permit transmission of light 54-2, 54-1 transversely through the optically transparent member 12. The optical receiver 51-1, 53-1 detects the light 54-2 from the optical light source 52-1 that is reflected toward the optical receiver 51-1, 53-1 by the one of the bands of the reflective surface (See Fig. 15) 48-1.

Fig. 19 depicts positioning of the light source 52-1 with respect to the optical receiver 51-1, 53-1 such that the transmission of light 54 -1 between the light source 52-1 and optical receiver 51-1, 53-1 is other than through the edge of and transversely through the optically transparent member 12, according to one embodiment of the invention.

Fig. 19 shows the same components 118 as described with respect to Fig. 18 except that the optical ly transparent member 12 is configured such that transmission of light 54-1 and 54-2 (e.g. and 54-3 as depicted in Fig. 15), according to one embodiment of the invention, between the light source 52-1 and optical receiver 51-1, 53-1 is not transmitted transversely through the edge of the optically transparent member 12. As depicted in the figure, by way of example, the path of light 54-2 from the light source 52-1 to reflective surface 48-1 on the knob 20-1 is such that the light source 52-1 is located beneath the rear surface of the optically transparent member 12. The reflective surface 48-1 is directed at such an angle that the reflective surface 48-1 reflects the light 54-2 toward the optical receiver 53-1 also located behind the rear surface of the op tically transparent member 12.

According to another embodiment of the invention, the rear end of the knob 20 -1 and the attached bands of reflective surface 48 -1 extend beyond the rear surface of the optically transparent member 12.

According to another embodiment in which the display 36 (See Fig. 15) is positioned behind the optically transparent member 12, the (1) optical light source 52 -1, (2) alternating bands of the reflective surface 48-1 and non-reflective surface, and/or (3) the optical receiver 51-1, 53-1 are positioned such that the path of the light traveling between the optical light source 54-2, alternating bands of the reflective surface 48 -1 and non-reflective surface, and/or (3) the optical receiver 51-1, 53-1 is located partially or wholly in a space between the transparent member 12 and the display 36.

Fig. 20 depicts an arrangement 119 of knobs 20 attached to the optically transparent member 12 showing interconnection of the knobs 20, friction sleeves 61 and capture members 62 according to one embodiment of the invention.

Accordingly, the friction sleeve 61-1 (as described with respect to a first knob 20 -1) is fixed to the knob 20-1. The friction sleeve 61-1 is configured with a multiple of bands of reflective surface 48-1 and a surface or surfaces around the outer edge of the friction sleeve 61-1 to allow the knob to slide within the hole (i.e. allow the knob rotate in a void) within the optically transparent member 12. Attached to the knob 20 -1, behind the optically transparent member 12, is a capture member 62-1 for holding the knob 20-1 in position within the hole in the optically transparent member 12. In a configuration comprising two knobs 20 -1, 20-2, such as the example depicted in Fig. 19, an additional set of components (i.e. knob 20-2, friction sleeve 61-2 and capture member 62-2 are assembled and operate in an analogous manner).

Fig. 21 shows a side view 120 of two knobs 20-1, 20-2 attached to the optically transparent member 12 according to one embodiment of the invention. Also included are friction sleeves 61-1, 61-2 and pressure members 62-1, 62-2.

Described here with respect to a single knob 20 -1, the friction sleeve 61-1 is affixed to the circumference of the knob 20-1, thereby providing a friction surface (i.e. the fri ction sleeve is in contact with the optically transparent member 12). The friction surface slides rotatably within a holding mechanism that is associated with the optically transparent member 12 (e.g. a holding mechanism such as a hole or a void) enabling the knob 20-1 to rotate either clock-wise or counter-clockwise. However, the friction sleeve 61 -1 is configured such that there is a gap between the portion of the knob 20-1 with reflective surfaces attached and the optically transparent member 12. The friction sleeve is constructed (e.g. or coated) with low-friction material such as, for example, polytetrafluoroethylene (PTFE, otherwise known as Teflon®).

In addition, the capture member 62-1 is positioned on the circumference of the knob 20-1. The capture member 62-1 is attached to the knob 20-1 and from that position applies a positioning pressure to the rear side of the optically transparent member 12 in order to hold the knob 20-1 in a position relative to the optically transparent member 12 (i.e. holds the knob 20-1 in a position within the void of the optically transparent member 12).

The second knob 20-2 and associated components operates in an analogous manner.

Fig. 22 is a depiction 121 of a knob 20 with bands of reflective surface 48 attache d to the circumference of the knob 20 according to one embodiment of the invention. The figure also includes a friction member 61.

The figure shows one embodiment of the invention in which the bands of reflective surface 48 are attached to the friction sleeve 61 which is attached to the circumference of the knob 20. The bands of reflective surface 61 are attached in areas of the friction sleeve 61 where there is a gap between the friction member 61 itself and the edge of the optically transparent member 12 (i.e. within the void of the optically transparent member 12 wherein the knob 20 is held).

Other configurations of the embodiments of the invention are also possible. For example, according to one embodiment, rather than attach the reflective surfaces 48 within gaps on the friction member 61, the reflective surfaces 48 are attached to an additional ring affixed to the knob 20 or to the knob 20 itself (e.g. in the case of either attaching the reflective surfaces 48 to an additional ring or to the knob 2 0 itself, a gap is provided between the reflective surfaces 48 and the position of the optically transparent member 12) rather than the friction member 61. Additional alternative configurations are also possible.

Fig. 23 demonstrates the detection of a kn ob 20-1 rotation in a first direction 57 by a first optical receiver 51-1 and a second optical receiver 51-3 according to one embodiment of the invention.

Shown in the figure are five different depictions (132 -1 to 132-5) of light 54-2 directed toward a knob 20-1 having reflective surfaces 48. The depictions (132-1 to 132-5) show different exemplary rotational positions of the knob 20 -1 which demonstrate, in order, (1) no reflection of the light 54-2 by reflective surface 48 (132-1), (2) reflection of the light 54-1 by a first reflective surface 48-1-1 toward the first optical receiver 51-1 (132-2), (3) reflection of the light 54-1, 54-3 by the reflective surface 48-1-1 toward both the first optical receiver 51-1 and the second optical receiver 53-1 (132-3), (4) reflection of the light 54-3 by the reflective surface 48-1-1 toward the second optical receiver 53-1 (132-4) and finally, (5) no reflection of the light 54-2 by the reflective surfaces 48 (132-5).

When detection by the first optical receiver 51 -1 of light 54-1 reflected from one of the bands of the reflective surface 48-1-1 is followed by detection by the second optical receiver 53-1 of light 54-3 reflected from the one of the bands of the reflective surface 48 -1-1, the circuit 46-1 identifies a knob 20-1 rotation in a first direction 57 (e. g. counter-clockwise rotation).

Two graphs show five output graph points (i.e. 131 -1, 131-2, 131-3, 131-4 and 131-5) for the first optical receiver 51-1 and second optical receiver 53-1 respectively. Output levels of the first optical receiver 51-1 and second optical receiver 53-1 are depicted as either a "high" or "low" circuit state. Beneath each of five output graph points (i.e. 131 -1, 131-2, 131-3, 131-4 and 131-5) are corresponding depictions of light 54-2 emitted by the light source 52-1 based on five different positions (i.e. 132 -1, 132-2, 132-3, 132-4 and 132-5) of the knob 20-1 corresponding to the five output graph points (i.e. 131-1, 131-2, 131-3, 131-4 and 131-5), respectively, during rotation of the knob 20-1 by a user, in one example.

In Fig. 23, at point one 132-1 the light source 52-1 transmits light 54-2 toward the knob 20-1. Since the position of the knob 20-1 is such that the reflective surface 48 attached to the knob 20-1 does not reflect light 54-2 toward either of the first optical receiver 51 -1 or the second optical receiver 53-1, the outputs 131-1 of the first optical receiver 51-1 and the second optical receiver 53-1 remain unchanged.

At point two 132-2, user rotation of the knob 20-1 causes a band of reflective surface 48-1-1 to move into the path of light 54-2 transmission from the optical source 52-1 such that light 54-2 is reflected toward the first optical receiver 51-1 where the light 54-1 is detected by the first optical receiver 51-1. As a result, the output 131 -2, as depicted on the graph, of the first optical receiver 51-1 changes from a high output to a low output.

At point three 132-3, additional user rotation of the knob 20-1 causes the band of reflective surface 48-1-1 to move to a position in the path of light 54-2 transmission from the optical source 52-1 such that light 54-1, 54-3 is reflected, in the interim, to both the first optical receiver 51-1 and the second optical receiver 53 -1. As a result, the output 131-3, as depicted on the graph, of the second optical receiver 51 -3 changes from a high output to a low output.

At point four 132-4, additional user rotation of the knob 20-1 causes the band of reflective surface 48-1-1 to move to a position in the path of light 54-2 transmission from the optical source 52-1 such that the light 54-3 is reflected toward the second optical receiver 53-1 where the light 54-3 is detected by the second optical receiver 53-1, and light is no longer reflected toward receiver 51-1. As a result, the output 131-4, as depicted on the graph, of the first optical receiver 51-1 changes from a low output to a high output.

At point five 132-5, additional user rotation of the knob 20-1 results in the band of reflective 48-1-1 surface moving to a position where there is no reflection of light 54 -2 from the optical source 52-1, and the output of second receiver 53-1 returns to a high state.

Accordingly, the circuit 46-1 identifies a knob 20-1 rotation in the first direction 57 (e.g. counterclockwise) in response to an initial detection of light 54-1 by the first optical receiver 51-1 (at point two) followed later by detection of light 54 -3 by the second optical receiver 53-1 (as demonstrated at point four).

Fig. 24 demonstrates the detection of a k nob 20-1 rotation in a second direction 58 by a second optical receiver 51-3 and a first optical receiver 51-1 according to one embodiment of the invention.

Shown in the figure are five different depictions (134 -1 to 134-5) of light 54-2 directed toward a knob 20-1 having reflective surfaces 48. The depictions (134-1 to 134-5) show different exemplary rotational positions of the knob 20-1 demonstrating, in order, (1) no reflection of the light 54-2 by the reflective surfaces 48 (134-1), (2) reflection of the light 54-3 by a reflective surface 48-1-8 toward the second optical receiver 53 -1 (134-2), (3) reflection of the light 54-3 by the reflective surface 48-1-8 toward both the first optical receiver 51-1 and the second optical receiver 53-1 (134-3), (4) reflection of the light 54-1 by the reflective surface 48-1-8 toward the first optical receiver 51-1 (134-4), and finally, (5) no reflection of the light 54-2 by the reflective surfaces 48 (132-5).

When detection by the second optical receiver 53 -1 of light 54-3 reflected from one of the bands of the reflective surface 48-1-8 is followed by detection by the first optical receiver 51-1 of light 54-1 reflected from one of the bands of the reflective surface 48 -1-8, the circuit 46 identifies a knob 20-1 rotation in a second direction 58 (i.e. clockwise).

Two graphs show five output graph points (i.e. 133 -1, 133-2, 133-3, 133-4 and 133-5) for the first optical receiver 51-1 and second optical receiver 53-1. Output levels of the first optical receiver 51-1 and second optical receiver 53-1 are depicted as either a "high" or "low" circuit state. Beneath each of the five output graph points (i.e. 133 -1, 133-2,133-3, 133-4 and 133-5) are corresponding depictions of light 54-2 emitted by the light source 52-1 based on five positions (i.e. 134-1, 134-2, 134-3, 134-4 and 134-5) of the knob 20-1 corresponding to the five output graph points (i.e. 133-1, 133-2, 133-3, 133-4 and 133-5) respectively, during rotation of the knob 20-1 by a user, in one example.

This figure presents a representation of knob 20-1 rotation, in the opposite direction, as that described above with respect to Fig. 23.

For example, as depicted in Fig. 24, at point one 134-1 the light source 52-1 transmits light 54-2 toward the knob 20-1. Since the position of the knob 20-1 is such that the reflective surface 48 attached to the knob 20 -1 does not reflect light 52-1 toward either of the first optical receiver 51-1 or the second optical receiver 53-1, the output 133-1 of the first optical receiver 51-1 and the second optical receiver 53-1 remains unchanged, in a logic high state.

At point two 134-2, user rotation of the knob 20-1 causes a band of reflective surface 48-1-8 to move into the path of light 54-2 transmission from the optical source 52-1 such that light 54-3 is reflected toward the second optical receiver 53 -1 where the light 54-3 is detected by the second optical receiver 53-1. As a result, the output 133-2, as depicted on the graph, of the second optical receiver 53 -1 changes from a hi gh output to a low output.

At point three 134-3, additional user rotation of the knob 20-1 causes the band of reflective surface 48-1-8 to move to a position in the path of light 54-2 transmission from the optical source 52-1 such that the light 54-3, 54-1 is reflected to both the first optical receiver 51-1 and the second optical receiver 53-1. As a result, the output 133-3, as depicted on the graph, of the first optical receiver 51 -1 changes from a high output to a low output, while the output of receiver 53-1 remains low.

At point four 134-4, additional user rotation of the knob 20 -1 causes the band of reflective surface 48-1-8 to move to a position in the path of light 54-2 transmission from the optical source 52-1 such that the light 54-1 is reflected toward the first optical receiver 51 -1 where the light 54-1 is detected by the first optical receiver 51-1, and not towards the second receiver 53-1. As a result, the output 133-4, as depicted on the graph, of the second optical receiver 53-1 changes from a low output to a high output, while the output of the first receiver 51-1 remains low.

At point five 134-5, additional user rotation of the knob 20-1 results in the band of reflective surface 48-1-8 moving to the position where there is no reflection of light 54-2 from the optical source 52-1, and the output of first receiver 51-1 returns to a high state.

Accordingly, the circuit 46-1 identifies a knob 20-1 rotation in the second direction 58 (e.g. clockwise) in response to an initial detection of light 54-3 by the second optical receiver 53-1 in point two 134-2 followed later by detection of light 54-1 by the first optical receiver 51-1 as demonstrated at point four 134-4.

Fig. 25 is a depiction of an alternative configuration in the form of a handheld r emote control according to one embodiment of the invention.

The figure includes a pressure member/optically transparent member 12, a knob 20 -1, switches 14-1 to 14-8, a rotational combination control 70 having eight (8) positional control locations 72-1 to 72-8 and one push control location 72-9, options 35-1, 35-2, etc. and a selection listing 28. According to other embodiments of the invention there may also be a greater or smaller number of switches 14, positional control locations 72, options 35, etc . In effect, the embodiment of the invention depicted incorporates a pressure member 12 used in conjunction with switches 14 as described earlier, an optically transparent member 12 as described earlier, together with the rotational combination control 70 explained in the description that follows. An example of a rotational combination control 70 is an eight - direction switch and encoder with a center push, such as the RKJXTIE120001 control manufactured by Alps Electric, Inc.

In the example embodiment of Fig. 25, the pressure member/optically transparent member 12 has a different dimensional aspect ratio than the example embodiment described earlier, though both embodiments are functionally equivalently.

However, the rotational combination control 70 differ s in its' operation from embodiments previously described. Accordingly, the rotational combination control 70 provides multiple positional control locations 72 -1 to 72-8 that a user can select by pressing the rotational combination control 70 at the desir ed positional control location 72 thereby affecting a sideways force vector on the stem 75 (See Fig. 26) of the rotational combination control.

A similarity of the rotational combination control 70 to the knob 20 and pressure member 12 described earlier is that the rotational pressure member 74 (See Fig. 26) component of the rotational combination control 70, positioned in front of the display 36, in one configuration, is transparent. Accordingly, the display 36 can display output such as menu options, control options or a portion of them that are viewable through the rotational pressure member 74. The menu options or controls displayed by the rotational combination control 70 are spatially associated with positional control locations 72 -1 to 72-8 of the rotational combination control 70. The user is able to select menu or control options viewed through the rotational pressure member 74. The rotational combination control 70 is similar to the knob 20 additionally in that the rotational combination control 70 accepts user rotation of the rotational combination control 70, thereby affecting similar control indications as those provide by rotation of the knob 20, as described earlier.

One feature of the rotational combination control 70 is that, in the same w ay as described with respect to the knobs 20 disclosed earlier, when used in combination with other rotational combination controls 70 or knobs 20, embodiments of the invention can be configured such that a user selection of a positional control location 7 2 input engages the selection of alternative sets of positional control location options of a second rotational combination control 70 or other control (e.g. knob 20).

For example, if a first rotational combination control 70 -1 is configured to present positional control location 72-1, 72-2, 72-3, etc. menu options: AM, FM, CD, etc., respectively, upon selection of the first positional control location option 72 -1 (i.e. AM), the second rotational combination control 70-2 (e.g. or alternatively, menu optio ns provided in conjunction with a knob 20-2) displays a first set of rotational combination controls 70-2 (e.g. or alternatively, the first set of menu options provided in conjunction with the knob 20 -2) menu options: AM presets, AM seek, AM tune as the po sitional control locations 72 for the second rotational combination controls 70-2 (e.g. or the menu options provided in conjunction with the knob 20-2). Upon selection of the second positional control location option 72 -2 (i.e. FM), the second rotational combination control 70-2 displays menu options: FM preset, FM seek, FM tune, FM station, FM song, FM genre, FM artist, etc. as the positional control locations 72 for the second rotational combination control 70-2 (e.g. or the menu options provided in conjunction with the knob 20-2.

Other combinations and numbers of knob -based 20 controls, rotational combination controls 70, pressure members 12 and optically transparent members 12 working independently and together are also possible according to other embod iments of the invention.

Also, since the rotational combination control 70 can accept a rotational user input in a clockwise or counterclockwise direction, as described earlier, the rotational combination control 70, according to one embodiment, could be c onfigured to change menu option sets presented to a user in response to the user rotating the rotational combination control 70.

For example, assume that certain multi-media systems have more functional operations (on/off, play, record, fast forward, etc.) than could be assigned to the eight positional control locations 72 available on one rotational combination control 70. For this example, also assume that rotation of the rotational combination control 70 is divided into eight positions of rotation (i.e. In other words, the rotational combination control 70 has eight positional control locations 72-1 to 72-8 that the user selects by pressing the rotational combination control 70 at the desired positional control location 72 and positions of rotation locations that the user selects by rotating the rotational combination control 70 to a desired position.).

Accordingly, in this situation the display 36 positioned behind the rotational combination control 70 may be configured to first show one set of menu op tions (i.e. menu options that are selected for the first eight functional operations). Upon a user turning the rotational combination control 70, the display 36 shows a second set of menu options behind the rotational combination control 70 for handling a dditional functional operation input. Based on such a configuration, sixty-four (8 × 8 = 64) menu options could be assigned to one rotational combination control 70. Other menu option combinations and schemes, as would be known by individuals skilled in the art, are also possible employing the rotation capability of the rotational combination control 70. The rotational capability of the rotational combination control 70 could alternatively be used for other functions such as tuning, volume level control, etc.

Fig. 26 shows a side view 126 of the rotational combination control 70 of a handheld remote control according to one embodiment of the invention. The figure includes an optically transparent member 12, a rotational pressure member 74 attached to a st em 75 of the rotational combination control 70, the rotational combination control case 76, and a pressure member/optically transparent member/frame 12 (note, the component designated by the single identification number "12" may perform one or more of the functions of a pressure member, optically transparent member and/or frame). For example, the functions of a pressure member 12 may be configured to accept a user-exerted force as input. The force, is, in turn, transmitted by the pressure member 12 to one or more switches 14, as described earlier. Alternatively, or in combination with a pressure member 12, other configurations may include an optically transparent member 12 that allows users to view an underlying set of menu options (e.g. equivalent to the menu options 30 described earlier with respect to knobs 20) displayed on a display 36. Alternatively, instead of a pressure member and/or optically transparent member 12, a frame 12 may be substituted or included that simply provides structural support and positioning for the rotational combination control 76.

The rotational combination control 70 is a transducer that is capable of converting a variety of different forces generated by a user into different control indications, including control indications from forces pushing the control stem 75 in a direction toward the control case 76 (i.e. at the push control location 72 -9) or control indications resulting from pushing the rotational pressure member 74 toward the control case 76 from various positions 7 2-1 to 72-8 over a 360 degree circumference of the rotational pressure member 74. In effect, the rotational combination control 70 is a mechanism capable of providing, for example, nine different positional control location 70 selections.

As shown in the figure, according to one embodiment, the control case 76 of the rotational combination control 70 is mounted underneath the pressure member/optically transparent member 12 with the control stem 75 of the rotational combination control 70 reaching through a void in the pressure member/optically transparent member 12. According to other embodiments of the invention, a frame designed simply to provide support replaces the pressure member/optically transparent member 12.

Within certain embodiments, the pres sure member/optically transparent member may be mounted and operate independently of the rotational combination control 70; within other embodiments, the rotational combination control 70 is mounted on the pressure member/optically transparent member 12. Other configurations of the combination of the rotational combination control 70 and pressure member/optically transparent member 12 than these are also contemplated as being within the scope of the embodiments of the invention. For example, in one config uration, the rotational combination control 70 operating with nine different positional control locations 70 has no pressure member/optically transparent member 12. According to another example the rotational combination control 70 is configured to operate in conjunction with a pressure member 12/switch 14 device.

Fig. 27 shows the side view 128 of the rotational combination control 70 which has been depressed by a user at the push control location 72 -9 (See Fig. 25) for a center control input according to one embodiment of the invention.

By pushing the rotational combination control 70 toward the control case 76 at the push control location 72-9 the user generates a ninth control indication.

Fig. 28 shows the side view 129 of the rotational combination c ontrol 70 which has been depressed at a location (e.g. 72 -1 to 72-8) designated for an individual input according to one embodiment of the invention. By pressing the rotational combination control 70 at a distance from the center of the rotational combination control 70, a user generates a transverse force vector applied to the rotational combination control 70 that is equivalent to the force that would be generated by pushing the control stem of the rotational combination control 70 sideways. This feature provides a mechanism for allowing a user to push on the rotational combination control 70 near one of the positional control locations 72 -1 to 72-8 (e.g. at a distance from a center location of the rotational pressure member 74) to accept a user input associated with a menu option of a set of menu options displayed by the display 36 that is positioned under the pressure member/optically transparent member 12.

Accordingly, the features of the handheld control 125 embodiment of the invention, as described above, provide an alternative control mechanism comprising a rotational combination control 70, a display 36 and a circuit 46. According to the embodiment described, the rotational combination control 70 is transparent, rotatable (e.g. providing the same functions with respect to rotation as the knob 20 described earlier) by a user and capable of accepting application of force to the rotational combination control 70 by a user. The display 36 is positioned in the area behind the rotational combination cont rol 70 and projects output (e.g. images, video, menu options, control options, etc.) that are viewable through the rotational combination control 70. Output locations (e.g. depicting individual images, menu options, control options, etc.) displayed (i.e. on the display 36) spatially relate to the positional control locations 72 that are configured for acceptance of the user input. The circuit 46 converts the force (i.e. the force applied to the positional combination control 70) into a control signal that is representative of the user input.

Various embodiments of the invention using a pressure member 12, as described above, employ different alternative switch 14 technologies such as touch, strain, optical, capacitive, temperature, multi-axis switch 14 technology. In one such example, strain technology employed in a switch 14 measures the intensity of force applied to the switch 14. Accordingly, user-applied forces to a pressure member 12 propagate to multiple switches 14 such that the force intensities of each of the multiple switches 14 can be compared for identification of the switch 14 experiencing the higher force intensity. Comparison of the relative force intensities (e.g. change of state) of the multiple switches 14 provides a more accurate measure of the intended user input.

Such an intensity-based switch 14 system comprises a plurality of switches 14 and an optically transparent member 12. The optically transparent member 12 couples to the plurality of switches 14. The optically transparent m ember 12 has multiple sections that are each associated with one of the switches 14. When a user applies a force to one of the multiple sections, the pressure member 12 transmits a resulting force to the switch 14 associated with the section to which the force is applied in order to cause actuation of the associated switch 14. The switches 14 detect the intensity of the force applied by the user.

An apparatus for comparing the intensity of multiple switches 14 comprises a first switch 14-1 and a second switch 14-2 of the plurality of switches 14 and a control circuit 46. (Note: Although the control circuit 16 was described earlier used in conjunction with a pressure member 12 and other circuits 46 are described later that perform other functions (e.g. infra-red detection circuitry), the individual circuit components can be arranged in different configurations, combined, etc.

As a result of the exertion of a force by the user to the optically transparent member 12, the optically transparent member 12 trans mits a first resulting force to a first switch 14-1 (e.g. strain gauge or other switch) and a second resulting force to a second switch 14-2 (e.g. strain gauge or other switch). Each switch 14 is associated with a section of the optically transparent member 12. Accordingly, the control circuit 46 identifies state change of the switches (i.e. the first switch 14-1 and the second switch 14-1) as an inferred system state change based on a higher intensity of force of the first switch 14 -1 or the second switch 14-2 of the multiple switches. In other words, the system infers one system state if a greater force is transmitted to one of the switches than the other switch but a different system state if the amount of force applied to each of the switches is rever sed.

Fig. 29 is an example circuit diagram 130 of a circuit 16 comprising six switches (e.g. s1-s6 used as described with reference to Fig. 1) 14 for detecting forces applied to a pressure member 12 and a circuit 46 (i.e. used as described with reference t o Fig. 15) employing optical receivers 51-1, 53-1 (e.g. QSE-157 manufactured by Fairchild Semiconductors, Inc., etc.) that detect light 54-1, 54-3 reflected from a light source 52-1 (e.g. MLED81 manufactured by Motorola, Inc., etc.). The switches 14 and optical receivers 51-1, 53-1 share a micro-processor (e.g. PIC 16F819 manufactured by MicroChip, Inc. etc.). The microprocessor interprets the signals from the switches 14 and optical receivers 51 -1, 53-1 to generate control signals

Fig. 30 shows an assembly 140 of an optically transparent member 12 and frame 18, according to one embodiment of the invention in which the optically transparent member 12 is mounted directly to the frame 18. The figure also includes the switches 14, the switch actuators 15, suspension-mounted retainers 17, compressible grommets 19, one part of the circuit 46-1, the light source 52-2 and the optical receivers 51-2, 53-2. Finally, Fig. 30 also depicts a proximity sensor arrangement including a transmitter 23, receiver 25, lens 29 and sensor-related portion of the control circuit 46-3 (e.g. a user input area, a controller and a proximity detector).

According to an improved configuration of the system, depicted in the figure, each switch 14 of the plurality of switches is interpos ed between the pressure member 12 and a frame 18. By positioning the switches 14 between the pressure member 12 and the frame 18, less space is required than would be necessary if the switches 14 where mounted on a separate platform (e.g. a circuit board, other mechanism, or mounting plane, etc.) located behind the pressure member 12. Thus the pressure member 12 and frame 18 combination embodiment of the invention depicted in the figure takes less space. In addition, the pressure member 12 and frame 18 combination embodiment of the invention depicted can be assembled in the form of single unit thereby simplifying the assembly process.

According to this embodiment of the invention, the switches 14 are positioned in an initial location between the pressure member 12 and the frame 18. In order to hold the pressure member 12, the system assembly 140 also includes a suspension -mounted retainer 17 that moveably couples the pressure member 12 to the frame 18. Positioned, as such, in its neutral position, the switch actuators 15 are compressed. According to one embodiment of the invention, when the actuators 15 are compressed, the switches 14 operate in a closed circuit state. Accordingly the circuit 46 is configured to identify such a closed circuit state as equivalent to non-activation of the switch 14. According to an alternative embodiment of the invention, switches 14 are configured to operated in an open circuit state when the actuators 15 are compressed and the circuit 46 identifies such the open circuit state as equivalent to non-activation of the switch 14.

The system 140 is configured to also identify switch 14 activation. Accordingly, in response to user-applied pressure against the pressure member 12, a resulting force is exerted by the pressure me mber 12 on the actuator 15 of one or more of the switches 14 (i.e. of the switches 14 each of which is associated with one of the multiple sections representing a desired control function). When the actuator 15 of such a switch 14 is de -compressed, the switch 14 operates in an open state. Upon transition of the switch 14 from a closed state to an open state, the system 140 identifies a switch 14 activation.

According to this embodiment of the invention the suspension -mounted retainer 17 that moveably coup les the pressure member 12 to the frame 18 includes a compressable grommet 19 (e.g. or other compressable spacer also providing spacing between the pressure member 12 and the frame 18). The compressable grommet 19, upon being positioned between the pressure member 12 and the frame 18 applies a force to the pressure member 12 that holds the pressure member 12 in its initial position (i.e. its initial position pushed against the frame 18). Additionally, the grommet 19 also exerts lateral forces on the press ure member 12 in order to counteract lateral movements of the pressure member 12.

According to one embodiment of the invention, a proximity sensor arrangement is provided that is configured to detect the presence of a user's hand near the front of the optically transparent member 12. Detection of the user's hand near the optically transparent member 12 causes modification of the display 106. Accordingly, the proximity sensor arrangement provides an apparatus and method that identifies an appropriate time to change the information content of the display 106 (e.g. in order to minimize information overload to a driver). In other words, the system 140 is configured to present the user only with the information that he/she needs, in some cases reducing the se t of displayed information and other cases enhancing the set of displayed information depending upon whether the proximity sensor detects that the user is about to use the system 140. Although such embodiments of the invention are particularly well suited to applications in a vehicle, the embodiments of the invention may also be useful in freestanding devices as well as a variety of other device configurations and environments in which the devices may be employed.

In one example, the display 106 is configu red to show the artist, song title, album name and elapsed time of a song that is playing as well as several command menu options 35 such as options to rename a song, store the song in favorites and a normal play mode option. However, according to one emb odiment of the invention, when the command menu options 35 are not needed, they can be automatically removed from the display 106. Accordingly, detection of placement of the user's hand near the proximity sensor arrangement mounted to the optically transparent member 12 identifies when the command menu options 27 will be displayed.

The proximity sensor arrangement comprises a transmitter 23, receiver 25, lens 29 and sensor-related portion of the control circuit 46-3. The transmitter 23 transmits an electromagnetic wave such as an infra-red signal, visible light, etc. through a lens 29 toward a location proximate to the optically transparent member 12 where a user would position his/her hand prior to, during and/or after operation of any of the controls (e. g. optically transparent member 12, knobs 20, etc.) of the system for accepting user input. An ultrasonic signal may alternatively be transmitted toward a position proximate to the optically transparent member 12. The receiver 25 is also positioned to detect signals from a location proximate to the optically transparent member 12 where a user would position his/her hand prior to, during and/or after operation of any of the controls (e.g. optically transparent member 12, knobs 20, etc.) of the system for accepting user input such that the receiver 25 is able to detect a disturbance or change (e.g. reflection of the electromagnetic or other wave, etc.) of the electromagnetic wave (e.g. or ultrasonic signal) caused by the user's hand. Upon placement or removal of the user's hand from proximate to the optically transparent member 12, the command menu options 35 are changed. A depiction of such a removal of command menu options 35 in response to the user removing his/her hand from proximate to the optically transparent member 12 is provided in Figs. 35 to 36.

In addition to changing displayed information based on detection of the proximate placement of a user's hand proximate to the system 140, as described above, the proximity sensor arrangement may be configu red to perform other functions as well. The proximity sensor arrangement may even perform different functions simultaneously. For example, in one such embodiment, the proximity sensor arrangement is configured to transmit and receive infra-red signals to perform both a proximity sensing function and a remote control sensing function. Accordingly, such a proximity sensor arrangement consists of the infra -red transmitter/receiver combination that transmits and receives infra -red signals to and from the location of a user's hand. In addition, the sensor component of the proximity sensing arrangement is configured to also accept a signal (e.g. infra -red, visible light, capacitive, ultrasonic, capacitive, inductive or other signals, etc.) transmitted by a rem ote control device. Although this multiple use configuration of the proximity sensing device has applications within motor vehicles, such configurations are also useful in other applications such as freestanding and integrated multi-media devices, computer and other computing devices, home and industrial controls, etc.

Such multiple-use configurations of the proximity sensing arrangement may also incorporate other enhancements, according to other embodiments of the invention. For example, the transmittin g and sensing components of the proximity sensing arrangement may be configured to employ coded and/or modulated signals thereby enabling the proximity arrangement to more accurately distinguish between the signals received from different sources. Such modulation techniques include the methods described earlier for modulation with respect to the method for distinguishing between desired rotary control signals and extraneous signals as well as other techniques known by individuals who are skilled in the art .

Fig. 31 shows a side view of the assembly 141 of the optically transparent member 12 and the frame 18, in which the optically transparent member 12 is positioned in its initial location, according to one embodiment of the invention. According to the e mbodiment of the invention depicted, no suspension-mounted retainer 17 is used. However, a grommet 19 holds the pressure member 12 against the switch 14 actuator 15 -1 (i.e. thereby holding the switch 14-1 actuator 15-1 in a compressed position). In the compressed position, the actuator 15-1 causes the switch 14-1 to operate in a closed state. As described earlier, the circuit 46 is configured to identify such a closed circuit state as non -activation of the switch 14-1.

Fig. 32 shows a side view of the as sembly 142 of the optically transparent member 12 and the frame 18, in which the optically transparent member 12 is positioned in a second location, according to one embodiment of the invention. Accordingly, upon the exertion of pressure against the press ure member 12 by a user, the actuator 15-1 of the switch 14-1 is released. As described earlier, the circuit 46 is configured to identify such an opened circuit state as the switch activation.

Fig. 33 shows a configuration 143 of the optical light source 52 and optical receivers 51, 53 mounted to the optically transparent member 12, according to one embodiment of the invention. The figure shows the optically transparent member 12, two different circuits 46 -1, 46-2 having optical sources 52-1, 52-2 and receivers 51-1, 53-1 and 51-2, 53-2 respectively and suspension-mounted retainers 17-1, 17-2, 17-3, 17-4, 17-5 and 17-6. In contrast to the embodiment of the invention described earlier, mounting the circuit 46 (i.e. and circuit board), optical sources 52 and receivers 51, 53 on the optically transparent member 12 results in the circuit 46, optical source 52 and receivers 51, 53 moving along with the optically transparent member 12 when a force is applied to the optically transparent member 12. Thus, registr ation of the light's direction of travel between the optical sources 52, reflective surface 48 -1 of the knob 20 and receivers 51, 53 is improved thereby improving accuracy of user input detection and reliability of the system 143.

Fig. 34 shows the disp lay 106 displaying a media content item selection 28 along with menu command options 35, according to one embodiment of the invention. In response to detection of a user's hand being positioned proximately to the proximity sensor arrangement, the display 106 shows a more populated display 106 that also includes both the media content item selection 28 and the menu command options 35. Thus, upon placement of his/her hand proximate to the display 106 (e.g. providing a user input), the user is presented with a more complete display 106 from which to choose. Fig. 35 shows the display 106 displaying only the media content item selection 28 after menu command options 35 have been removed (i.e. thereby providing alternative control output and control options), according to one embodiment of the invention. Accordingly, after the user's hand has been removed from proximity to the optically transparent member 12, the display 106 provides a less -intricate display of information that is easier to read and less distr acting to a driver.

Fig. 36 is page one 145 of an example circuit diagram of the control circuit 46, according to one embodiment of the invention in which the optically transparent member 12 is mounted directly to the frame 18 as depicted in Figs. 30-33. Fig. 37 is page two 146 of the same example circuit diagram of the control circuit 146. The circuit diagram includes switches (e.g. s1-s4) 14 for detecting forces applied to a pressure member 12; an additional part of the circuit 46 employs optical receivers 51, 53 (e.g. QSE-157 manufactured by Fairchild Semiconductors, Inc., etc.) that detect light 54 reflected from a light source 52 (e.g. 1 N6254 light emitting diode manufactured by Fairchild Semiconductors, etc.). The switches 14 and optical receivers 51, 53 share a micro-processor (e.g. UI 16F819 manufactured by MicroChip, Inc., etc.). Transistors (e.g. Q2N4401 general purpose transistors, etc.) are used to identify when a switch 14 has been opened. Accordingly, the switch 14 is opened when a user exe rts a force on the pressure member 12. A resistor (e.g. R1) pulls transistor Q1 base high which the micro-processor, in turn identifies as either a switch activation or non -activation. The circuit diagrams also includes a Max 282 integrated circuit (i.e. for generating serial interface output signals), serial data outputs, power supply circuitry, etc.

Fig. 38 is page one of an example circuit diagram of the proximity sensor arrangement, according to one embodiment of the invention. According to the exam ple depicted by the circuit diagram, an integrated circuit (e.g. a Vishay TSOP 1838SS3V) includes sub -circuitry to modulate a source signal, transmit the modulated signal, receive the reflected (i.e. transmitted) signal and de-modulate the received signal. Additional circuitry based on Schmitt triggers (e.g. 74ACT14 manufactured by Fairchild Semiconductors, etc.) convert the received signal into a control signal. Fig. 39 is page two of a circuit diagram according to one embodiment of the invention in whi ch a microcontroller is instead used to convert the received signal (i.e. also de-modulated by the Vishay TSOP 1838SS3V). As depicted in Fig 39, the microcontroller (e.g. a PIC16F628 manufactured by HVW Technologies) detects and converts the modulated signal received by the Vishay TSOP 1838SS3V integrated circuit, thereby replacing the Schmitt trigger circuits and related components.

Thus, as described in detail above, embodiments of the invention provide a system and method for accepting a user input. A ccordingly, the optically transparent member, knob, means for directing, reflecting and detecting light are operationally associated so as to accept the user input.

While this invention has been particularly shown and described with references to preferred embodiments thereof, it will be understood by those skilled in the art that various changes in form and details may be made therein without departing from the spirit and scope of the invention, as defined by the appended claims. For example, embodiments of the invention may be applied to media systems. Embodiments of the invention may also be applied to automotive systems. The embodiments of the invention described herein, may also applied to a variety of control application settings.

With respect to the different components of embodiments of the invention described herein, the display 36 may be integrated with the pressure member 12 in a single arrangement; in other embodiments of the invention the display 36 and pressure member 12 may be separate. Also, certain embodiments of the invention, as described herein, may partly incorporate traditional touch screen technology and push -button switch, etc. technology, in place of the pressure member 12-based user touch capability described herein. For example, embodiments of the invention using a first knob 20-1 and a second knob 20-2 to accept selection of control source, mode and media content item selections may accept sub -menu selections from traditional touch screen input devices. In another example, a traditional touch screen or pushbutton array may be used as the input device for selection of sources. Also, the control circuit 17 described here can be implemented in a variety of forms and/or located in different locations, such as on a separated circui t board, integrated within the system, in a separated component of a larger system, etc. Various other combinations of the components of embodiments of the invention, described herein, are possible within the spirit and scope of the invention.

According to one embodiment of the invention, a knob 12 is used in combination with a touch screen. Accordingly, the knob 12 is moveably mounted such that the knob 12 sits slightly above the touch screen. In response to a user-applied pressure to the knob 12, the knob 12 moves to come in contact with the touch screen thereby resulting in a touch screen activation.

It should also be understood that the knob 20 can be formed into various shapes for either decorative or functional purposes while still being capable of performing the features of the invention as described herein. For example, according to an embodiment of the invention, the hand-held portion of the knob 20 is wider than the circumference of the friction sleeve 61 - 1. The extra width of the knob 20 prov ides an overlap over the optically transparent member 12 to prevent dust and/or dirt from slipping between the knob 20 and the friction sleeve 61 -1 to interfere with rotation of the knob 20.

An additional feature of embodiments of the invention is the abil ity to accept and process inputs provided in other forms used in conjunction with the inputs provided by knob 12 rotation and user-applied pressure, etc., as described above. For example, according to one embodiment of the invention, a motion or proximity detector senses motion of a finger positioned near a particular location (e.g. the upper left hand corner of a user input area) of the pressure member. In turn, a sensed motion indication is used as an additional input to identify a desired input selection (e.g. to identify that the user has pressed the corner or the pressure member rather than the center of the pressure member). According to another embodiment of the invention, when the user places a finger or hand within range of the proximity detector, the controller causes the control mechanism to display alternative control or menu options. In turn, when the user removes his finger/hand, displayed menu options change back to the original menu options.

The control mechanism may accept other forms of input, as well, such as a voice control or other form of input. According to certain embodiments of the invention, the voice, or other input may identify a separate input (e.g. turn on, turn off the device, etc.). Alternatively, the voice control input m ay be used in conjunction with other inputs. For example, the control mechanism, upon receiving a voice input stating a particular source (e.g. CD, FM, etc.), may interpret future inputs as being inputs for commands related to the stated source (e.g. for a "CD" voice command, interpret a change command as a change track input; for an "FM" voice command, interpret a change command as a change station input, etc.).

Additional embodiments of the invention provide an improved user interface for multimedia and other devices. Among other advantages of embodiments of the invention, the improved user interface simplifies the display of a multimedia device in automotive applications so that the display can be easily understood and cause less distraction to drivers than would otherwise be possible using other input and/or control mechanisms. In particular, the multimedia device, so configured, limits the amount of information displayed to a user until such time as the user is ready to perform a control operation. At that time, the multimedia device expands the information displayed in order to provide sufficient information upon which the user can select a desired control operation.

Referring now to Fig. 40, the user interface component of a multimedia device 300 i s shown which includes a controller 305 such as a head unit (e.g. a control and multiple audio source unit, for use in a vehicle infotainment system, home entertainment system, portable entertainment system, etc.), digital player, etc., a left knob 310-1 (e.g. in one embodiment turning the left knob 310-1 controls volume, pressing the left knob 310-1 mutes the output of the multimedia device) a right concentric knob assembly, with inner concentric knob 310-2 and outer concentric knob 311-2, a display 320, a set of preset controls 330-1 to N, a set of peripheral button controls 340-1 to 340-4, a set of mode control buttons 350-1 to 350-N, an output selection display 360 and proximity detectors 380 -1 to 380-3. Although a single left knob and a dual concentri c right knob assembly are described, either or both knobs/knob assemblies could be dual concentric knob assemblies or individual knobs.

As depicted, with a trigger (e.g. user's hand or other body part) positioned away from the multimedia device 300 (i.e. in Fig. 40 the users hand shown is not proximate to the display), the multimedia device 300 is configured to provide a reduced display output 360 (i.e. the elements displayed to a user are reduced compared the full complement of controls labels and reporting that would otherwise be displayed, primarily including the frequency and call letters of a selected station and little other information). In the embodiment shown in Fig. 40, device 300 is shown providing reduced information, and is operating in the FM mode. By providing reduced information as part of the initial output, the user is able to immediately see which station is selected, thereby reducing the amount of time required for the driver to look away from the driving activity. Accordingly, the elements displayed to a user are reduced compared the full complement of controls labels and reporting that would otherwise be displayed and which would otherwise cause more significant user/driver distraction.

According to one embodiment of the invention , the multimedia device 300 is configured to return to a state where display 320 shows its initial reduced output (e.g. or some other condition where the display provides reduced information) automatically, after removal of the user's hand from the proximity of the multimedia device 300. According to one configuration, for example, the multimedia device 300 returns back to the initial reduced output after some pre-determined time (e.g. 30 seconds) has elapsed since the removal of the user's hand from a position near the multimedia device 300.

In addition to the aforementioned control, the multimedia device 300 has other buttons as well. For example, along the top edge of the multimedia device 300 are found multiple preset buttons 330 that may be programmed or configured to select, for example, from between radio stations or other such choices. On the bottom edge of the multimedia device 300 are found multiple mode control buttons 350 -1 to 350-N. The mode control buttons 350 may be used to control operatio ns such as source selections (e.g. entertainment, telephone, navigation, car settings, etc). For example, the entertainment button may be used to engage one of multiple sources for entertainment such as a CD changer, XM radio, FM radio, etc. The mode control buttons 350 buttons may perform additional functions, as well. In particular, each one of a set of multiple presses of the entertainment button causes the multimedia device 300 operation to alternate to the next in sequence from among the different m ultiple sources. In other words pressing the first mode button once selects FM radio, pressing it a second time selects XM radio, and pressing it a third time selects AM radio, according to one embodiment of the invention. The preset buttons and mode but tons may be positioned in different locations, as well, according to other alternative embodiments of the invention.

In Fig. 41, the user has positioned his or her hand proximate to the multimedia device 300. In response to detection of the user's hand proximate to the multimedia device 300, the multimedia device will display additional control or menu options, as depicted in Fig. 41. Accordingly, a complete range of stations and frequencies 376 and music categories 372 are displayed.

In order to signal the need for a change to the more complete display, first a proximity detector 380 detects the placement of the user's hand proximate to the multimedia device 300. Various techniques may be employed to detect proximity of the user's hand near the multimedia device 300. For example, one method of detecting proximity is to emit an infra -red signal from an infra-red emitter to the location where a hand would be placed. Then from a position to which the infra-red signal would be reflected by a hand placed near the multimedia device, detect the reflected infra-red signal (e.g. certain emitter-detectors combinations 380-1 are co-located). Detection of the infra-red signal serves to identify placement of the hand near the multimedia device 300. Other altern ative infra-red methodologies may be employed to increase the accuracy of infra-red proximity detection.

One such infra-red methodology employs modulation of the transmitted infra -red signal using a digital signature code. Upon receipt of the infra-red signal, an infra-red detector demodulates the signal with its code in order to identify the source of the infra -red signal. By doing so, a received infra-red signal can be distinguished from extraneous infra -red signals or infra-red signals from unintended sources. Alternatively, ultrasonic or other signals may also be employed in a similar fashion to the infra -red-based signal methodologies. In addition, the ultrasonic (e.g. and other types of signals) signals may be modulated with a digital code so that upon detection they may, in a similar fashion, be distinguished from extraneous or undesired ultrasonic signals. Such embedded codes and/or modulated signals may also provide information from which to distinguish from between multiple infrared (e.g. or other signal sources). After distinguishing from between the multiple sources, a processor 305 configured to analyze signals received, may use resulting information in order to determine the location of a user's hand. Uses for this information will be de scribed in more detail later.

Figure 41 also shows a multiple-level display 320 for use in conjunction with the concentric knobs 310-2 and 311-2. On the display 320, each of the two arcs 371, 374 show lists of category labels 372-1 to 372-N, and item labels 376-1 to 376-N. Individual item labels 376-1 to 376-N rotate in a circular fashion as if rotating in a circle centered at the location of the concentric knobs 310-2, 311-2, when inner knob 310-2 is rotated. Each arc 371, 374 represents a different co mmand structure level. The position of the arcs 371, 374 with respect to each other is similar to the relative positions of the concentric knobs 310 -2, 311-2 with respect to each other.

According to one example embodiment of the invention, there is a logi cal relationship between the two knobs 310-2, 311-2 in which the category label 372 associated with the outer concentric knob 311-2 determines which subset of individual item labels 376 will become visible. As a user rotates the inner concentric knob 310 -2, additional individual item labels 376 rotate into view for possible user selection.

For example, if a user turns the left arc 371 (i.e. using the outer concentric knob 311-2) until a country music category label 372 selection has been made, individual country music items 376 will be displayed on the right hand arc 374 for possible user -selection. The user may turn the right the hand arc 374 using the inner concentric knob 310 -2 in order to display additional country songs. As the user does so country songs will either fall off or be added to the top or bottom of the display. If the user rotates outer concentric knob 311 -2 until the category label "strong signals" is centered in the display, individual stations that have strong signals will be displayed in the right hand arc for possible user selection.

Another example of such a logical relationship between the arcs is a "large" to "small" or hierarchical relationship, such as selecting an album using the outer concentric knob 311 -2 and selecting the individual song found on the selected album using the inner concentric knob 310-2. In a hierarchical relationship, in one embodiment, categories that are associated with a higher level in the hierarchy are displayed in the arc with the larger effective rad ius (i.e. outer arc), and sub categories that are associated with a lower level in the hierarchy are associated with an arc with smaller effective radius (i.e. inner arc). In other mappings, this relationship may be reversed. In one embodiment using conc entric knobs, knobs with larger radii are associated with arcs with larger effective radii, and knobs with smaller radii are associated with arcs with smaller effective radii.

In contrast to the push-button method of selecting sources for a multimedia devi ce 300, as described above with respect to operation of mode control button 350, one of the concentric knobs may be configured to accept a user push operation for a source selection input (e.g. entertainment, phone, navigation, car settings) according to o ne alternative embodiment of the invention. Other alternative configurations of control button options are envisioned such as designating static or programmable pushbuttons (e.g. pushbuttons mounted near screen corners with re-programmable pushbutton legend near the button locations). Alternative functions envisioned that can be associated with operation of pushbutton controls include functionality such as: CD storing, cd recordings to hard disk, play mode; hard disk: umusic-on/off, play mode, +/-, radio: am, fm, etc., switching between tuning and seeking, etc.

According to one embodiment of the invention, user movement (i.e. turning) of the inner knob 310-2 causes rotation of the inner arc 374 and user movement (i.e. turning) of the outer knob 311-2 causes rotation of the left arc 371 thereby resulting in a natural sensation for the user between the user's movement (i.e. turning) of the individual knobs 310 -2, 311-2 and the resulting changes in the corresponding arcs 371, 376.

Fig. 42 depicts an alternative embodiment of the invention that provides a reduced information output according to one embodiment of the invention. The primary benefit to reducing the information displayed of the multimedia device display is a reduction of driver distraction in an automobile. In the embodiment of the invention depicted of Fig. 42, the disc name, title/track name and elapsed time 366 are displayed. Located near the left hand knob 310, the upper leg of a semi -circle symbol 368 indicates, for example, that the volume is very low or zero or mute. Located near the right hand knob 310-2, 311-2, the upper leg of a semicircle symbol 369 indicates, for example, the elapsed time of the compact disk that is being played. Accordingly, fewer elements are displayed to a user compared the full complement of controls labels and reporting that would otherwise be displayed. As such, displaying only the display indicators, 367-1, 369 and data 366, and having an absence of other information (Fig. 42 shows the alternative display in which additional information is displayed in connection with preparation being undertaken by the user to activate a control operation) serves to reduce user/driver distraction.

Most of the time there is little need for the user to have direct access to all of the detailed control indications, information, etc. Accordingly, there is less need to display all of the control information available. The reduced information display is configured, according to one embodiment of the invention, to operate when th ere is no interaction between the user and the multimedia device. On the other hand, if a user demonstrates an intention to operate a control or menu option by placement of his or her hand in the proximity of the multimedia device 300, the multimedia devi ce 300 will display additional control or menu information, as depicted in Fig. 42.

Fig. 43 shows an example of a display 320 displaying a variety of control information, according to one embodiment of the invention. The display 320 shows programmable pushbutton labels 362-1, 362-2, a volume/mute indicator 367-1, with a mute icon 367-2, a progress indicator 369, a set of preset labels 365-1 to 365-N (e.g. preset buttons such as programmable stations, channels, etc.) and a current track display 366 including a disk name, track number and elapsed time for the current track. The information shown on the display 320 appears when the user places his or her hand in a proximate location with respect to the display 320. Although it is not necessary to provide d etailed control information when the user is not operating controls of the multimedia device 300, the multimedia device 300 display is configured to provide additional information when a control action is about to be undertaken. Accordingly, as depicted, when a user places his or her hand in the proximity of multimedia device 300, the multimedia device 300 is configured to add to the display, the programmable pushbutton labels 362-1, 362-2, a volume/mute indicator 367-1, with a mute icon 367-2, a progress indicator 369, a set of preset labels 365-1 to 365-N, or other information that may be helpful to the user.

Fig. 44 shows an example embodiment of the invention in which the artist mode has been selected by the user. The multimedia device 300 shown in Fig . 44 is operating in a hard disc mode, but this display could also represent any mode in which some form of metadata fro music tracks was available (XM or satellite radio reception, FM reception where RDS data is available, etc.). In response to a user s election of the artist mode, the multimedia device 300 displays the selected artist mode on the left hand arc 371. Accordingly, the detailed selection options corresponding to the artist mode are displayed on the right hand arc 376 (i.e. artist's names such as Simone, Bruce Springstein, Sting, etc.).

In keeping with the objective of minimizing display 320 complexity, the multimedia device 300 is configured to minimize the number of category labels 372 displayed in the left arc 371. Accordingly, in the case of certain commonly known categories such as title, artist, album and genre it may not be necessary to display all of the category titles 371. Alternatively, according to one embodiment of the invention, as depicted in Fig. 44, only the selected artis t 372-10 category title is displayed. However, in the case of lists 371 of other category titles 372, which are less well -known by users, all of the category titles 372 may be displayed (i.e. all signals, strong signals, classical, country, dance, etc.), as depicted in Fig. 41.

The multimedia device 300 may be configured to accept user selections of mode or detailed items in different ways. For example according to one embodiment of the invention, the multimedia device 300 may be configured to identify a user selection by accepting a user press of a knob (e.g. right knob, left knob, push -button, etc.) when the desired mode or detailed selection label is centered on the display. Alternatively according to another embodiment of the invention, the multimedia device may automatically choose the mode or detail selection that is centered in the display 320, after some preset amount of time has elapsed after it has been rotated by the user into the centered position, without the user further user interaction (i.e. pressing on a button or knob 310).

Fig. 45 shows an alternative example in which the multimedia device 300, in response to user selection of an album category, displays the album name (e.g. album 2) and track numbers associated with the named album are p rovided to the user for possible user selection.

Other types of information may also be displayed to the user in response to the identification by the multimedia device 300 of the position of the user's hand in a location proximate to the device. For example, so-called "tool-tips" that provide explanatory information about the usage of a particular control may be displayed by the multimedia device 300. Fig. 46 shows an example of such a tool tip employed within a multimedia device 300. As shown in Fig. 46, in response to a user placing his or her finger near the first mode control button 350-1, the multimedia device 300 displays a label containing the options for FM radio, AM radio or XM radio. Thus, when a user places his or her finger near the first mo de control 350-1, the multimedia device 300, after identifying the location of the user's finger near the mode control button 350-1, informs the user that by repetitively pressing of the first mode control button 350-1 the user will be able to select betwe en the FM radio, AM radio and XM radio options.

One of the features of the multimedia device 300 is its concentric knob combination comprised of an inner knob 310-2 and an outer knob 310-2. Fig. 47 shows such a pair of knobs 310-2, 311-2 positioned concentrically according to one embodiment of the invention. Both the inner concentric knob 310-2 and outer knob 311-2 are mounted to a plane as depicted in Fig. 47. According to one embodiment of the invention, the height of the inner concentric knob 310-2 extends farther from the display 320 surface than the height of the outer concentric knob 311-2.

The inner knob 310-2 is mounted within a void in the center of the outer knob 311 -2. The plane may be a lens covering a video display, according to one embodime nt of the invention. The center of the inner knob 310-2 is fabricated from transparent material that permits transmission of light and/or information by the multimedia device 300 for user observation.

For example, the multimedia device 300 may be config ured to display different colors representative of the different modes of operation of the multimedia device 300. Such light transmission may be accomplished by positioning a light source behind the transparent inner knob 310-2 or as described earlier, by mounting the concentric knob 310-2 in such a position that an underlying video display 320 transmits light through the knob 310 -2.

Fig. 48 is a cutaway view of the inner knob 310-2 and outer knob 311-2 mounted on a plane such as a display 320. The cutaw ay view shows the outer knob 311-2, the inner knob 310-2 having a transparent center (e.g. acrylic).

Embodiments of the invention include a mechanism for providing detents during knob rotation. Figures 49 and 50 show details of embodiments for accomplis hing detent behavior for inner and outer concentric knobs 310-2, 311-2. The designs shown are applicable to individual or dual concentric knobs, and are particularly useful where a knob is transparent or clear. Both the inner knob 310-2 and the outer knob 311-2 have a series of depressions 312, 314 surrounding the circumference of the bottom of the knobs 310 -2, 311-2. A ring 324 is positioned underneath the bottom edges of the inner knob 310 -2 and outer knob 311-2. Figure 49 is a perspective view of the ring 324 and the inner knob 310-2 assembly showing a series of indentations 314 around the circumference of the bottom of the inner knob 310 -2. The ring 324 is split, thereby creating two separate independently-operating spring sections with raised dimples 326-1, 326-2 such that the dimples 326-1, 326-2 extend into the indentations 312, 314 on the underneath of both the inner knob 310 -2 and outer knob 311-2 respectively, engaging the inner knob 310-2 and outer knob 310-2 with the multiple indentations 312, 314. The ring 324 is positioned in a grove in the plane 320 (the groove in plane 320 is not shown) directly underneath the knobs 310 -2, 311-2. The raised dimples 326-1, 326-2 of the ring 324 (e.g. made of spring material) extend into indentations 31 2, 314 on the underneath of the inner knob 310-2 and the outer knob 311-2 respectively, in effect causing the knobs 310-2, 311-2 to "click" into place as a user turns either of the knobs 310 -2, 311-2. Fig. 50 is a drawing depicting an assembly including t he ring 324 and an outer knob 311-2.

In order to identify individual control signals from each of the two knobs 310 -2, 311-2, the multimedia device 300 is equipped with infra -red emitters and detectors 326 as described in the parent of this continuation -in-part patent application. In order to separately interpret multiple control signals provided by each of the two concentric control knobs 310 -2, 311-2, the multimedia device 300 is equipped with multiple sets of infra -red emitters and detectors 326-1, 326-2. Fig. 51 shows the configuration of the multiple sets of emitters and detectors 326 -1, 326-2. Accordingly the emitter/detector combination device for the inner concentric knob 310-2 transmits an infra-red signal 315-2 to a set of reflectors 328-2. Infra-red light reflected 313-2 by the reflectors 328-2 is detected by the detectors 326-2 thereby identifying motion of the inner concentric knob 310-1, as previously described in more detail in the parent to the present patent application.

A second set of infra-red emitters and detectors 326 -1, offset from the first set of infra-red emitters and detectors 326-2 is directed to reflective material 328-1 on the outer concentric knob 311-2 and used to identify motion of the outer concentric knob 311 -2.

In order to prevent cross-coupling between the emitter/detector combinations 326 -1, 326-2 associated with the inner concentric knob 310-2 and the outer concentric knob 311-2 as depicted in Fig. 52, areas 329-1, 329-2 in front of the each of the two knobs 310-2, 311-2 are masked so as to prevent transmission/reception of an unintended infra -red signal to/from the wrong (i.e. unintended) emitter/detector 326-1, 326-2. Accordingly, because of the masking 329-1, 329-2, the emitter/detector 326-1 associated with the inner concentric knob 310-2 is only able to reflect infra-red light 313-1 to the detector(s) 326-1 designated to identify signals related to the user rotation of the inner concentric knob 310 -2 and the emitter/detector 326-2 associated with the outer concentric knob 311-2 is only able to reflect infra-red light 313-2 to the detector 326-2 designated to identify signals related to the user rotation of the outer concentric knob 311-2. Other methods for preventing cross-coupling include using different modulation schemes for each of the emitter/detector assemblies 326 -1, 326-2, emitting and detecting in different frequency regions for each of the assemblies, or at different times, etc.

Thus, as described in detail above, embodiments of the invention provide m ethods and mechanisms for accepting user input in various devices such as multimedia devices.

While this invention has been particularly shown and described with references to preferred embodiments thereof, it will be understood by those skilled in the ar t that various changes in form and details may be made therein without departing from the spirit and scope of the invention, as defined by the appended claims. For example, embodiments of the invention may be configured to use any of a variety of combinat ions of different types of controls such as knobs, concentric knobs, pushbuttons and programmable pushbuttons to perform the functions described by the invention. As described above, for example, one embodiment of the invention of a multimedia device has a set of concentric knobs positioned at the right hand side of the multimedia device. However, embodiments of the invention could be configured with concentric knobs on the left hand side or on both the right and left hand side of a multimedia device or other device or in combination with other controls, etc. as well, which combinations may be known by individuals who are experienced in the art.

The functional assignments to knobs, controls, etc. as described herein are presented by way of example, only. Alternative assignments are also possible and considered to fall within the scope of the invention. For example, instead of employing the mode controls described herein, the mode control functions could alternatively be assigned to knobs that are repeatedly pressed to engage different modes of operation, as described in the parent of this patent application. Alternatively, mode operations described herein could also be assigned to programmable pushbutton controls which are also known in the art. The mo de and other operations can alternatively be assigned to buttons and/or controls in different locations, for example, at the top, bottom or sides of a multimedia or other device according to various embodiments of the invention.

Methods used to identify the proximity and/or position of a user's hand (e.g. finger, etc.), as described earlier, may alternatively employ different techniques other than IR sensing that was previously described. For example capacitive sensors, pyroelectric sensors, video cameras, etc. may be employed to perform proximity detection.

Various embodiments of the invention may employ different types of knobs and/or controls such as clear knobs and clear concentric knobs, concentric knobs, two or more concentric knobs alone and in com bination, etc.

## Claims

1. An apparatus for changing a display output of an entertainment system, the apparatus comprising:
a display that displays a first output;
a detector that detects a hand placed proximate to the display; and
a controller that is coupled to the display, the controller causing the display to display a second output in response to detection of the hand placed proximate to the display, at least a portion of the second output being different from the first output.

2. The apparatus of claim 1 wherein the apparatus operates in a vehicle.

3. The apparatus of claim 1 wherein the entertainment system is comprised of at least one of: a media player, a CD player, a video player, a DVD player, an AM radio, a FM radio, a satellite radio, a digital m usic source, a hard drive.

4. The apparatus of claim 1 wherein the detector is chosen from the group comprising an infra-red detector, an ultrasound detector, a photo detector, an optical detector and a capacitive detector.

5. The apparatus of claim 1 further comprising an emitter that communicates with the detector.

6. The apparatus of claim 5 wherein the emitter is chosen from the group comprising an infra-red emitter, an ultrasound emitter, a photo emitter, an optical emitter and a capacitive emitter.

7. The apparatus of claim 1 further comprising a plurality of detectors, wherein the controller is configured to determine a location of the hand based on signals received from the plurality of detectors.

8. The apparatus of claim 7 wherein the plurality of dete ctors comprises:
a first detector configured to detect a first signal reflected from the hand placed proximate to the display;
a second detector configured to detect a second signal reflected from the hand placed proximate to the display;
wherein the controller determines the location of the hand in response to the signals received from at least one of the first detector and the second detector.

9. The apparatus of claim 1 wherein the controller causes the display output to revert to the first output if a hand is not detected proximate to the display for a predetermined time.

10. An apparatus for changing a display output in a vehicle, the apparatus comprising:
a display that displays a first output;
a detector that detects a hand placed proximate to the di splay; and
a controller that is coupled to the display, the controller causing the display to display a second output in response to detecting a hand placed proximate to the display, wherein at least a portion of the second output is different from the fi rst output.

11. The apparatus of claim 10 further comprising at least one control for making a selection, the control being located proximate to the display, the vehicle further comprising vehicle systems having associated information, wherein actuation of th e control selects a vehicle system, the control further causing the display to display the information associated with the selected vehicle system.

12. The apparatus of claim 11 wherein the associated information comprises at least one of: menu options and d isplay elements.

13. The apparatus of claim 11 wherein the vehicle system comprises at least one of the following group of vehicle systems: entertainment, mobile phone, navigation, HVAC, car settings.

14. The apparatus of claim 10 further comprising an emitter that communicates with the detector.

15. An apparatus for accepting menu option selections of an entertainment system, the apparatus comprising:
a display that displays a first set of menu options and a second set of menu options, the first and second sets of menu options being related to each other;
a first knob that is positioned proximate to the display, the first knob controlling a first set of menu options on the display such that the first set of menu options appears to move as if connected to the fi rst knob; and
a second knob that substantially surrounds at least a portion of the first knob, the second knob controlling a second set of menu options on the display such that the second set of menu options appears to move as if connected to the second knob.

16. The apparatus of claim 15 wherein the apparatus operates in a vehicle.

17. The apparatus of claim 15 wherein the second set of menu options depends on the first set of menu options.

18. An apparatus for selecting functions of an entertainment system in a vehicle, the apparatus comprising:
a first knob that controls a first function of the entertainment system, at least a portion of the first knob being partially transparent so as to allow user observation of a visual indicator through the partially transparent portion of the first knob; and
a second knob that substantially surrounds at least a portion of the first knob, the second knob controlling a second function of the entertainment system.

19. The apparatus of claim 18, wherein functions of the ente rtainment system comprise at least one item from the following list: CD/DVD recordings to hard disk, hard disk: uMusic - on/off, +/-, modes: AM radio, FM radio, satellite radio, hard disk, uMusic™, iIndex™, RDS, uSearch™, browsing, play mode, tune, presets, rename song, store in favorites, switching between tuning and seeking, play songs like this function and control button options.

20. The apparatus of claim 18 wherein at least one of the first and second knobs has a plurality of detent positions.

21. The apparatus of claim 18 further comprising a display that depicts at least one set of menu options that appears to move as if connected to a corresponding one of the first and second knobs.

22. The apparatus of claim 21 wherein the first knob is configured to accept a user selection of a menu option from the at least one set of menu options

23. The apparatus of claim 21 wherein the second knob is configured to accept selection of a menu option from the at least one set of menu options.

24. The apparatus of claim 18 wherein the first knob comprises a rotary knob and the second knob comprises a rotary knob wherein the knobs are arranged concentrically.

25. The apparatus of claim 18 wherein the visual indicator is chosen from the group comprising a light emitting diode, a display, an liquid crystal display (LCD) screen, a lamp, an icon, a graphic, and a text character.

26. The apparatus of claim 18 wherein at least a portion of the second knob is at least partially transparent.

27. A dual concentric knob comprising:
a first knob configu red to reflect a signal that is received by a first detector from a first emitter; and
a second knob concentric with the first knob, the second knob at least partially surrounding the first knob, the second knob configured to reflect a signal that is rece ived by a second detector from a second emitter.

28. The dual concentric knob of claim 27 wherein the first detector is prevented from detecting an emission from the second emitter.

29. The dual concentric knob of claim 27 wherein the first emitter and the firs t detector are positioned at an offset angle relative to the second emitter and the second detector respectively.

30. The dual concentric knob of claim 27 wherein the second emitter and associated second detector are positioned on a different plane from the first emitter and associated first detector.

31. The dual concentric knob of claim 27 wherein the first knob controls a set of menu options displayed on a display.

32. The dual concentric knob of claim 27 wherein the second knob controls a set of menu options displayed on a display.

33. The dual concentric knob of claim 27 wherein at least one of the first and second knobs comprises a plurality of detent positions.

34. The dual concentric knob of claim 27 further comprising a spring that engages a depression on at least one of the first knob and the second knob.

35. The dual concentric knob of claim 34 wherein the spring has at least one raised portion that engages the depression.

36. The dual concentric knob of claim 34 wherein the spring comprises a first raised portion and a second raised portion that are positioned to engage a first and a second indentation in the first and the second knobs, respectively.

37. The dual concentric knob of claim 34 wherein the spring is configured in the shape of a ring.

38. The dual concentric knob of claim 27 wherein the first knob controls a first set of menu options and the second knob controls a second set of menu options, the second set of menu options being related to the first set of menu options.

39. A method for changing output of a display of an entertainment system, the method comprising:
displaying a first output on the display;
detecting a hand placed proximate to the display; and
changing the displayed first output to a second output in response to the detection of the hand placed proximate to the entertainment system display.

40. The method of claim 39, wherein the method is performed in a vehicle.

41. The method of claim 39 wherein the step of detecting further comprises the steps of:
emitting a signal in the direction of a user's han d;
detecting the emitted signal reflected from the user's hand, and
providing the detected signal to a controller, wherein the controller operates on the detected signal to determine if a hand is placed proximate to the display.

42. The method of claim 41 wherein the emitted signal is of a type taken from the following group: infrared, ultrasonic, optical and capacitive.

43. The method of claim 39 wherein the second output comprises at least one menu option.

44. The method of claim 39 wherein the second output co mprises an increased amount of information compared to the first output.

45. The method of claim 39 wherein the second output comprises at least one item chosen from the group comprising: a range of AM radio stations, a range of FM radio stations, a range of satellite radio stations, a range of tuning frequencies of radio stations, a range of radio station call letters, music titles, music categories, programmable pushbutton labels, volume/mute indicators, a mute icon, a progress indicator, a set of preset lab els, a current track display, disk name, track number and elapsed time for the current track.

46. The method of claim 39 wherein the first output comprises at least one item chosen from the group comprising: a title of currently-playing media, a list scroll bar and a volume scroll bar.

47. The method of claim 39 wherein at least one of the first output and the second output comprises at least one item chosen from the group of: artist, title, station, category, genre, source and mode.

48. The method of claim 39 whe rein the step of detecting further comprises detecting hand placement proximate to a control that is positioned adjacent to the display.

49. The method of claim 39 wherein the step of changing comprises changing the display output in response to detection of the hand placed proximate to the control.

50. The method of claim 39 further comprising displaying the first output after a predetermined timeframe following removal of a hand placed proximate to the display.

51. The method of claim 39 wherein the step of displa ying the first output comprises displaying a reduced amount of information content compared with the second output.

52. The method of claim 51 wherein the reduced amount of information content comprises disc name, title/track name and elapsed time.

53. The method of claim 51 wherein the reduced amount of information content includes at least one item chosen from the group comprising: a volume indicator and a progress indicator.

54. The method of claim 53 wherein at least one of the volume indicator and the progre ss indicator are semi-circular.

55. A method for changing output of a display in a vehicle, the method comprising:
displaying a first output on the display;
detecting a hand placed proximate to the display using a detector; and
changing the displayed first output to a second output in response to the detection of the hand placement proximate to the display.

56. The method of claim 55 wherein the step of detecting further comprises:
sensing a change in a signal reflected from the hand; and
processing the cha nge in the signal to determine whether the hand is placed proximate to the display.

57. The method of claim 56 wherein the step of sensing the change in the signal reflected from the hand further comprises:
transmitting a signal toward the hand; and
detecting the transmitted signal reflected from the hand.

58. A method for automatically displaying instructional information in an entertainment system, the method comprising:
detecting the presence of a hand in a pre -determined position with respect to a control; and
displaying the instructional information relating to the control in response to the detection of the presence of the hand.

59. The method of claim 58 wherein the method is performed in a vehicle.

60. The method of claim 58 further comprising the step of terminating the display of the instructional information after a predetermined timeframe.

61. The method of claim 58 wherein the step of displaying the instructional information comprises the step of showing a name identifier of the control.

62. A method for automatically displaying instructional information in a vehicle, the method comprising:
detecting the presence of a hand in a pre -determined position with respect to a control; and
displaying the instructional information relating to the control in respons e to the detection of the presence of the hand.

63. A method for associating a user's hand position with a display location comprising the steps of:
detecting a hand placed proximate to a first position;
displaying a first output in response to detecting a hand in the first position;
detecting a hand placed proximate to a second position; and
displaying a second output in response to detecting a hand in the second position,
wherein at least a portion of the second output is different from the first output.
